# EUROPEAN PATENT SPECIFICATION

(11) **EP 2 169 017 B1**
(45) Date of publication and mention of the grant of the patent: **07.12.2011**
(21) Application number: 09170422.1
(22) Date of filing: 16.09.2009
(51) Int. Cl.: C09D 11/00

(54) **Ink set and method for forming image**
Tintenset und Verfahren zur Bilderzeugung
Jeu d'encre et procédé de formation d'images

(30) Priority: 26.09.2008 JP 2008247316
(43) Date of publication of application: 31.03.2010
(73) Proprietor: Fujifilm Corporation, Minato-ku Tokyo (JP)
(72) Inventor: Wachi, Naotaka, Kanagawa (JP); Kaimoto, Hideki, Shizuoka-ken (JP)
(74) Representative: HOFFMANN EITLE

(56) References cited:
- EP-A- 1 473 334
- WO-A-2007/088794
- US-A1- 2007 176 991

## Description

### BACKGROUND OF THE INVENTION

### Field of the Invention

The present invention relates to an ink set and a method for forming an image.

### Description of the Related Art

In recent years, with the spread of use of computers, inkjet printers are widely used both in offices and at home, for printing and image drawing on paper, films, cloth and the like.
Inkjet recording methods are based on a technique of jetting liquid droplets by applying pressure using a piezoelectric element, a technique of jetting liquid droplets by generating air bubbles within ink by means of heat, a technique of using ultrasonic waves, or a technique of suctioning and jetting liquid droplets using electrostatic force. As the ink for these inkjet recording methods, aqueous inks, oil-based inks or solid (melting type) inks are used.
Among these inks, aqueous inks are relatively superior to the oil-based inks or solid (melting type) inks in view of the possibility to obtain a good compatibility among production, handlability, odor, safety and the like, and therefore, the aqueous inks constitute the mainstream of those inks for inkjet recording currently in use.

The dyes that are used in these inks for inkjet recording, are required to have characteristics such as having high solubility in solvents (ink media), being capable of high density recording, having satisfactory color hues, having excellent fastness to light, heat, air, water or chemicals, having good fixability to image receiving materials with less bleeding, having excellent preservability in ink, lacking toxicity, having high purity, and being available at low prices.
However, it is very difficult to search for a dye which satisfies the various requirements described above at a high level. Particularly, excellent color hue and fastness are contradictory to each other in many cases, such that in the case of colorants for magenta ink, it is difficult to find a material which satisfies the various requirements described above, and particularly, it is difficult to find a dye that has a good balance between good magenta color hue and fastness for withstanding an oxidative atmosphere.
Therefore, though a variety of dyes and pigments for inkjet use have already been proposed and put to practical use, a dye which satisfies all of the requirements described above has not yet been discovered at present.

In regard to conventionally well known dyes and pigments, such as those given Color Index (C.I.) numbers, it is difficult to achieve a balance between color hue and fastness that are required with respect to an ink for inkjet recording.
As a dye that enhances fastness, azo dyes derived from arylamines and 5-membered heterocyclic amines have been proposed in Japanese Patent Application Laid-Open (JP-A) No. 55-161856. However, since these dyes have color hues that are not preferable for the regions of yellow and cyan, these dyes cause a problem with respect to color reproducibility.
As a technology relevant to the above-described dyes, an ink for inkjet recording which is intended to achieve a good balance between color hue and light fastness is disclosed (see, for example, JP-A Nos. 61-36362 and 2-212566). However, the dyes that are disclosed in these publications are insufficient in solubility with respect to water, when these dyes are to be used in water-soluble inks. Furthermore, when the dyes described in these publications are used in water-soluble inks for inkjet use, a problem also occurs with respect to fastness to moisture and heat.

As means for solving these problems, an improved magenta dye and an ink using the dye have been proposed (see, for example, Japanese Patent Application National Phase Publication No. 11-504958).
It has been found that when recording is carried out on an inkjet-dedicated glossy paper for photographic image quality, and the recorded paper is put on an indoor wall or the like, the preservability of the image may become markedly poor. Furthermore, if a flow of air is blocked by taking a measure such as framing the image in a glass frame, such deterioration does not tend to occur; however, in this case, the conditions for use become restrictive.
This phenomenon is particularly conspicuous in inkjet- dedicated glossy papers for photographic image quality and is a serious problem for current inkjet recording modes, where photographic image quality is an important feature.
As means for solving the problems, a magenta dye having improved ozone resistance and an ink utilizing the dye have been proposed by the present Applicant (see, for example, JP-ANos. 2002-371079, 2002-371214 and 2007-204632).
However, when a color image is formed using the dye, the fastness of magenta in a secondary color such as red or blue, or in grey color may be lowered.

### SUMMARY OF THE INVENTION

The present invention has been made in view of the above circumstances and provide an ink set and a method for forming an inkjet image using the ink set.
A first aspect of the present invention provides:
<1> An ink set including a yellow ink, a magenta ink and a cyan ink, wherein the magenta ink and at least one of the yellow ink or the cyan ink each contains an antioxidant having a sulfur atom in the molecule thereof, and the magenta ink contains a dye represented by the following formula (M-1): 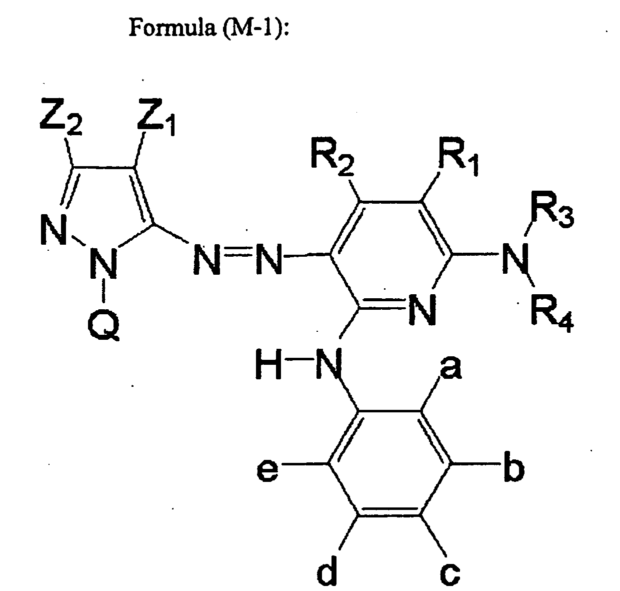 wherein, in formula (M-1), R₁ and R₂ each independently represent a hydrogen atom, a halogen atom, an aliphatic group, an aryl group, a heterocyclic group, a cyano group, a carboxyl group, a carbamoyl group, an alkoxycarbonyl group, an aryloxycarbonyl group, an acyl group, a hydroxy group, an alkoxy group, an aryloxy group, a silyloxy group, an acyloxy group, a carbamoyloxy group, a heterocyclic oxy group, an alkoxycarbonyloxy group, an aryloxycarbonyloxy group, an alkylamino group, an arylamino group, a heterocyclic amino group, an acylamino group, a ureido group, a sulfamoylamino group, an alkoxycarbonylamino group, an aryloxycarbonylamino group, an alkyl- or arylsulfonylamino group, an aryloxycarbonylamino group, a nitro group, an alkyl- or arylthio group, an alkyl- or arylsulfonyl group, an alkyl- or arylsulfmyl group, a sulfamoyl group, a sulfo group, or a heterocyclic thio group; R₃ and R₄ each independently represent a hydrogen atom, an aliphatic group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and R₁ and R₂, or R₃ and R₄ may be linked to form a 5- or 6-membered ring; a and e each independently represent an alkyl group, an alkoxy group or a halogen atom, but if a and e are both alkyl groups, the total number of carbon atoms constituting the alkyl groups is 3 or more, and these alkyl groups may be further substituted; b, c and d each independently have the same meanings as those of R₁ and R₂, and a and b, or e and d may form a condensed ring with each other; Z₁ represents an electron withdrawing group having a Hammett substituent constant σp value of 0.20 or more; Z₂ represents a hydrogen atom, an aliphatic group, an aryl group or a heterocyclic group; and Q represents a hydrogen atom, an aliphatic group, an aryl group, or a heterocyclic group, provided that the formula (M-1) has at least one ionic hydrophilic group.

### DETAILED DESCRIPTION OF THE INVENTION

Hereinafter, specific exemplary embodiments of the present invention will be described in detail.
According to the second aspect to the ninth aspect of the present invention, there are provided the following ink sets and a method for forming an inkjet image using the ink set.
<2> The ink set according to <1>, wherein both the yellow ink and the cyan ink contain an antioxidant having a sulfur atom in the molecule thereof.
<3> The ink set according to <1> or <2>, further including a black ink.
<4> The ink set according to any one of <1> to <3>, wherein the antioxidant having a sulfur atom in the molecule is a compound having a thioether structure or a sulfoxide structure.
<5> The ink set according to any one of <1> to <4>, wherein the antioxidant is a compound represented by the following formula (1a):

   R₁-(S-R₃)ₘ-S-R₂ Formula (1a)

   wherein, in formula (1a), R₁ and R₂ each independently represent a hydrogen atom, a substituted or unsubstituted alkyl group, a substituted or unsubstituted aryl group, or a group containing a substituted or unsubstituted alkyl or aryl group, and R₁ and R₂ may be identical or different, and may be linked to form a ring, provided that at least one of R₁ or R₂ is an alkyl group substituted with a hydrophilic group or a group having a basic nitrogen atom, or a group containing such an alkyl group; R₃ is an alkylene group which may be substituted, and optionally represents an alkylene group having an oxygen atom; m represents an integer from 0 to 10, and when m is 1 or more, the at least one sulfur atom linked to R₃ may be a sulfoxide group or a sulfonyl group; and R₁ and R₂ may each be a residue of a polymer.
<6> The ink set according to any one of <1> to <4>, wherein the antioxidant is a compound having a sulfoxide structure represented by the following formula (Ib): 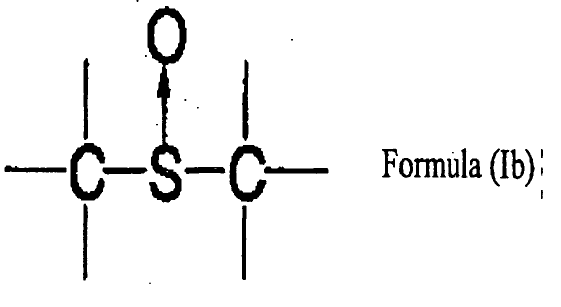
<7> The ink set according to any one of <1> to <6>, wherein the antioxidant is a compound represented by the following formula (2): 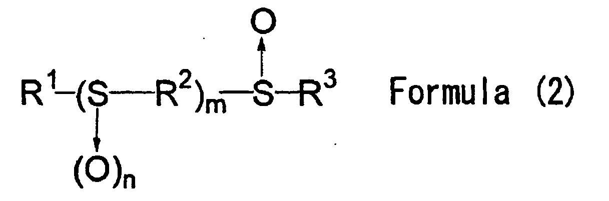 wherein, in formula (2), R¹ and R³ each independently represent a substituted or unsubstituted alkyl group, a substituted or unsubstituted aryl group, a substituted or unsubstituted heterocyclic group, or a polymer residue including at least one of these groups; R¹ and R³ may be the same as or different from each other; R¹ and R³ may combine with each other to form a ring; R² represents a substituted or unsubstituted bi- to hexa-valent linking group; R¹ and R², or R² and R³ may combine with each other to form a ring; m is 0 or an integer of 1 or greater; n is 0 or 1; at least one of R¹, R², or R³ represents an alkyl group, an aryl group, a heterocyclic group, or a polymer residue each of which is substituted by a hydrophilic group selected from the group consisting of a substituted or unsubstituted amino group, a substituted or unsubstituted carbamoyl group, a substituted or unsubstituted sulfamoyl group, a substituted or unsubstituted ammonium, a hydroxyl group, a sulfonic acid, a carboxylic acid, a phosphoric acid, an ethyleneoxy group, and a substituted or unsubstituted nitrogen-containing heterocycle.
<8> The ink set according to any one of <1> to <7>, wherein the magenta ink contains a betaine-based compound represented by the following formula (B): 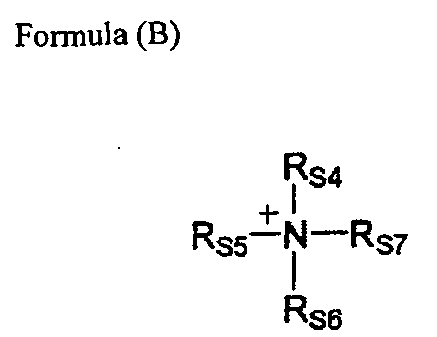 wherein, in formula (B), R_{S4}, R_{S5} and R_{S6} each independently represent an alkyl group, an aryl group or a heterocyclic group, and may be linked to each other to form a cyclic structure; and R_{S7} represents an alkyl group containing a carboxyl group, or an alkyl group containing a sulfo group.
<9> A method for forming an inkjet image, including forming an image using the ink set according to any one of <1> to <8> on an inkjet recording medium having an ink receiving layer containing inorganic fine particles disposed on a support.

### Effects of the Invention

According to the invention, an ink set capable of forming an image having excellent ozone resistance, and a method for forming an inkjet image using the ink set, may be provided.

### [Ink set]

The ink set of the invention is constituted to include at least a yellow ink, a magenta ink and a cyan ink, and the magenta ink and at least one of the yellow ink or the cyan ink each contain an antioxidant having a sulfur atom in the molecule, while the magenta ink contains a dye represented by the following formula (M-1). It is preferable that both the yellow ink and the cyan ink contain the antioxidant having a sulfur atom in the molecule thereof, from the viewpoint of improving ozone resistance.
The dye will be described below.

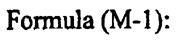

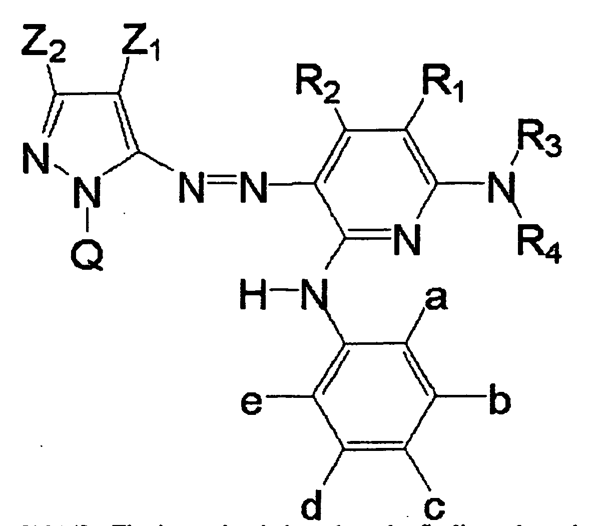

The invention is based on the findings that when a magenta ink and at least one of a yellow ink or a cyan ink are each incorporated with an antioxidant and are used as an ink set, an image (particularly, color image) having excellent ozone resistance is obtained.
Specifically, the present inventors have found that an image obtained from spotted ink droplets of a first color does not undergo any noticeable deterioration of ozone resistance, whereas an image obtained from spotted ink droplets of a second or subsequently applied color undergoes conspicuous deterioration of ozone resistance. In particular, deterioration was conspicuous in a deposit image obtained by a combination of a magenta ink and a yellow ink, or a combination of a magenta ink and a cyan ink, or a deposit gray-scale image obtained by a combination of a magenta ink, a yellow ink and a cyan ink. As a result, it was found that ozone resistance is conspicuously improved by adding an antioxidant having a sulfur atom in the molecule thereof, such as a sulfoxide-based compound or a thioether-based compound, into the magenta ink and another ink (for example, the yellow ink and/or cyan ink) that is used in combination with the magenta ink, and thus the invention has been completed.
In general, it is presumed that the antioxidant contained in the inkjet recording medium or in the ink continues to exist in the vicinity of dyes obtained by spotted ink droplets of a first color in the ink receiving layer; however, under the action of the solvent or water in the ink after spotting ink droplets of a second or subsequently applied color, as the antioxidant migrates from the vicinity of the dyes to the support, the function of preventing oxidation of dyes is gradually impaired, and therefore, deterioration of ozone resistance proceeds conspicuously in the case of multiple colors after the second color. Thus, it is assumed that when an antioxidant is added in plural inks, and the antioxidant is widespread, conspicuous effects of the invention may be obtained.
The ink set of the invention more preferably has a black ink, and other inks may be used according to necessity.
Next, ink constituting components such as magenta, yellow, cyan or black inks that are used in the invention will be described.

### (Antioxidant)

In regard to the ink set of the invention, the magenta ink and at least one of the yellow ink or the cyan ink each contain an antioxidant having a sulfur atom in the molecule thereof.
The antioxidant that may be used in the ink set of the invention is not particularly limited as long as it has a sulfur atom in the molecule thereof. Specific examples of the antioxidant having a sulfur atom in the molecule include, for example, the compounds described in paragraphs [0175] to [0214] of JP-A No. 2004-299373. Among these compounds, a compound having a thioether structure and a compound having a sulfoxide structure are preferred.

### - Compound having thioether structure (thioether-based compound) -

The compound having a thioether structure according to the invention is not particularly limited if the compound contains one or more thioether groups in the molecule, and may be a low molecular weight compound or may be a high molecular weight compound. However, it is preferable that the compound be water-soluble, so as to maintain a uniform state when added to the ink.
The thioether-based compound preferably has 2 or more carbon atoms, and more preferably has 4 or more carbon atoms.
The thioether compound preferably further contains an atoms containing a lone pair of electrons (for example, an oxygen atom, a sulfur atom, a nitrogen atom or a phosphorus atom), in addition to a thioether group, carbon atoms and hydrogen atoms.
Examples of the thioether-based compound include compounds represented by the following formula (1a).

R)-(S-R₃)ₘ-S-R₂ Formula (1a)

In the formula (1a), R₁ and R₂ each independently represent a hydrogen atom, a substituted or unsubstituted alkyl group, a substituted or unsubstituted aryl group, or a group containing a substituted or unsubstituted alkyl or aryl group, and R₁ and R₂ may be identical or different, and may be linked to form a ring. However, at least one of R₁ or R₂ is an alkyl group substituted with a hydrophilic group such as a hydroxyl group, a sulfo group, a carboxyl group or a (poly)ethyleneoxy group, or with a group having a basic nitrogen atom such as an amino group, an amide group, an ammonium group, a nitrogen-containing heterocyclic group, an aminocarbonyl group or an aminosulfonyl group; or a group containing such an alkyl group (for example, this substituted alkyl group may be further linked to a sulfur atom of the thioether via a divalent linking group such as a carbamoyl group, a carbonyl group or a carbonyloxy group). R₃ is an alkylene group which may be substituted, and optionally represents an alkylene group having an oxygen atom. m represents an integer from 0 to 10, and when m is 1 or more, the at least one sulfur atom linked to R₃ may be a sulfoxide group or a sulfonyl group. Furthermore, R₁ and R₂ may each be a residue of a polymer.

A preferred compound of formula (1a) is a compound in which at least one of R₁ or R₂ has an alkyl group substituted with a hydroxyl group, a carboxyl group, an amino group, or an ammonium group. The amino group of the alkyl group substituted with an amino group includes an amino group, a monoalkyl (preferably, an alkyl group having 1 to 5 carbon atoms)-substituted amino group and a dialkyl (preferably, an alkyl group having 1 to 5 carbon atoms)-substituted amino group, and may also be a nitrogen-containing heterocyclic group. Among these compounds, a compound in which at least one of R₁ or R₂ is a hydroxyl group or a carboxyl group is particularly preferred.
Hereinafter, specific examples of the compound of formula (1a) will be mentioned, but the invention is not intended to be limited to these.

A-1) HOCH₂CH₂SCH₂CH₂SCH₂CH₂OH

A-2) HOCH₂CH₂SCH₂CH₂OH

A-3) CH₃SCH₂CH₂OH

A-4) CH₃CH₂SCH₂CH₂OH

A-5) C₄H₉SCH₂CH₂OH.

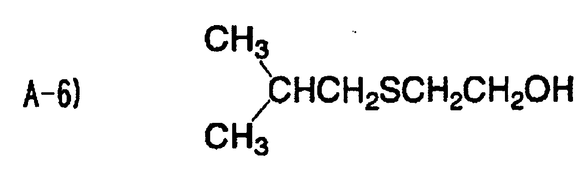

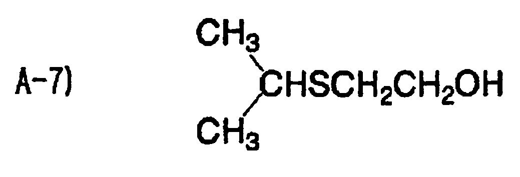

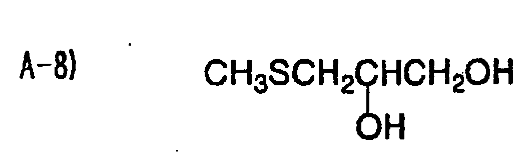

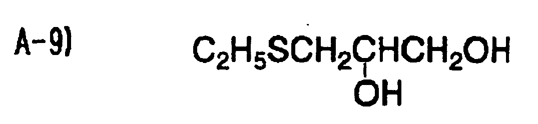

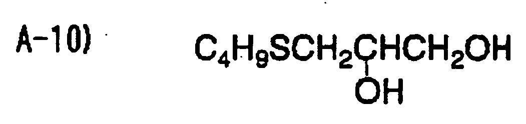

A-11) HOCH₂CH₂CH₂SCH₂CH₂CH₂OH

A-12) HOCH₂CH₂SCH₂CH₂CH₂SCH₂CH₂OH

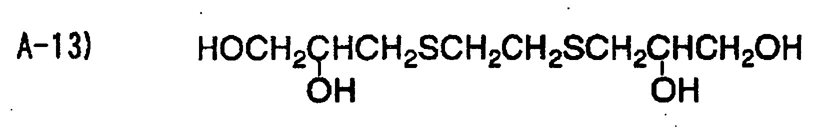

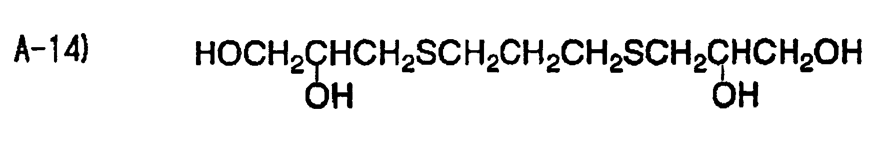

A-15) C₂H₅SCH₂CH₂SCH₂CH₂OH

A-16) HOOCCH₂CH₂SCH₂CH₂COH

A-17) HOOCCH₂SCH₂COOH

A-18) CH₃SCH₂COOH

A-19) C₂H₅SCH₂COOH

A-20) C₄H₉SCH₂COOH

A-21) C₂H₅SCH₂CH₂COOH

A-22) C₄H₉SCH₂CH₂COOH

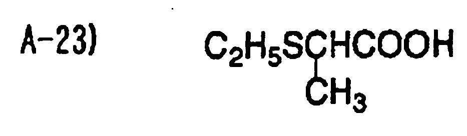

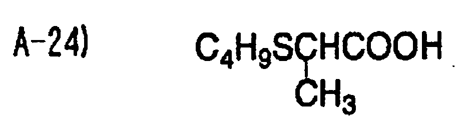

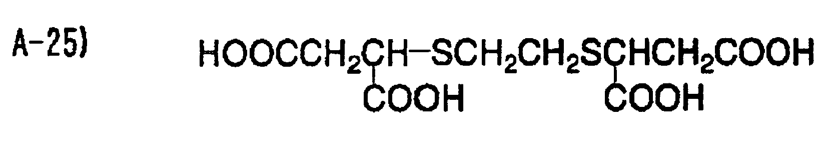

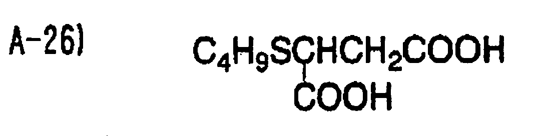

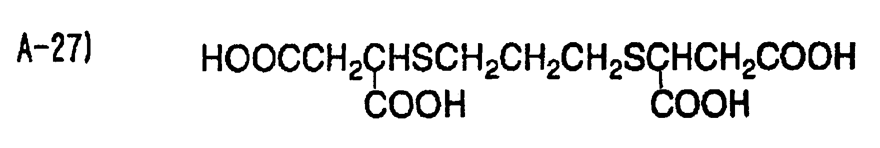

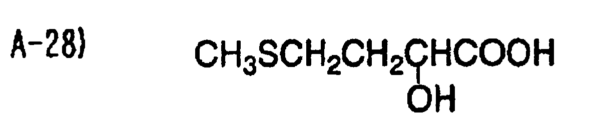

A-29) HOCH₂CH₂SCH₂CH₂OCH₂CH₂SCH₂CH₂OH

A-30) HOCH₂CH₂SCH₂CH₂OCH₂CH₂OCH₂CH₂SCH₂CH₂OH

A-31) HOCH₂CH₂OCH₂CH₂SCH₂CH₂SCH₂CH₂OCH₂CH₂OH

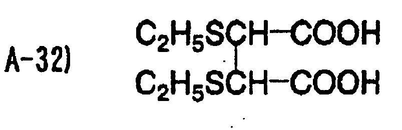

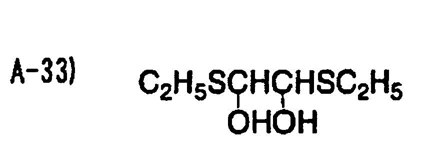

A-34) C₄H₉SCH₂CH₂CH₂SO₃Na

A-35) C₆H₁₃SCH₂CH₂SO₃Na

A-36) NaO₃SCH₂CH₂CH₂SCH₂CH₂SCH₂CH₂CH₂SO₂Na

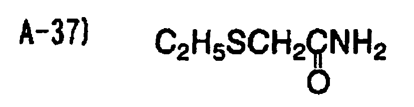

A-38) C₂H₅SCH₂CH₂N(C₂H₅)₂

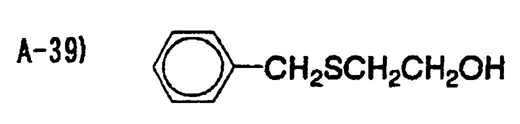

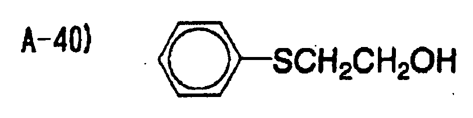

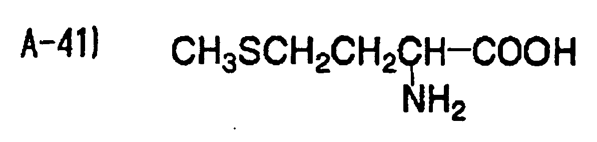

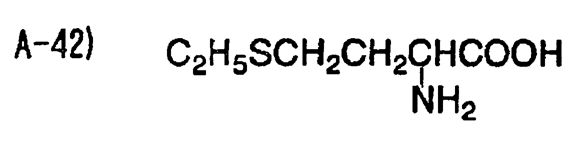

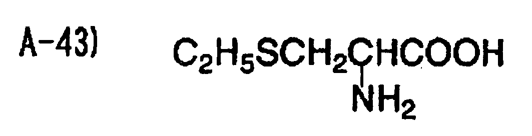

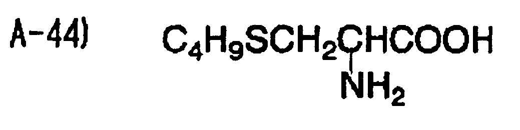

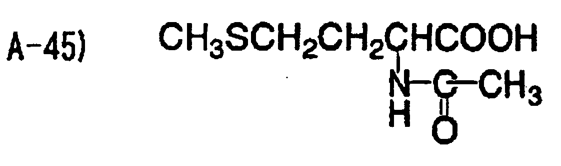

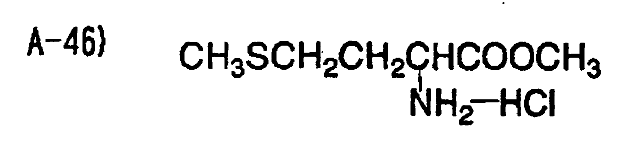

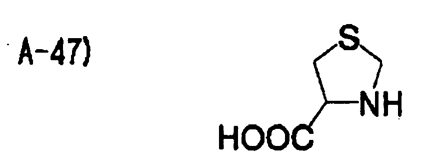

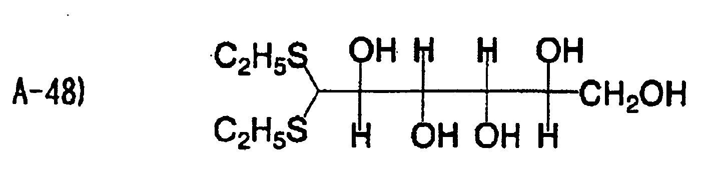

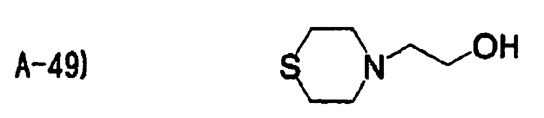

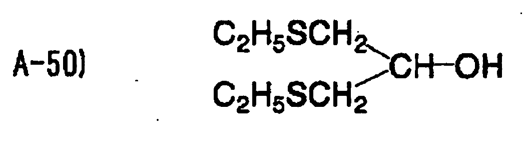

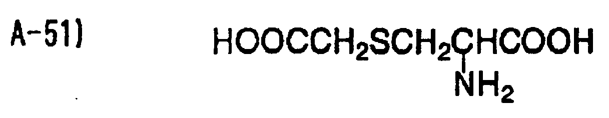

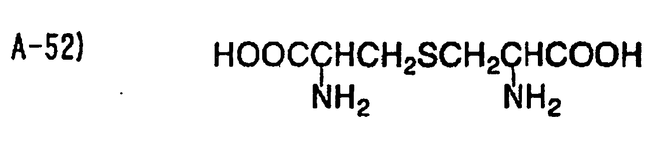

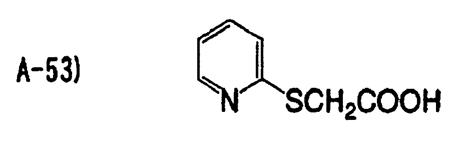

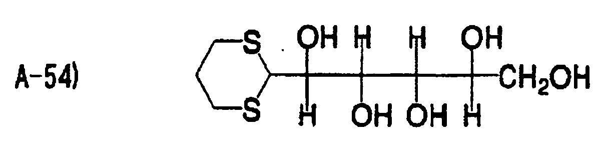

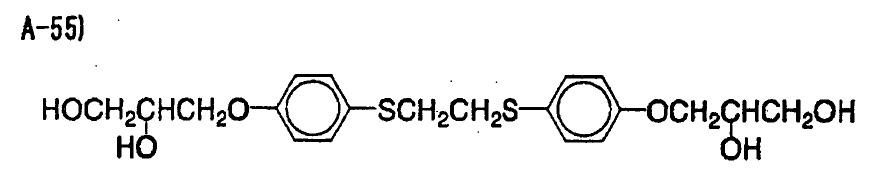

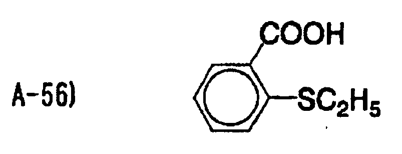

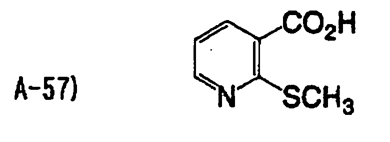

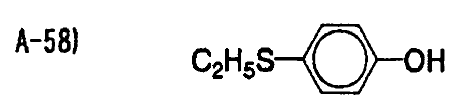

### - Compound having sulfoxide structure (sulfoxide-based compound) -

The compound having sulfoxide structure (sulfoxide-based compound) according to the invention is not particularly limited, but preferably has one or more structure represented by the following formula (Ib) in the molecule thereof.

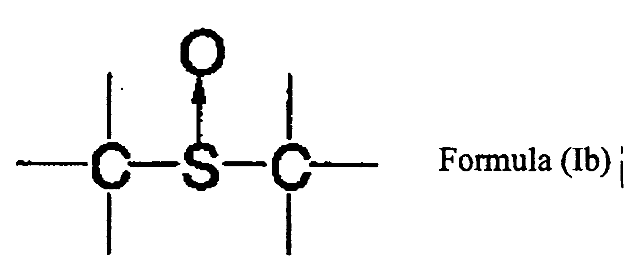

The sulfoxide-based compound having a structure represented by the formula (Ib) may be substituted by a hydrophilic group. Examples of the hydrophilic group include substituted or unsubstituted amino groups, substituted or unsubstituted carbamoyl groups, substituted or unsubstituted sulfamoyl groups, substituted or unsubstituted ammonium, hydroxyl group, sulfonic acid, carboxylic acid, phosphoric acid, ethyleneoxy acid, and substituted or unsubstituted nitrogen-containing heterocycles.

Moreover, the sulfoxide-based compound is preferably a compound represented by the following formula (2).

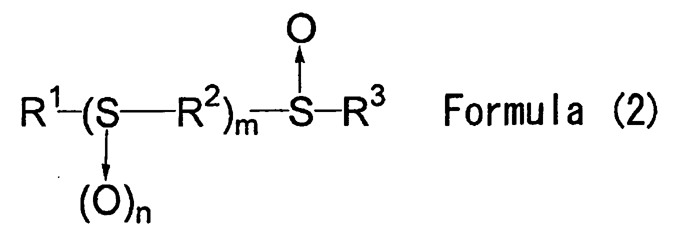

In formula (2), R¹ and R³ each independently represent a substituted or unsubstituted alkyl group, a substituted or unsubstituted aryl group, a substituted or unsubstituted heterocyclic group, or a polymer residue including at least one of these groups. R¹ and R³ may be the same as or different from each other. R¹ and R³ may combine with each other to form a ring. R² represents a substituted or unsubstituted bi- to hexa-valent linking group. R¹ and R², or R² and R³ may combine with each other to form a ring. m is 0 or an integer of 1 or greater. n is 0 or 1. At least one of R¹, R², or R³ represents an alkyl group, an aryl group, a heterocyclic group, or a polymer residue each of which is substituted by a hydrophilic group selected from a substituted or unsubstituted amino group, a substituted or unsubstituted carbamoyl group, a substituted or unsubstituted sulfamoyl group, a substituted or unsubstituted ammonium, a hydroxyl group, a sulfonic acid, a carboxylic acid, a phosphoric acid, an ethyleneoxy group, and a substituted or unsubstituted nitrogen-containing heterocycle.

The unsubstituted alkyl group represented by R¹ or R³ in the formula (2) may have a straight-chain, branched, or cyclic structure, and may contain an unsaturated bond. For example, alkyl groups having 1 to 22 carbon atoms are preferable. Specifically, the alkyl group is preferably a methyl group, an ethyl group, an allyl group, a n-butyl group, a n-hexyl group, a n-octyl group, a benzyl group, an iso-propyl group, an iso-butyl group, a sec-butyl group, a cyclohexyl group, or a 2-ethylhexyl group, more preferably an alkyl group having 1 to 10 carbon atoms, and particularly preferably a methyl group, an ethyl group, an allyl group, a n-propyl group, an iso-butyl group, a cyclohexyl group, or a 2-ethylhexyl group.

The unsubstituted aryl group represented by R¹ or R³ is preferably, for example, an aryl group having 6 to 22 carbon atoms. Specific examples thereof include a phenyl group, a 1-naphthyl group, and a 2-naphthyl group, and a phenyl group is particularly preferable.

Examples of the unsubstituted heterocyclic group represented by R¹ or R³ include a thienyl group, a thiazolyl group, an oxazolyl group, a pyridyl group, a pyrazyl group, a thiadiazoyl group, a triazoyl group, a morphoryl group, a piperazyl group, a pyrimidyl group, a triazyl group, an indolyl group, a benzothiazoyl group, and a benzoxazoyl group; among others, a thiazolyl group, an oxazolyl group, a pyridyl group, a thiadiazoyl group, a triazoyl group, a morphoryl group, a pyrimidyl group, a triazyl group, a benzothiazoyl group, and a benzoxazoyl group are particularly preferred.

When R¹ or R³ represents a polymer residue composed of groups selected from substituted or unsubstituted alkyl groups, aryl groups, and heterocyclic residues, an example of the polymer residue is a polymer having any of the following units.

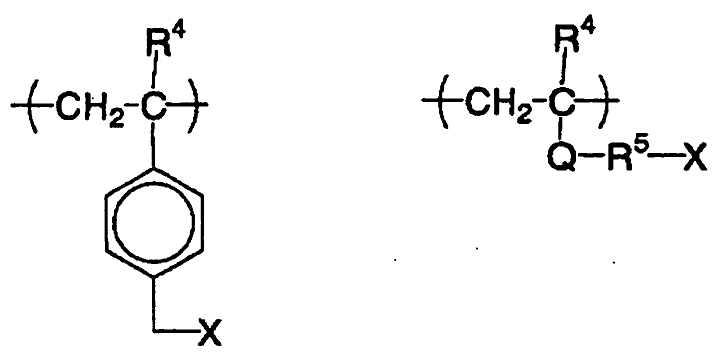

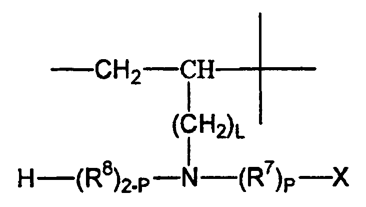

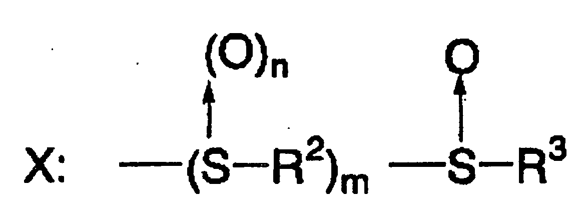

wherein R⁴ represents a hydrogen atom, or an alkyl group having 1 to 4 carbon atoms; R⁵ represents an alkylene group; Q represents a linking group; R⁷ and R⁸ each independently represent an alkylene group; L represents 1 or 2; P represents 1 or 2; R², R³, m, and n have the same definitions as R², R³, m, and n in the formula (2), respectively.

An example of the linking group represented by Q in the above unit is any of the following linking groups:

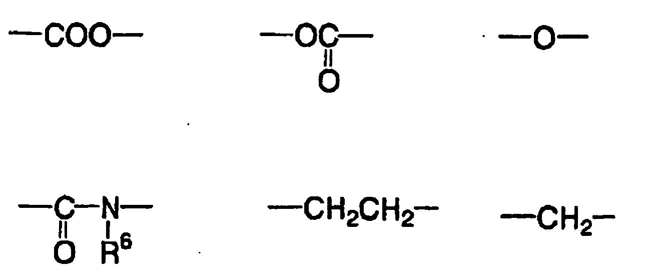

wherein R⁶ represents a hydrogen atom, an alkyl group, or an aryl group.

When R¹ or R³ represents a substituted alkyl, aryl, or heterocyclic group, examples of the substituent(s) include substituted or unsubstituted amino groups (e.g. amino groups having 30 or less carbon atoms, an amino group, alkylamino groups, dialkylamino groups, arylamino groups, and acylamino groups); substituted or unsubstituted carbamoyl groups (e.g. carbamoyl groups having 30 or less carbon atoms, a carbamoyl group, a methylcarbamoyl group, a dimethylcarbamoyl group, a morpholinocarbamoyl group, and a piperidinocarbamoyl group); substituted or unsubstituted ammoniums (e.g. ammoniums having 30 or less carbon atoms, ammonium, trimethylammonium, triethylammonium, dimethylbenzylammonium, and hydroxyethyldimethylammonium); substituted or unsubstituted sulfamoyl groups (e.g. sulfamoyl groups having 30 or less carbon atoms, a sulfamoyl group, a methylsulfamoyl group, a dimethylsulfamoyl group, a morpholinosulfamoyl group, and a piperidinosulfamoyl group); substituted or unsubstituted nitrogen-containing heterocyc groups (e.g. a pyridyl group, a pyrimidyl group, a morpholino group, a pyrolidino group, a piperidino group, and a piperazyl group); hydrophilic groups represented by a hydroxyl group, a sulfonic acid, a carboxylic acid, a phosphoric acid, an ethyleneoxy group and the like; a cyano group; halogen atoms (e.g. a fluorine atom, a chlorine atom, and a bromine atom); substituted or unsubstituted alkoxycarbonyl groups (e.g. alkoxycarbonyl groups having 30 or less carbon atoms, a methoxycarbonyl group, an ethoxycarbonyl group, a dimethylaminoethoxyethoxycarbonyl group, a diethylaminoethoxycarbonyl group, and a hydroxyethoxycarbonyl group); substituted or unsubstituted aryloxycarbonyl groups (e.g. aryloxycarbonyl groups having 30 or less carbon atoms, and a phenoxycarbonyl group); substituted or unsubstituted alkoxy groups (e.g. alkoxy groups having 30 or less carbon atoms, a methoxy group, an ethoxy group, a phenoxyethoxy group, a buthoxyethoxy group, and a hydroxyethoxy group); substituted or unsubstituted aryloxy groups (e.g. aryloxy groups having 30 or less carbon atoms, a phenoxy group); substituted or unsubstituted acyloxy groups (e.g. acyloxy groups having 30 or less carbon atoms, an acetyloxy group, and a propionyloxy group); and substituted or unsubstituted acyl groups (e.g. acyl groups having 30 or less carbon atoms, an acetyl group, and a propionyl group).
R¹ and R³ may be the same as or different from each other, and may combine with each other to form a ring.

R² represents a substituted or unsubstituted divalent to hexavalent linking group. R¹ and R², or R² or R³ may combine with each other to form a ring. Examples of the sulfur-containing heterocycle formed by such a bonding include a thienyl group, a thiazoyl group, a thiazolidyl group, a dithiolan-2-yl group, a trithian-2-yl group, and a dithian-2-yl group.

Examples of the divalent to hexavalent linking group represented by R² include those containing carbon, nitrogen, oxygen, or phosphor; and a specific examples thereof include the following linking groups.

-CH₂CH₂-

-CH₂-CH₂CH₂-

-CH₂-CH₂-O-CH₂-CH₂

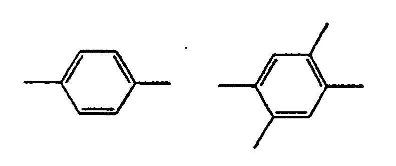

-HC=CH-

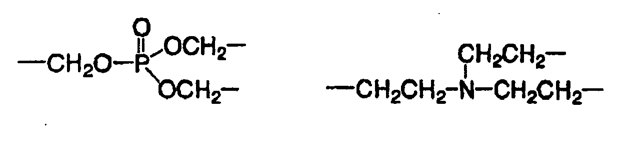

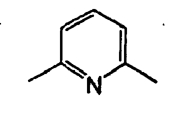

These linking groups may contain a hetero bond such as an ether bond, an ester bond, an amino bond, an amide bond, or a urethane bond, and may have a substituent. A polymer composed of a repetition of linking groups selected from the above may also be used, in which the respective linking groups may be the same as or different from each other.

At least one of R¹, R², or R³ represents an alkyl group, an aryl group, a heterocyclic group, or a polymer residue each of which is substituted by a hydrophilic group represented by a substituted or unsubstituted amino group, a substituted or unsubstituted carbamoyl group, a substituted or unsubstituted sulfamoyl group, a substituted or unsubstituted ammonium, a hydroxyl group, a sulfonic acid, a carboxylic acid, a phosphoric acid, an ethyleneoxy group, or a substituted or unsubstituted nitrogen-containing heterocycle. The hydrophilic group may be selected from the substituents mentioned in the description of R¹ and R³.

Since the preparation of the inkjet recording medium of the invention involves practically aqueous coating, the sulfoxide-based compound according to the invention is preferably water-soluble.
Such a sulfoxide-based compound is a Lewis base, which has higher solubility in water than a thioether compound. Therefore, the sulfoxide- based compound can be added in a larger amount than a thioether compound.

In the ink according to the invention, the sulfoxide-based compound, which generally has a higher oxidation potential than conventional sulfur-containing compounds (thioethers, thioureas), can achieve higher ozone resistance and higher light resistance when combined with a dye having a high oxidation potential that is advantageous in improvement of ozone resistance and light resistance.

The sulfoxide-based compound according to the invention may be used solely, or in combination of two or more kinds thereof.

Specific examples (exemplary compounds A-1 to A-75) of the sulfoxide-based compound will be shown below, but the invention is not limited thereto.

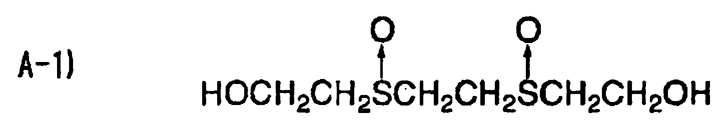

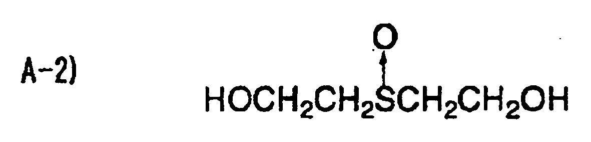

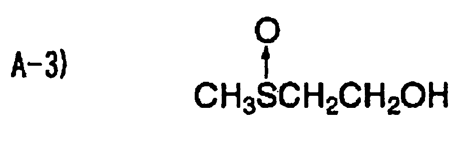

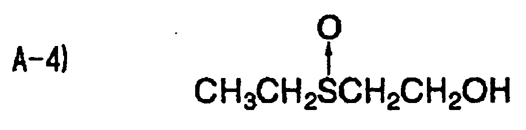

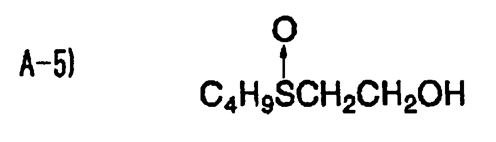

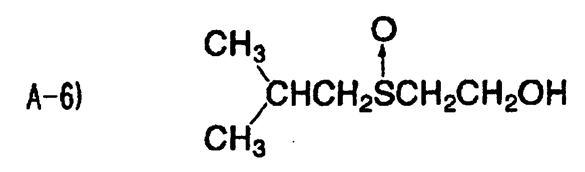

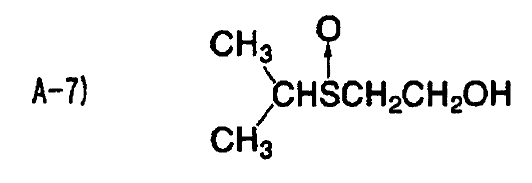

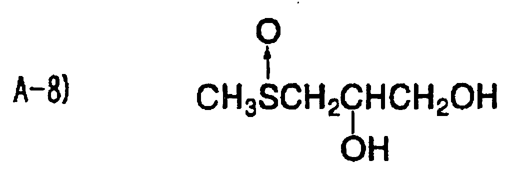

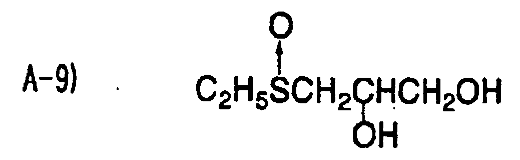

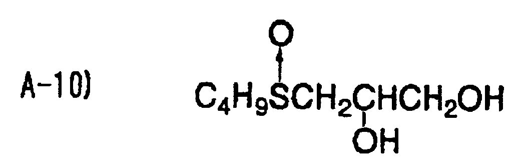

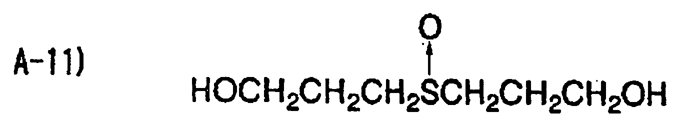

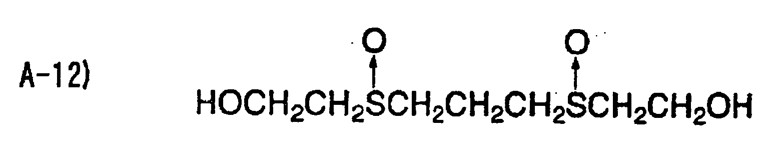

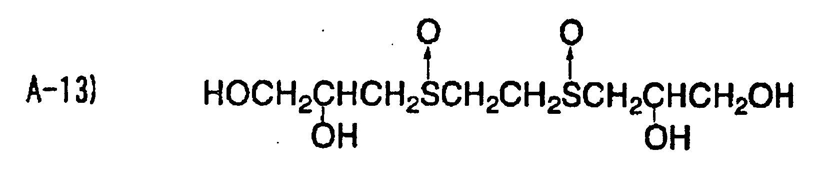

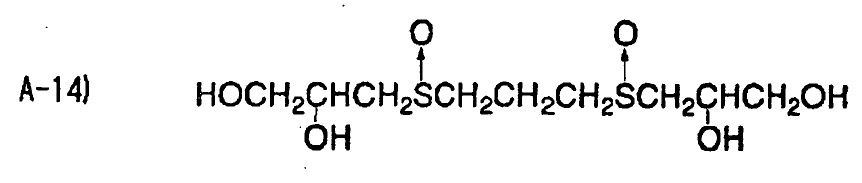

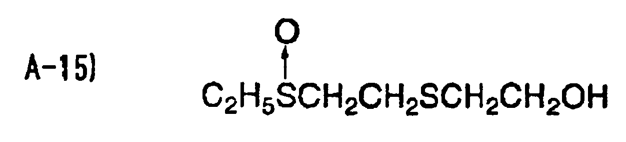

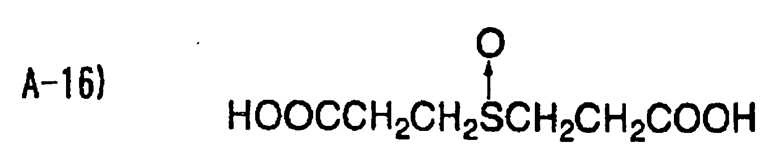

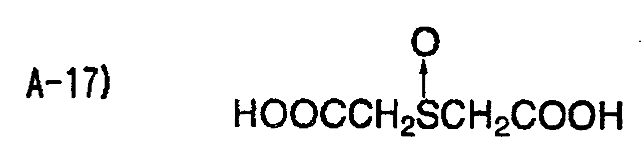

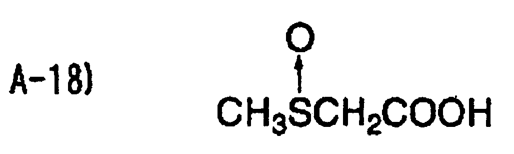

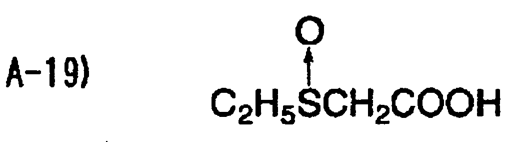

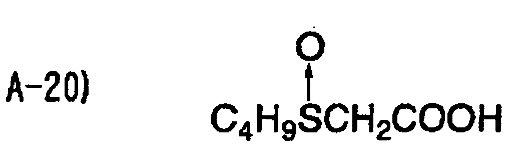

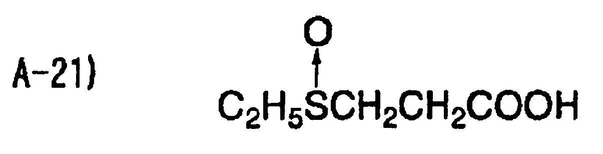

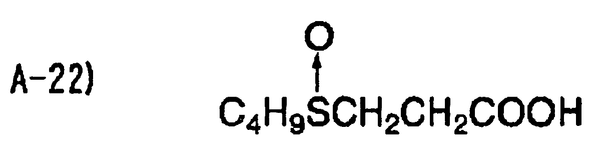

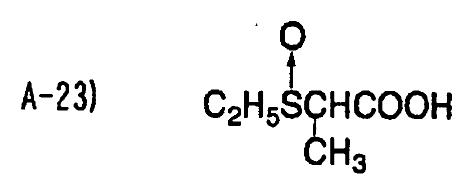

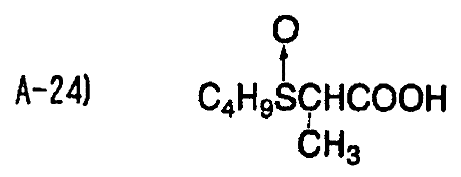

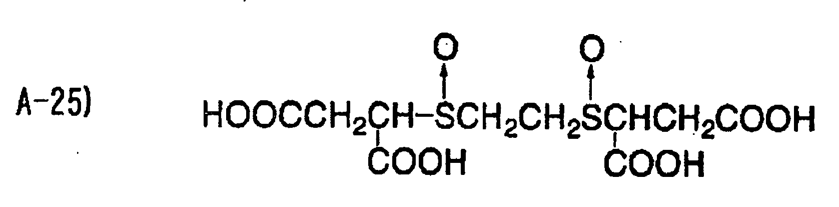

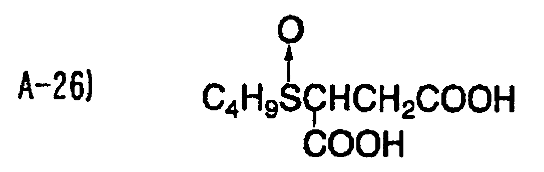

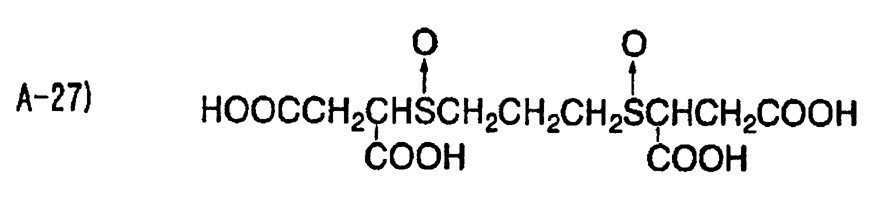

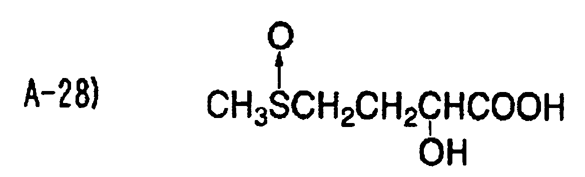

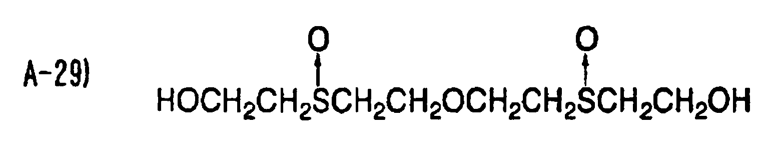

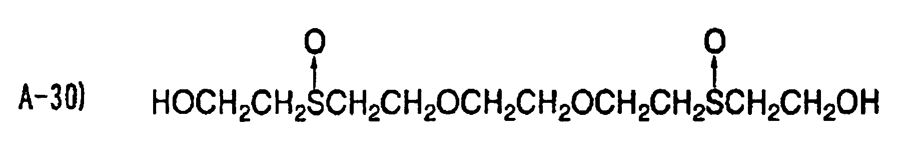

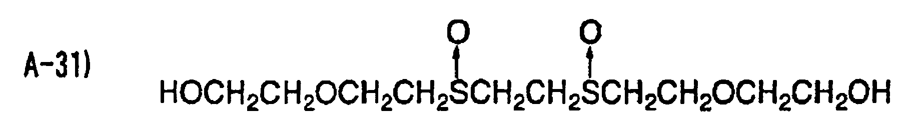

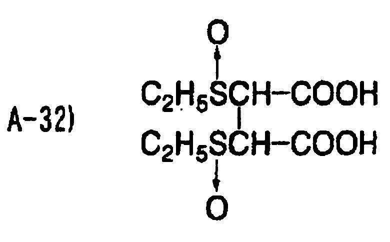

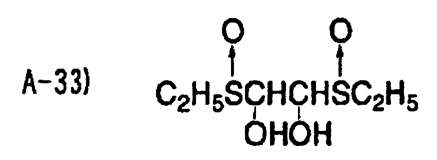

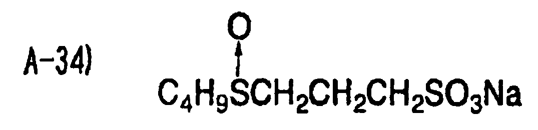

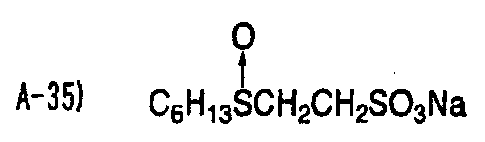

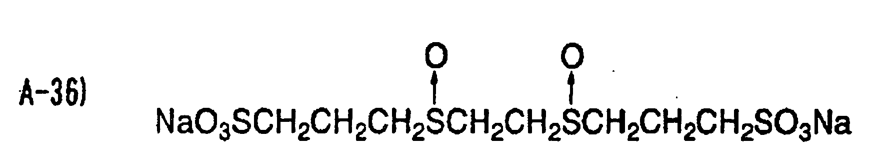

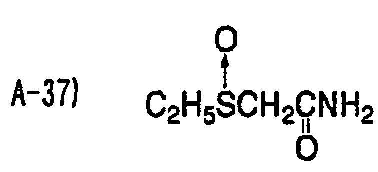

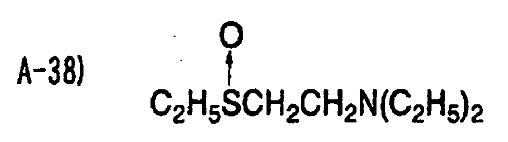

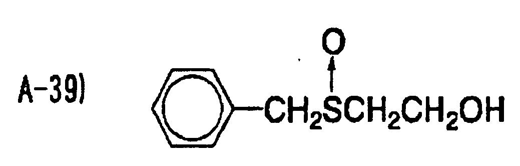

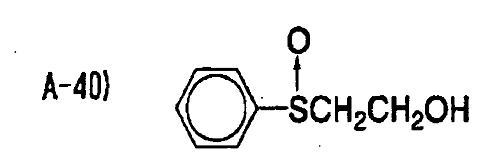

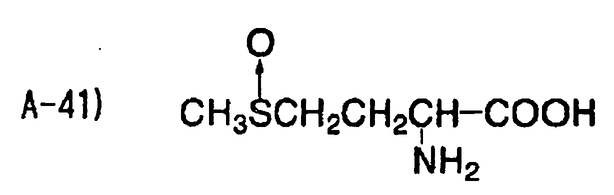

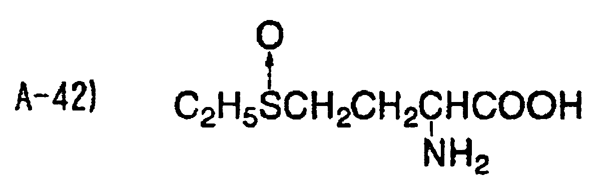

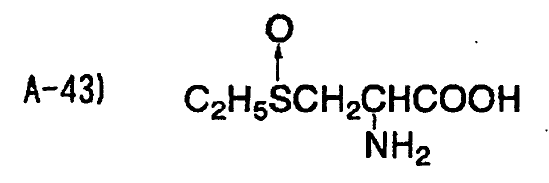

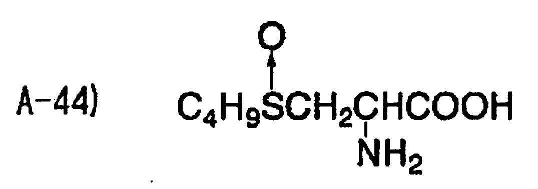

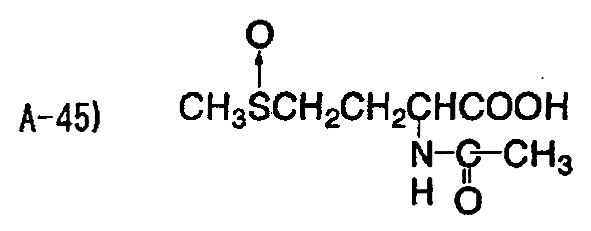

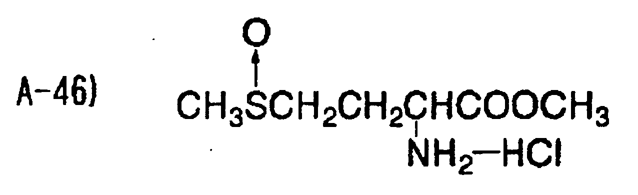

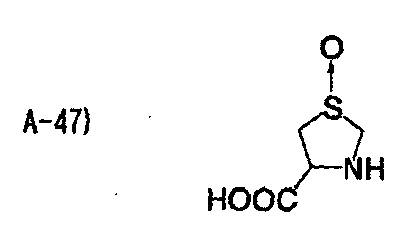

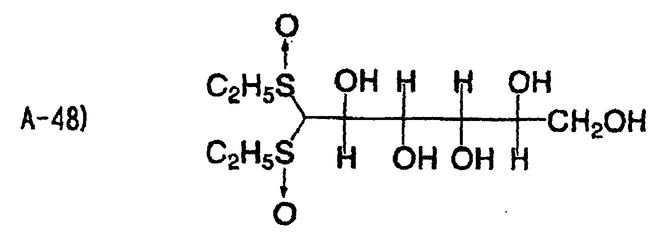

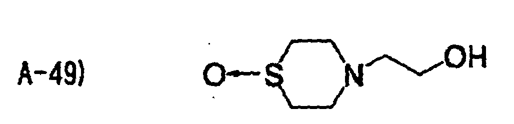

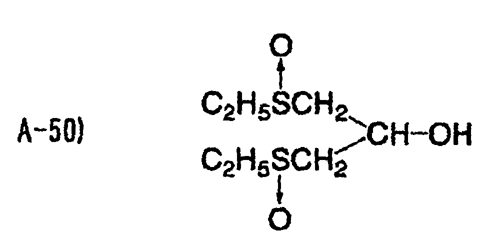

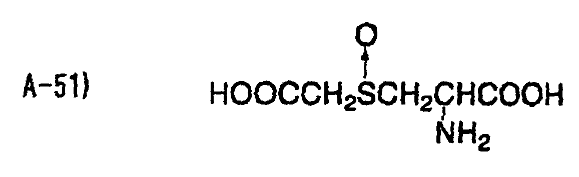

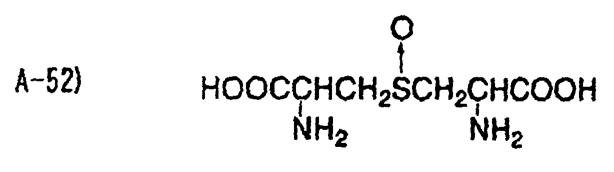

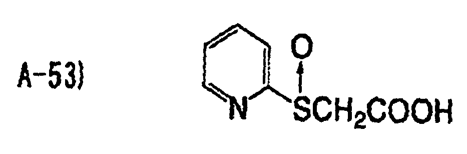

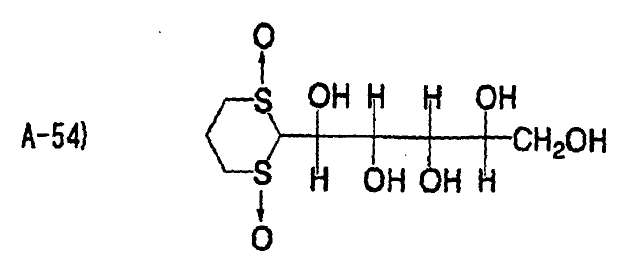

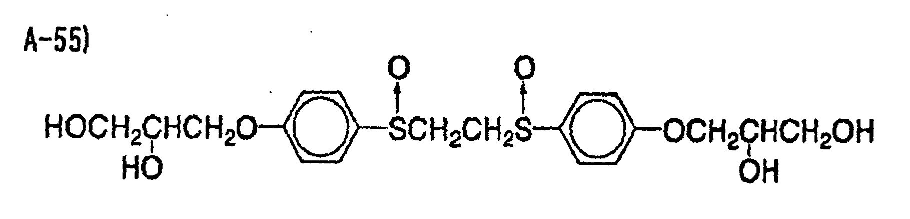

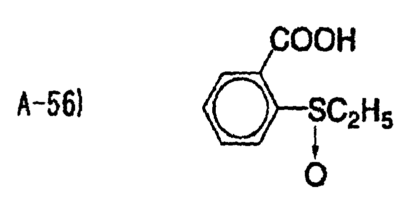

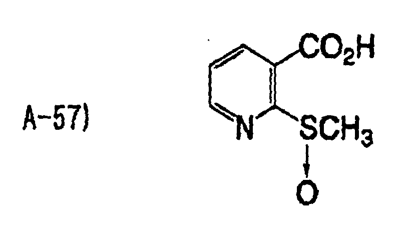

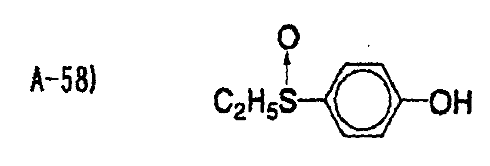

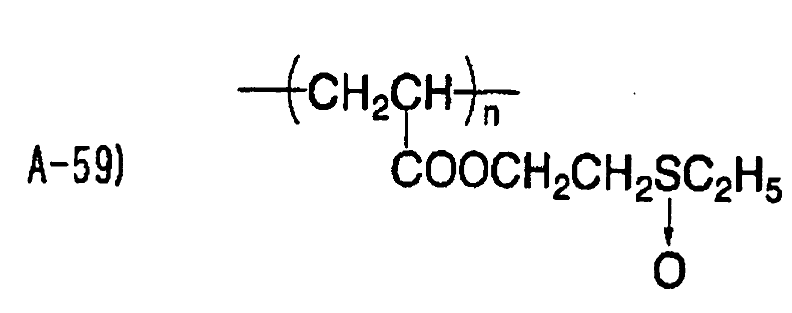

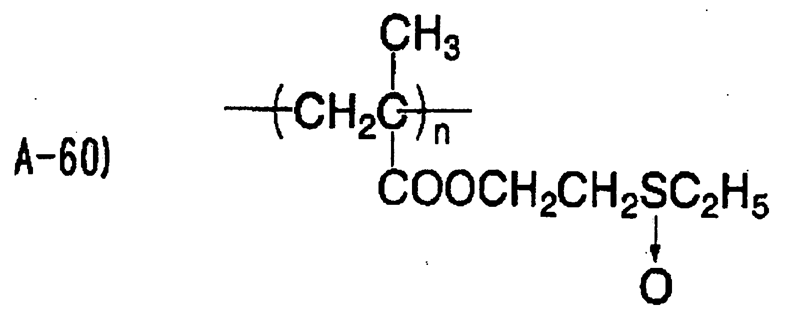

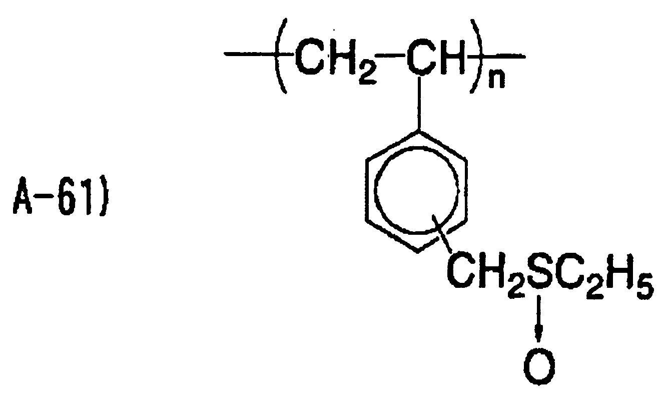

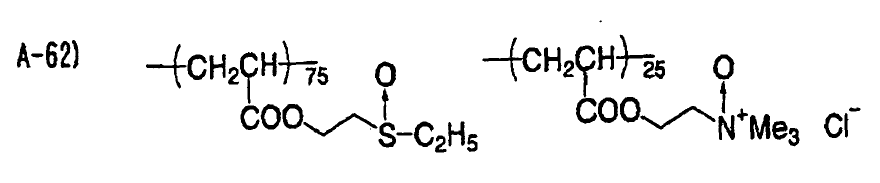

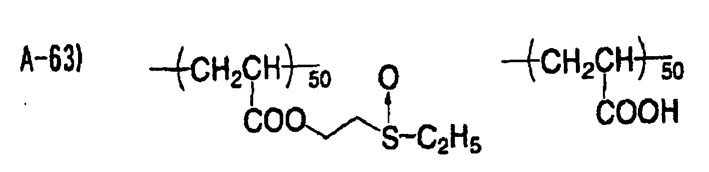

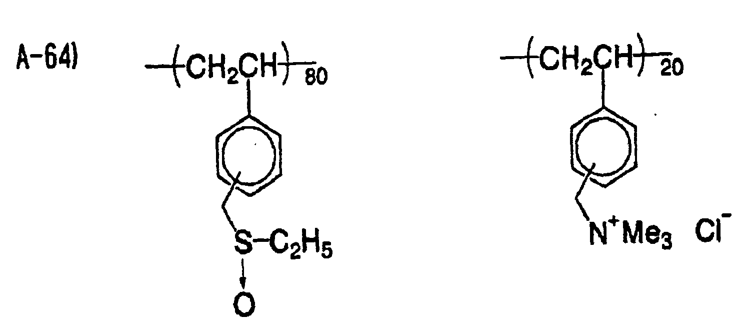

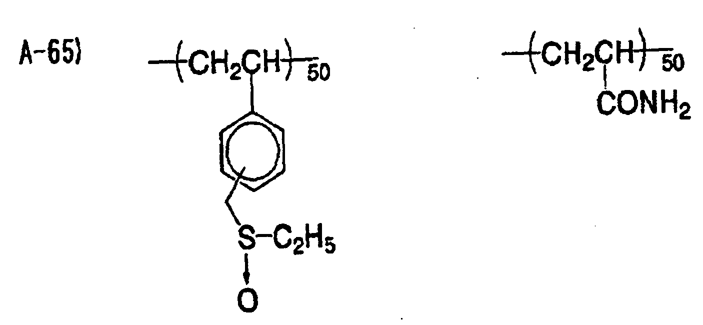

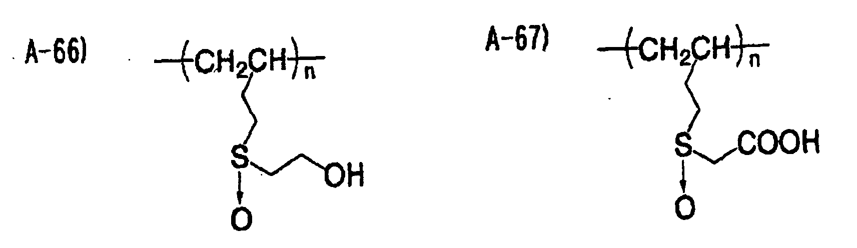

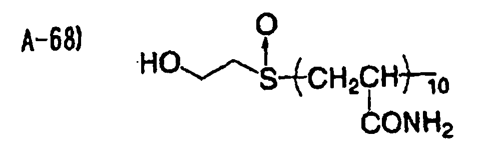

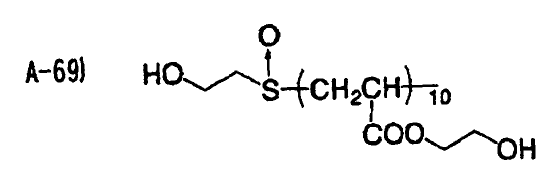

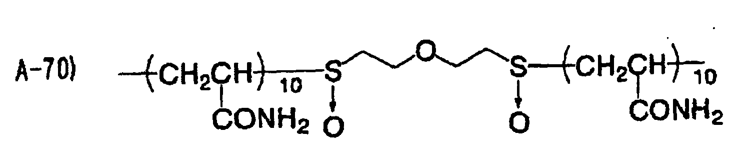

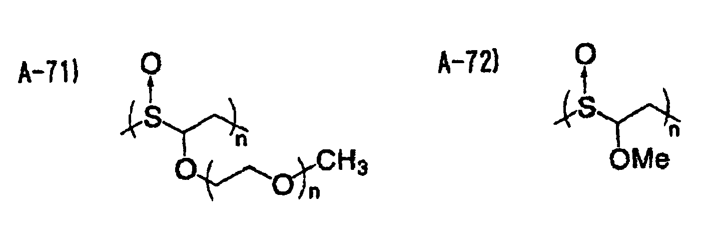

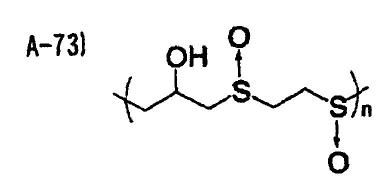

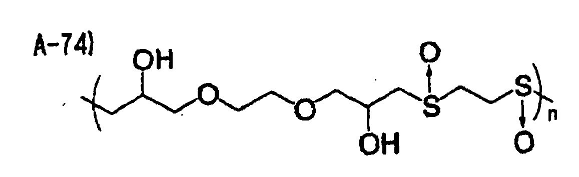

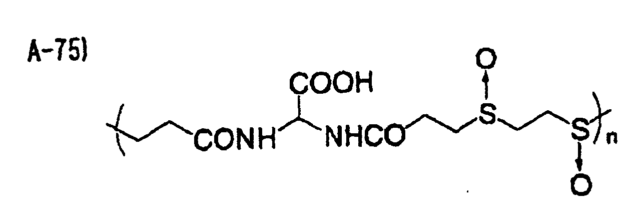

The content of the antioxidant according to the invention in the ink is preferably 1% by mass to 20% by mass, more preferably 2% by mass to 15% by mass, and even more preferably 3% by mass to 10% by mass, from the viewpoint of ozone resistance and ink viscosity.
If the content is less than 1% by mass, it is difficult to achieve an effect of improving ozone resistance, and if the content is more than 20% by mass, the printing density when printed decreases, or jetability upon printing is deteriorated, which is not preferable. In regard to the ink set of the invention, jetability is enhanced when the aforementioned amount of an antioxidant having a sulfur atom in the molecule is incorporated into the ink.

### (Dye)

The water-soluble dye having a structure represented by the formula (M-1), which is contained in the magenta ink according to the invention, will be described.

Hereinafter, specific exemplary embodiments of the invention will be described in detail.
First, a compound represented by the formula (M-1) (azo dye) will be described. The compound represented by the formula (M-1) is preferably water-soluble.
R₁ and R₂ each independently represent a hydrogen atom, a halogen atom, an aliphatic group, an aryl group, a heterocyclic group, a cyano group, a carboxyl group, a carbamoyl group, an alkoxycarbonyl group, an aryloxycarbonyl group, an acyl group, a hydroxyl group, an alkoxy group, an aryloxy group, a silyloxy group, an acyloxy group, a carbamoyloxy group, a heterocyclic oxy group, an alkoxycarbonyloxy group, an aryloxycarbonyloxy group, an alkylamino group, an arylamino group, a heterocyclic amino group, an acylamino group, a ureido group, a sulfamoylamino group, an alkoxycarbonylamino group, an aryloxycarbonylamino group, an alkyl- or arylsulfonylamino group, an aryloxycarbonylamino group, a nitro group, an alkyl- or arylthio group, an alkyl- or arylsulfonyl group, an alkyl- or arylsulfinyl group, a sulfamoyl group, a sulfo group, or a heterocyclic thio group. The respective groups may be further substituted.
R₃ and R₄ each independently represent a hydrogen atom, an aliphatic group (a substituted or unsubstituted alkyl group, a substituted or unsubstituted alkenyl group, a substituted or unsubstituted alkynyl group, or the like), an aryl group (a substituted or unsubstituted phenyl group, a substituted or unsubstituted naphthyl group, or the like), a heterocyclic group, an acyl group, an alkoxycarbonyl group, an aryloxycarbonyl group, a carbamoyl group, a sulfonyl group (an alkylsulfonyl group, an arylsulfonyl group), or a sulfamoyl group. Preferably, R₃ and R₄ are each a hydrogen atom, an alkyl group, a cycloalkyl group, an aralkyl group, an alkenyl group, an aryl group, a heterocyclic group, a sulfonyl group, an acyl group, or a carbamoyl group, and the respective groups may be further substituted.
Furthermore, R₁ and R₂, or R₃ and R₄ may combine with each other to form a 5- or 6-membered ring.
a and e each independently represent an alkyl group, an alkoxy group or a halogen atom, but if a and e are both alkyl groups, the total number of carbon atoms constituting the alkyl groups is 3 or more, and these alkyl groups may be further substituted. b, c and d each independently have the same meanings as those of R₁ and R₂, and a and b, or e and d may form a condensed ring with each other. However, the formula (M-1) has at least one ionic hydrophilic group.

In the formula (M-1), Z₁ represents an electron withdrawing group having a Hammett substituent constant σp value of 0.20 or more.
The electron withdrawing group of Z₁ is an electron withdrawing group having a Hammett substituent constant σp value of 0.20 or more, and preferably 0.30 or more. The upper limit of the σp value is preferably 1.0.
Specific examples of the electron withdrawing group having a σp value of 0.20 or more include an acyl group, an acyloxy group, a carbamoyl group, an alkyloxycarbonyl group, an aryloxycarbonyl group, a cyano group, a nitro group, a dialkylphosphono group, a diarylphosphono group, a diarylphosphinyl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, a halogenated alkyl group, a halogenated alkoxy group, a halogenated aryloxy group, a halogenated alkylamino group, a halogenated alkylthio group, a heterocyclic group, a halogen atom, an azo group, a selenocyanate group, and an aryl group substituted with another electron withdrawing group having a σp value of 0.20 or more. Z₁ is preferably a cyano group, a nitro group, or a halogen atom, more preferably a halogen atom or a cyano group, and most preferably a cyano group.

Z₂ represents a hydrogen atom, an aliphatic group, an aryl group or a heterocyclic group. Z₂ is preferably a hydrogen atom, an alkyl group, a cycloalkyl group, an aralkyl group, an aryl group, a heterocyclic group, an acyl group, an alkenyl group, or a sulfonyl group, and is more preferably an alkyl group. The respective substituents may be further substituted.
The alkyl group includes an alkyl group having a substituent, and an unsubstituted alkyl group. The alkyl group is preferably an alkyl group having 1 to 12 carbon atoms, excluding the carbon atoms of the substituent, and more preferably an alkyl group having 1 to 6 carbon atoms, excluding the carbon atoms of the substituent,. Examples of the substituent include a hydroxyl group, an alkoxy group, a cyano group, a halogen atom, and an ionic hydrophilic group. Examples of the alkyl group include methyl, ethyl, butyl, isopropyl, t-butyl, hydroxyethyl, methoxyethyl, cyanoethyl, trifluoromethyl, 3-sulfopropyl and 4-sulfobutyl groups.
The cycloalkyl group includes a cycloalkyl group having a substituent, and an unsubstituted cycloalkyl group. The cycloalkyl group is preferably a cycloalkyl group having 5 to 12 carbon atoms, excluding the carbon atoms of the substituent. Examples of the substituent include an ionic hydrophilic group. Examples of the cycloalkyl group include a cyclohexyl group.

The aralkyl group includes an aralkyl group having a substituent, and an unsubstituted aralkyl group. The aralkyl group is preferably an aralkyl group having 7 to 12 carbon atoms, excluding the carbon atoms of the substituent. Examples of the substituent include an ionic hydrophilic group. Examples of the aralkyl group include a benzyl group, and a 2-phenethyl group.
The aryl group includes an aryl group having a substituent, and an unsubstituted aryl group. The aryl group is preferably an aryl group having 6 to 12 carbon atoms, excluding the carbon atoms of the substituent. Examples of the substituent include an alkyl group, an alkoxy group, a halogen atom, an alkylamino group, an amide group, a carbamoyl group, a sulfamoyl group, a sulfonamide group, a hydroxyl group, an ester group and an ionic hydrophilic group. Examples of the aryl group include phenyl, p-tolyl, p-methoxyphenyl, o-chlorophenyl, and m-(3-sulfopropylamino) phenyl groups.

The heterocyclic group includes a heterocyclic group having a substituent, and an unsubstituted heterocyclic group. The heterocyclic group is preferably a heterocyclic group having a 5-membered or 6-membered ring. Examples of the substituent include an amide group, a carbamoyl group, a sulfamoyl group, a sulfonamide group, a hydroxyl group, an ester group, and an ionic hydrophilic group. Examples of the heterocyclic group include a 2-pyridyl group, a 2-thienyl group, a 2-thiazolyl group, a 2-benzothiazolyl group and a 2-furyl group.
The acyl group includes an acyl group having a substituent, and an unsubstituted acyl group. The acyl group is preferably an acyl group having 1 to 12 carbon atoms, excluding the carbon atoms of the substituent. Examples of the acyl group include an acetyl group and a benzoyl group.

The alkenyl group includes an alkenyl group having a substituent, and an unsubstituted alkenyl group. The alkenyl group is preferably an alkenyl group having 5 to 12 carbon atoms, excluding the carbon atoms of the substituent. Examples of the substituent include an ionic hydrophilic group. Examples of the alkenyl group include a vinyl group, and an allyl group.
The sulfonyl group includes an alkylsulfonyl group , for example, a methanesulfonyl group, and an arylsulfonyl group, for example, a phenylsulfonyl group.
However, each of R₃ and R₄ is not a hydrogen atom at the same time.

Q represents a hydrogen atom, an aliphatic group, an aryl group or a heterocyclic group. Q preferably represents an alkyl group, a cycloalkyl group, an aralkyl group, an alkenyl group, an aryl group, or a heterocyclic group, and these substituents may be respectively further substituted. The details of these substituents are the same as those for R₁ and R₂ mentioned above.

Q is preferably an aryl group or a heterocyclic group, both of which are substituted with an electron withdrawing group.

The electron withdrawing group for Q is an electron withdrawing group having a Hammett substituent constant σp value of 0.20 or more, and preferably 0.30 or more. The upper limit of the σp value is preferably 1.0.
Specific examples for the electron withdrawing group having a σp value of 0.20 or more include an acyl group, an acyloxy group, a carbamoyl group, an alkyloxycarbonyl group, an aryloxycarbonyl group, a cyano group, a nitro group, a dialkylphosphono group, a diarylphosphono group, a diarylphosphinyl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, a halogenated alkyl group, a halogenated alkoxy group, a halogenated aryloxy group, a halogenated alkylamino group, a halogenated alkylthio group, a heterocyclic group, a halogen atom, an azo group, a selenocyanate group, an aryl group substituted with another electron withdrawing group having a σp value of 0.20 or more. The electron withdrawing group is preferably a cyano group, a nitro group or a halogen atom. The heterocyclic group may not be substituted with an electron withdrawing group.

R₃ and R₄ are each preferably a hydrogen atom, an alkyl group, an aralkyl group, an aryl group, a heterocyclic group, a sulfonyl group, or an acyl group, and a and e are each preferably an alkyl group or a halogen atom. When a and e are both alkyl groups, a and e are both unsubstituted alkyl groups, and the total number of carbon atoms of a and e is 3 or more (preferably, 5 or less). A preferred combination of a, b, c and d is such that a, b, c and d are each a hydrogen atom, a halogen atom, an alkyl group, or an ionic hydrophilic group (preferably, a hydrogen atom, an alkyl group having 1 to 4 carbon atoms, or an ionic hydrophilic group).

Z₁ is most preferably a cyano group.
Z₂ is preferably an alkyl group or an aryl group. Furthermore, among alkyl groups, an alkyl group having 3 to 4 carbon atoms (preferably, an isopropyl group or a t-butyl group) is preferred. The aryl group is preferably a phenyl group which is further substituted at any of the 2-position, 4-position and 6-position as viewed from the side of the phenyl group and the pyrazole mother nucleus.
An exemplary combination of preferred substituents with respect to the formula (M-1) will be described below. A preferable combination is that Z₁ is a cyano group; Z₂ is an isopropyl group, a t-butyl group or a phenyl group (preferably, a t-butyl group); R₁ is a hydrogen atom; R₂ is a hydrogen atom or an alkyl group having 1 to 4 carbon atoms (preferably, a methyl group); R₃ and R₄ are each a hydrogen atom, an alkyl group, an aralkyl group, an aryl group, a heterocyclic group, a sulfonyl group, or an acyl group, and preferably a hydrogen atom, a heterocyclic (preferably, benzoxazole ring, benzothiazole ring (preferably, unsubstituted or sulfo-substituted benzothiazole ring)) group, or an alkyl- and/or sulfo-substituted phenyl group; a and e are each an alkyl group, an alkyl group which may be substituted, with the total number of carbon atoms of a + e being 3 or more (preferably, 5 or less), and preferably an unsubstituted alkyl group with the total number of carbon atoms being 4 or more and 5 or less; b, c and d are each a hydrogen atom, a halogen atom, an alkyl group, or an ionic hydrophilic group (preferably, a hydrogen atom, an alkyl group having 1 to 4 carbon atoms, or a sulfo group); and Q is a heterocyclic group preferably including a benzoxazole ring, or a benzothiazole ring (preferably, sulfamoyl- or sulfo-substituted benzoxazole or benzothiazole ring).

The compound represented by the formula (M-1) (azo dye) has at least one (preferably, 3 or more and 6 or less) ionic hydrophilic groups in the molecule. The ionic hydrophilic group may be any group as long as it is an ionic dissociable group. Examples of the ionic hydrophilic group include a sulfo group, a carboxyl group, a phosphono group, and a quaternary ammonium group. The ionic hydrophilic group is preferably a carboxyl group, a phosphono group, or a sulfo group, and among them, a carboxyl group and a sulfo group are preferred. In particular, it is most preferable that at least one ionic hydrophilic group is a sulfo group. The carboxyl group, the phosphono group and the sulfo group may be in the form of a salt, and examples of the counterion capable of forming a salt therewith include an ammonium ion, an alkali metal ion (for example, lithium ion, sodium ion, or potassium ion), and an organic cation (for example, tetramethylammonium ion, tetramethylguanidium ion, or tetramethylphosphonium). Among the counterions, an alkali metal ion is preferred.
The azo dye preferably has 3 or more and 6 or less ionic hydrophilic groups in the molecule, and more preferably has 3 or more and 6 or less sulfo groups, and even more preferably 3 or more and 5 or less sulfo groups, in the molecule.

### (Method for producing azo dye)

The azo dye represented by the formula (M-1) may be obtained by any of the following methods, <1> and/or <2>.
The method <1> is a method including the following processes.
(a) A process of reacting an aminopyrazole with a diazotizing agent to form an diazonium salt,
(b) a process of reacting the diazonium salt formed in the process (a) with a coupling agent to form a compound having a substituent introduced, and
(c) a process of reacting the compound formed in the process (b) with an alkylating agent, an arylating agent or a heterylating agent in the presence of a base, to form a precursor compound for formula (M-1).

In the method <1>, it is preferable to use a dilute aqueous hydrochloric acid solution of sodium nitrite as the diazotizing agent used in the process (a). Furthermore, isopentyl nitrite, nitrosyl sulfate and the like may also be used as the diazotizing agent. As for the coupling agent used in the process (b), it is most preferable to use a nitrogen-containing 6-membered heterocyclic coupler. As for the base used together with the alkylating agent, arylating agent or heterylating agent in the process (c), organic bases such as diisopropylethylamine, and inorganic bases such as potassium carbonate, sodium carbonate, sodium hydrogen carbonate, potassium hydrogen carbonate, sodium hydroxide and potassium hydroxide, may be mentioned.

The method <2> is a method including a process of introducing a water-soluble group to the precursor compound for formula (M-1) by an electrophilic reaction. Furthermore, the electrophilic reaction is preferably carried out by a method that will be described below in detail.

In regard to the method <2>, the electrophilic reaction may be a sulfonation reaction, a Mannich reaction, or a Friedel-Crafts reaction, and among them, sulfonation is preferred.
Regarding the method of sulfonating the precursor compound for formula (M-1), sulfonation can be carried out by using a sulfonating agent such as concentrated sulfuric acid, 10% to 60% fuming sulfuric acid, chlorosulfonic acid, sulfur trioxide or amidosulfuric acid. A solvent may also be used, and the solvent that may be used include acetic acid, acetic anhydride, sulfolane, ethyl acetate, ether, carbon tetrachloride, acetonitrile, and the like.
In regard to the precursor compound for formula (M-1), it is preferable that R₃, R₄, b (d) and c be sulfonated, and if the substituents for R₃, R₄, b (d) and c have reactive sites capable of performing multiple sulfonation, a sulfonated dye having a different substitution position of sulfonation may be incorporated. In this case, the dye having a different substitution position of sulfonation may be incorporated in a proportion ranging from 0.1% to 20%, in terms of the HPLC area%, based on the main sulfonated dye. It is desirable that the reaction temperature is -5°C to 80°C, and more desirably in the range of 10°C to 70°C. It is desirable that the reaction time is from 30 minutes to 10 hours, and more desirably from 1 hour to 6 hours.

As for the deoxygenating conditions in the method for producing the precursor compound for formula (M-1), it is desirable to perform production after filling the reaction system with an inert gas such as nitrogen or argon, and furthermore, it is preferable to subject the reaction liquid to bubbling with such an inert gas.

Aminopyrazole, which is a starting material that is used in the process (a) of the method <1>, may be synthesized according to the methods described in U.S. Patent No. 3,336,285; Heterocycles, 20, 519 (1983); Japanese Published Examined Application (JP-B) No. 6-19036, and the like.

The pyridine coupler (coupling agent) that is used in the process (b) of the method <1> may be synthesized by the methods described in JP-A Nos. 51-83631, 49-74718, JP-B No. 52-46230, and the like.

Specific examples of the azo dye that is used in the ink composition according to the invention will be presented below, but the invention is not intended to be limited to the following examples.

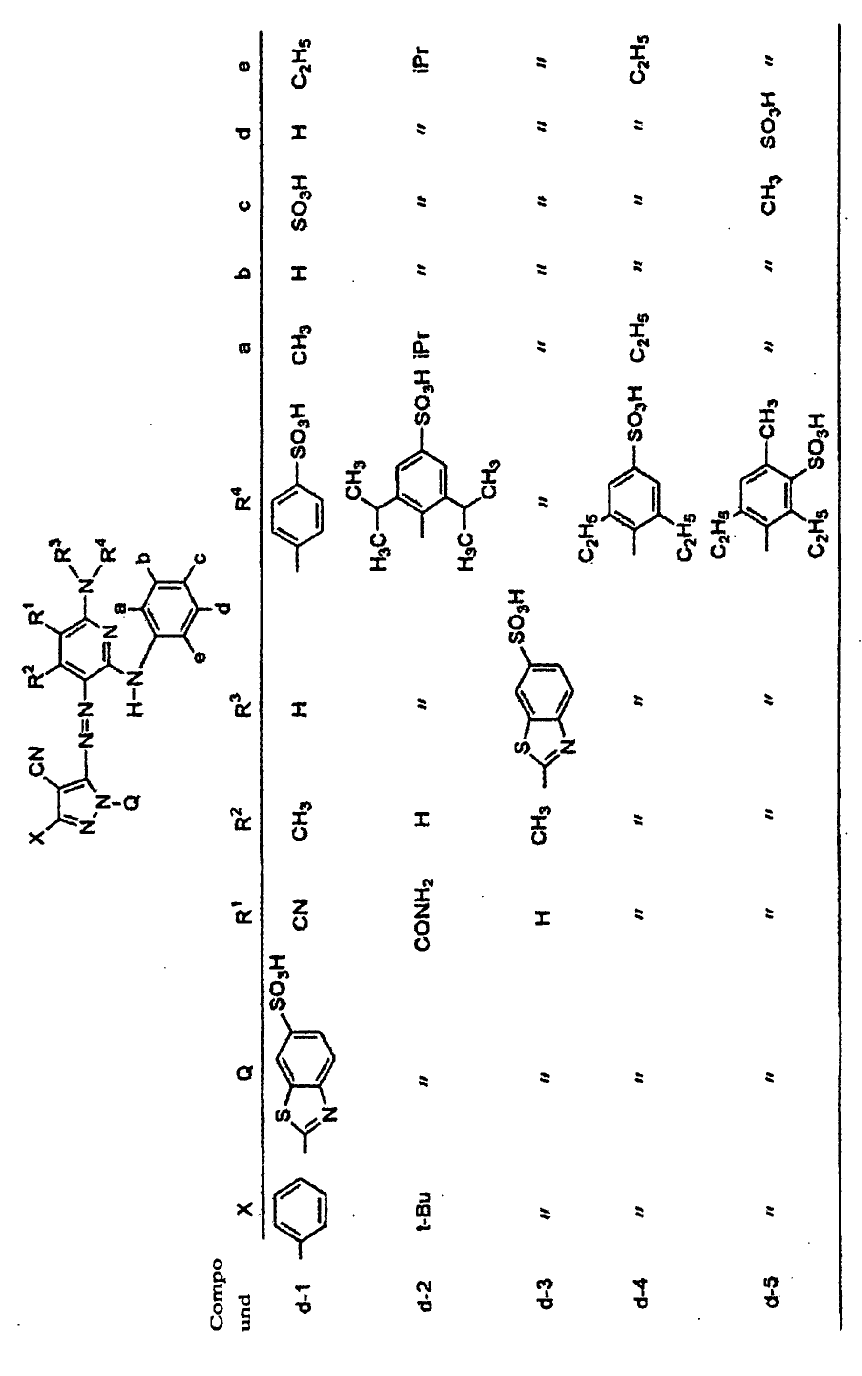

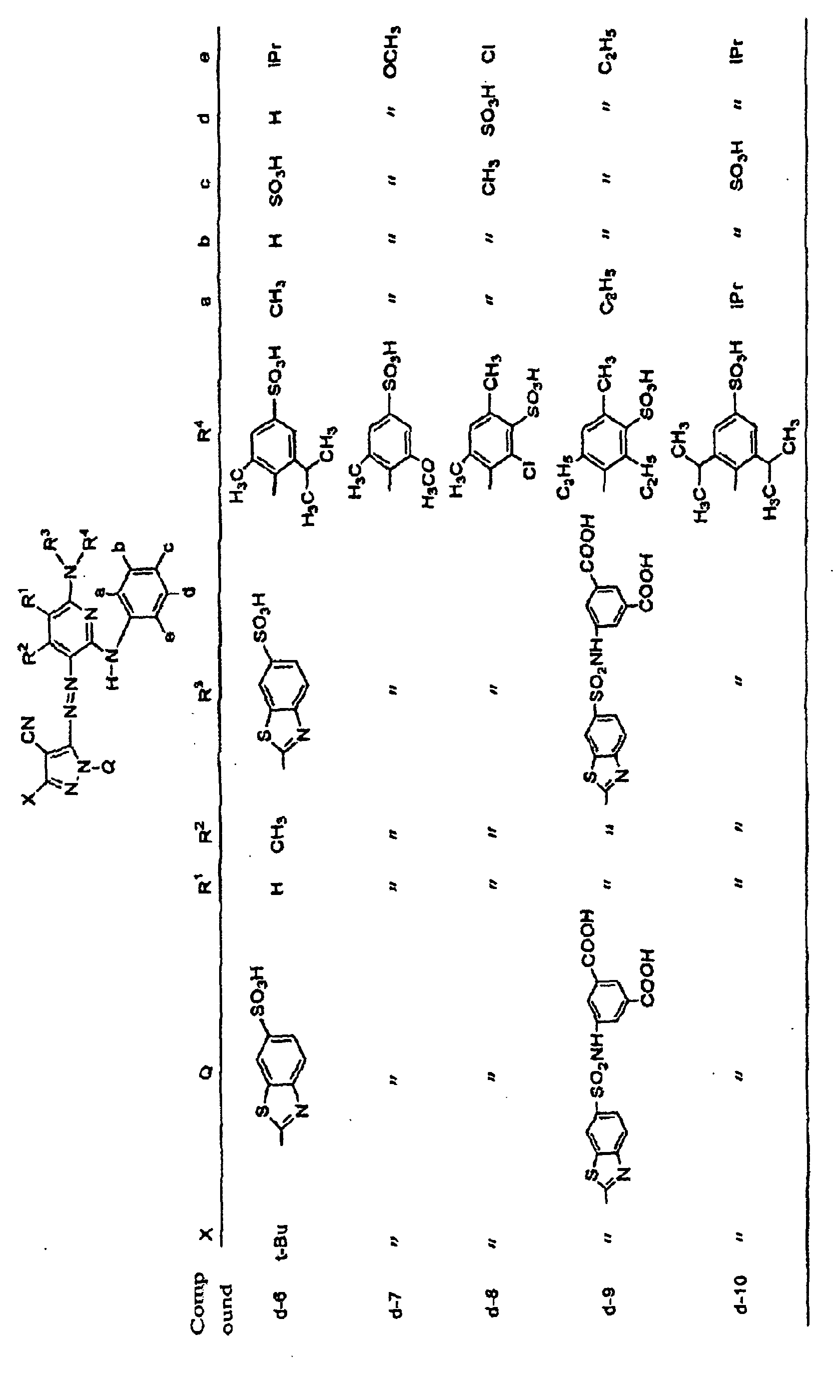

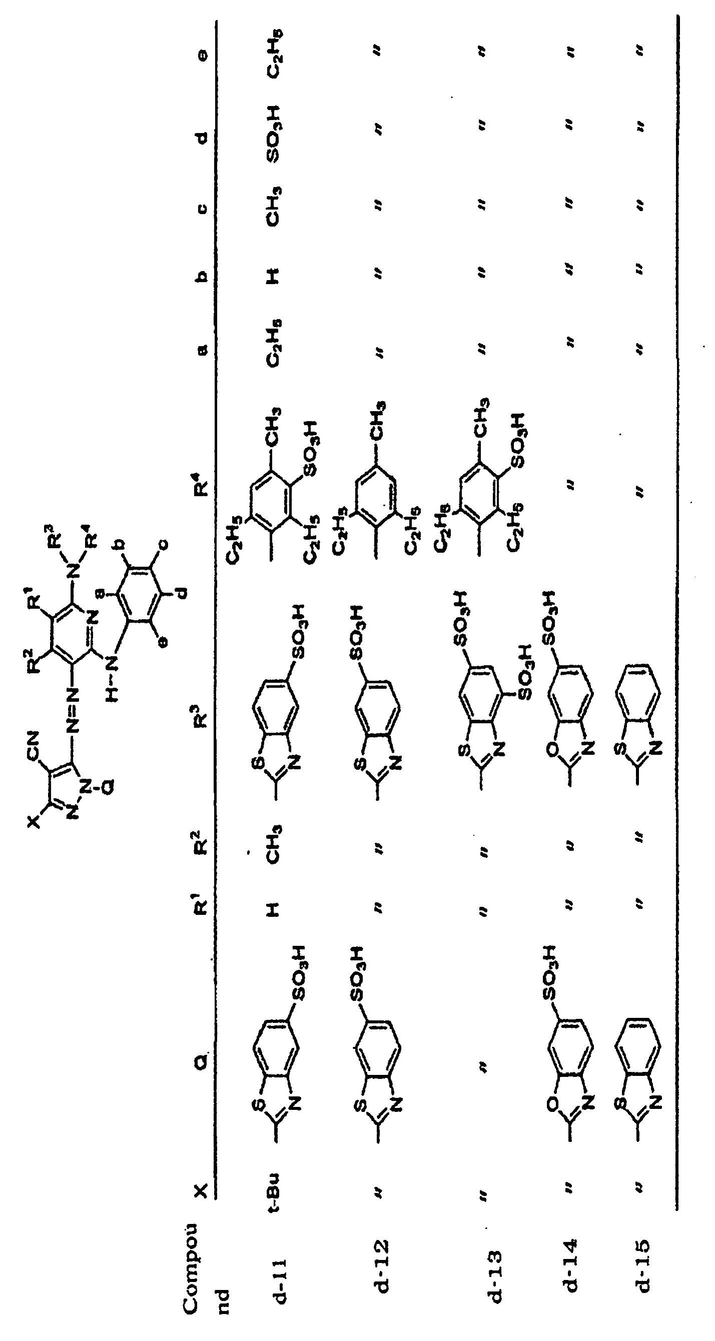

Here, the -SO₃H group in each of the tables shown above may also be suitably a -SO₃Li group.
A synthesis example for the azo dye represented by the formula (M-1) will be described below, but the synthesis example is not intended to be limited to this method.
In regard to the method of synthesizing the compound represented by the formula (M-1), an example of a compound (d-5) as described below will be presented.

### Synthesis of compound (d-5)

### (1) Synthesis of compound (d-5a)

24.1 g (0.147 mol) of 5-amino-3-tert-butyl-4-cyanopyrazole (1), 45 ml of concentrated hydrochloric acid, 30 ml of acetic acid, and 45 ml of propionic acid were stirred at an internal temperature of 0°C, and 10.1 g (0.147 mol) of sodium nitrite dissolved in 20 ml of water was added thereto dropwise over 10 minutes. The resultant mixture was stirred as it was for 30 minutes, to prepare a diazonium salt. 84.7 g (0.147 mol) of a coupler component (2) was dissolved in 231 ml of methanesulfonic acid, 147 ml of acetic acid and 221 ml of propionic acid, the resultant mixture was stirred at 0°C, and the diazonium salt was added over 30 minutes. After the addition of the diazonium salt, the reaction liquid was further stirred for 30 minutes, and then the reaction liquid was slowly added, while stirring, to ice water prepared by adding 750 g of ice into 2250 ml of water. A compound (d-5a) precipitated therefrom was isolated by means of suction filtration. Yield amount 73.8 g, and yield 85%.

### (2) Synthesis of compound (d-5b)

26.6 g (157 mmol) of a heterylating agent (3), 21.7 g of potassium carbonate, and 147 ml of DMSO were added to 21 g (35.5 mmol) of the compound (d-5a), and the resultant mixture was heated and stirred at an internal temperature of 92°C for 4 hours while nitrogen bubbling was carried out. After completion of the stirring, the mixture was cooled to room temperature, and a compound (d-5b) precipitated from the reaction system was isolated by means of suction filtration. The resulting crude crystals were further dispersed in 3 L of water to dissolve an excess of potassium carbonate, and then the mixture was subjected to suction filtration to obtain the target compound (d-5b). Yield amount 20.0 g, yield 63.5%, and λmax = 558 nm (DMF solution).
m/Z (POSI) = 858.

### (3) Synthesis of compound (d-5)

2 g (2.33 mmol) of the compound (d-5b) was dispersed in 7 g of sulfolane manufactured by Tokyo Chemical Industry Co., Ltd., and 1.7 g of NISSO SULFAN (trade name, sulfur trioxide) was added dropwise thereto at an internal temperature of 15°C. After completion of the dropwise addition, the mixture was allowed to react at an internal temperature of 70°C for 2 hours. After completion of the reaction, the reaction liquid was cooled to 20°C, and 2 ml of water was added dropwise. The mixture was cooled to an internal temperature of 5°C, 3.3 ml of a 25 wt% aqueous solution of sodium hydroxide was added dropwise thereto, and 0.8 ml of a 28 wt% methanol solution of sodium methoxide was further added dropwise. 4 ml of methanol was further added dropwise to the mixture, and an inorganic salt precipitated therefrom was filtered and washed altogether with 2 ml of methanol. 2 g of potassium acetate and 5.6 ml of methanol were added to the filtrate, and 22.5 ml of ethanol was further added thereto. Thereby, the dye was crystallized, and was subjected to suction filtration and washed with ethanol. Thus, the compound (d-5) as crude crystals was obtained. The crude crystals containing the inorganic salt was subjected to desalination and purification by SEPHADEX LH-20 Gel Chromatography (eluent, water/methanol = 1:1 (v/v)) manufactured by Pharmacia Corp., to obtain the compound d-5. Yield amount 2 g, yield 66%, λmax (DMSO) = 567.1 nm, and ε = 46900.

The content of the magenta dye in the magenta ink according to the invention is not particularly limited, but from the viewpoints of the density of developed color after printing and the amount of ink jetting, it is preferable that the magenta dye is contained in the magenta ink in an amount of 0.2% by mass to 20% by mass, and more preferably 0.5% by mass to 10% by mass.

Furthermore, in order to constitute a full color ink set, the magenta ink according to the invention is used in combination with a cyan ink, a yellow ink and a black ink, and those inks also use their respective dyes. Examples of these dyes that may be used in combination include the following.

Next, the yellow dye that is used in the yellow ink in the ink set of the invention will be described.
The yellow dye used in the yellow ink is not particularly limited, but for example, the compounds described in paragraphs [0109] to [0132] in JP-A No. 2008-101173, and the like may be suitably used.

Furthermore, as for the yellow dye, the compounds described in WO 2005/075573, JP-A Nos. 2004-83903 (paragraphs [0024] to [0062]), 2003-277662 (paragraphs [0022] to [0049]), 2003-277661 (paragraphs [0021] to [0050]), 2003-128953 (paragraphs [0025] to [0076]), 2003-41160 (paragraphs [0028] to [0064]), and the like may be suitably used.
The compounds described in JP-A Nos. 2007-063520 or 2006-57076 may also be mentioned.

Next, the cyan dye that is used in the cyan ink in the ink set of the invention will be discussed.
The cyan dye used in the cyan ink is not particularly limited, but for example, the compounds described in paragraphs [0133] to [0142] of JP-A No. 2008-101173, and the like may be suitably used.

Furthermore, as for the cyan dye, the compounds described in WO 2002/60994, WO 2003/811, WO 2003/62324, JP-A Nos. 2003-213167,2004-75986,2004-323605, 2004-315758, 2004-315807, and 2005-179469 may be mentioned.

Next, the black dye that is used in the black ink in the ink set of the invention will be discussed.
The black dye used in the black ink is not particularly limited, but for example, the compounds described in paragraphs [0143] to [0199] of JP-A No. 2008-101173, and the like may be suitably used.

Furthermore, the compounds described in paragraphs [0019] to [0024] of JP-A No. 2005-239822 may be mentioned.

The content of the yellow dye in the yellow ink according to the invention is not particularly limited, but from the viewpoints of the density of developed color after printing and the amount of ink jetting, the yellow dye is preferably contained in the yellow ink in an amount of 0.2% by mass to 20% by mass, and more preferably 1% by mass to 10% by mass.
The content of the cyan dye in the cyan ink according to the invention is not particularly limited, but from the viewpoints of the density of developed color after printing and the amount of ink jetting, the cyan dye is preferably contained in the cyan ink in an amount of 0.2% by mass to 10% by mass, and more preferably 1% by mass to 7% by mass.
The content of the black dye in the black ink according to the invention is not particularly limited, but from the viewpoints of the density of developed color after printing and the amount of ink jetting, the black dye is preferably contained in the black ink in an amount of 0.2% by mass to 20% by mass, and more preferably 2% by mass to 10% by mass.

As for the ink set of the invention, other dyes may also be added for the purpose of adjusting the color tone or the color balance at the time of discoloration.

Examples of the yellow dye include aryl or heteryl azo dyes derived from a phenol, a naphthol, an aniline, a pyrazolone, a pyridone or an open chain type active methylene compound as a coupling component; azomethine dyes derived from an open chain type active methylene compound as a coupling component; methine dyes such as benzylidene dyes or monomethineoxonol dyes; quinone-based dyes such as naphthoquinone dyes and anthraquinone dyes. Other coloring matter species include quinophthalone dyes, nitro/nitroso dyes, acridine dyes, acridinone dyes, and the like. These dyes may be compounds which develop a yellow color for the first time as a result of dissociation of a part of the chromophore, and in this case, the counter cation may be an inorganic cation such as an alkali metal ion or ammonium, or may be an organic cation such as pyridinium or a quaternary ammonium salt. The counter cation may also be a polymeric cation having those cations in a partial structure.

Examples of the magenta dye include aryl or heteryl azo dyes derived from a phenol, a naphthol, or an aniline compound as a coupling component; azomethine dyes derived from a pyrazolone or a pyrazolotriazole compound as a coupling component; methine dyes such as arylidene dyes, styryl dyes, merocyanine dyes and oxonol dyes; carbonium dyes such as diphenylmethane dyes, triphenylmethane dyes and xanthene dyes; quinone-based dyes such as naphthoquinone, anthraquinone and anthrapyridone; condensed polycyclic dyes such as, for example, dioxazine dyes; and the like. These dyes may be compounds which develop a magenta color for the first time as a result of dissociation of a part of the chromophore, and in this case, the counter cation may be an inorganic cation such as an alkali metal ion or ammonium, or may be an organic cation such as pyridinium or a quaternary ammonium salt. The counter cation may also be a polymeric cation having those cations in a partial structure.

Examples of the cyan dye include azomethine dyes such as indoaniline dyes and indophenol dyes; polymethine dyes such as cyanine dyes, oxonol dyes and merocyanine dyes; carbonium dyes such as diphenylmethane dyes, triphenylmethane dyes and xanthene dyes; phthalocyanine dyes; anthraquinone dyes; aryl or heteryl azo dyes derived from a phenol, a naphthol or an aniline compound as a coupling component; indigo, thioindigo dyes; and the like. These dyes may be compounds which develop a cyan color for the first time as a result of dissociation of a part of the chromophore, and in this case, the counter cation may be an inorganic cation such as an alkali metal or ammonium, or may be an organic cation such as pyridinium or a quaternary ammonium salt. The counter cation may also be a polymeric cation having those cations in a partial structure. Furthermore, black dyes such as polyazo dyes may also be used.

As for other water-soluble dyes, water-soluble dyes such as, for example, the direct dyes, acidic dyes, edible dyes, basic dyes and reactive dyes described in paragraph [0095] of JP-A No. 2007-204632, or the dyes or pigments described in paragraphs [0096] to [0101] of the same patent document, may be used in combination.

### (Betaine-based compounds)

Next, the betaine-based compounds included in the magenta ink of the invention will be discussed.
Addition of a betaine-based compound to the magenta ink is preferable, particularly from the viewpoint that the fastness of the coloring matter is maintained, and the effect of preventing the recorded image from bleeding becomes conspicuous.
The betaine-based compound as used herein represents a compound having both a cationic moiety and an anionic moiety in the molecule, and having interfacial activity. Examples of the cationic moiety include an aminic nitrogen atom, a nitrogen atom of a heteroaryl ring, a boron atom having four bonds with carbon, a phosphorus atom, and the like. Among these, a nitrogen atom of an ammonium structure and a nitrogen atom of a heteroaryl ring (preferably, an imidazolium structure) are preferred. Among them, a quaternary nitrogen atom is particularly preferred. Examples of the anionic moiety include a hydroxyl group, a thio group, a sulfonamide group, a sulfo group, a carboxyl group, an imide group, a phosphoric acid group, a phosphonic acid group, and the like. Among these, a carboxyl group and a sulfo group are particularly preferred. Preferably, the betaine-based compound is a compound containing a carboxyl group or a sulfo group. The overall charge of the molecule may be cationic, anionic or neutral, but a neutral charge is preferred.

The betaine-based compound contained in the magenta ink of the invention is preferably an alkylaminobetaine-based compound, and it is particularly preferred that the alkylaminobetaine-based compound is a compound represented by the following formula (B):

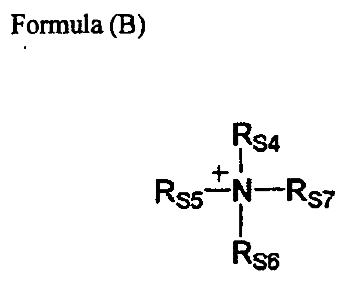

In the formula (B), R_{S4}, R_{S5} and R_{S6} each independently represent an alkyl group, an aryl group or a heterocyclic group, and they may also be linked to each other to form a cyclic structure. Specifically, R_{S4}, R_{S5} and R_{S6} each independently represent an alkyl group which may be substituted (preferably, an alkyl group having 1 to 20 carbon atoms, and more preferably 1 to 16 carbon atoms with examples including a methyl group, an ethyl group, a propyl group, a butyl group, a hexyl group, an octyl group, a dodecyl group, a cetyl group, a stearyl group, an oleyl group, and the like), an aryl group which may be substituted (preferably, an aryl group having 6 to 20 carbon atoms, and more preferably 6 to 14 carbon atoms with examples including a phenyl group, a tolyl group, a xylyl group, a naphthyl group, a cumyl group, a dodecylphenyl group, and the like), or a heterocyclic group which may be substituted (preferably, a heterocyclic group having 2 to 20 carbon atoms, and more preferably 2 to 12 carbon atoms with examples including a pyridyl group, a quinolyl group, and the like), and they may also be linked to each other to form a cyclic structure. Specific examples of the cyclic structure include, for example, a piperidine ring, a morpholine ring, and the like. As R_{S4} R_{S5} or R_{S6}, an alkyl group is particularly preferable.

R_{S7} represents a substituent containing a carboxyl group or a sulfo group (preferably an alkyl group, an aryl group or a heterocyclic group containing a carboxyl group or a sulfo group).
As the alkyl group, aryl group or heterocyclic group, the same groups as those described for R_{S4}, R_{S5} and R_{S6} may be mentioned, and the same groups as those described as a preferable group for R_{S4}, R_{S5} and R_{S6} are preferred. R_{S7} is preferably a group represented by -L-COO⁻. Here, L represents a divalent linking group, and a preferred example thereof is a divalent linking group containing an alkylene group or an arylene group as a basic constituent unit. The linking main chain may contain a heteroatom such as an oxygen atom, a sulfur atom or a nitrogen atom. L is preferably an alkylene group (methylene or ethylene is preferred, and methylene is more preferred).

R_{S4}, R_{S5}, R_{S6} or L may be substituted with various substituents. For example, an alkyl group (preferably, having 1 to 20 carbon atoms, more preferably 1 to 12 carbon atoms, and particularly preferably 1 to 8 carbon atoms, and examples include methyl, ethyl, isopropyl, tert-butyl, n-octyl, n-decyl, n-hexadecyl, cyclopropyl, cyclopentyl, cyclohexyl, and the like), an alkenyl group (preferably, having 2 to 20 carbon atoms, more preferably 2 to 12 carbon atoms, and particularly preferably 2 to 8 carbon atoms, and examples include vinyl, allyl, 2-butenyl, 3-pentenyl, and the like), an alkynyl group (preferably, having 2 to 20 carbon atoms, more preferably 2 to 12 carbon atoms, and particularly preferably 2 to 8 carbon atoms, and examples include propargyl, 3-pentynyl, and the like), an aryl group (preferably, having 6 to 30 carbon atoms, more preferably 6 to 20 carbon atoms, and particularly preferably 6 to 12 carbon atoms, and examples include phenyl, p-methylphenyl, naphthyl, and the like), an amino group (preferably, having 0 to 20 carbon atoms, more preferably 0 to 12 carbon atoms, and particularly preferably 0 to 6 carbon atoms, and examples include amino, methylamino, dimethylamino, diethylamino, diphenylamino, dibenzylamino, and the like), an alkoxy group (preferably, having 1 to 20 carbon atoms, more preferably 1 to 12 carbon atoms, and particularly preferably 1 to 8 carbon atoms, and examples include methoxy, ethoxy, butoxy, and the like), an aryloxy group (preferably, having 6 to 20 carbon atoms, more preferably 6 to 16 carbon atoms, and particularly preferably 6 to 12 carbon atoms, and examples include phenyloxy, 2-naphthyloxy, and the like), an acyl group (preferably, having 1 to 20 carbon atoms, more preferably 1 to 16 carbon atoms, and particularly preferably 1 to 12 carbon atoms, and examples include acetyl, benzoyl, formyl, pivaloyl, and the like), an alkoxycarbonyl group (preferably, having 2 to 20 carbon atoms, more preferably 2 to 16 carbon atoms, and particularly preferably 2 to 12 carbon atoms, and examples include methoxycarbonyl, ethoxycarbonyl and the like), an aryloxycarbonyl group (preferably, having 7 to 20 carbon atoms, more preferably 7 to 16 carbon atoms, and particularly preferably 7 to 10 carbon atoms, and examples include phenyloxycarbonyl, and the like), an acyloxy group (preferably, having 2 to 20 carbon atoms, more preferably 2 to 16 carbon atoms, and particularly preferably 2 to 10 carbon atoms, and examples include acetoxy, benzoyloxy, and the like),

an acylamino group (preferably, having 2 to 20 carbon atoms, more preferably 2 to 16 carbon atoms, and particularly preferably 2 to 10 carbon atoms, and examples include acetylamino, benzoylamino and the like), an alkoxycarbonylamino group (preferably, having 2 to 20 carbon atoms, more preferably 2 to 16 carbon atoms, and particularly preferably 2 to 12 carbon atoms, and examples include methoxycarbonylamino, and the like), an aryloxycarbonylamino group (preferably, having 7 to 20 carbon atoms, more preferably 7 to 16 carbon atoms, and particularly preferably 7 to 12 carbon atoms, and examples include phenyloxycarbonylamino, and the like), a sulfonylamino group (preferably, having 1 to 20 carbon atoms, more preferably 1 to 16 carbon atoms, and particularly preferably 1 to 12 carbon atoms, and examples include methanesulfonylamino, benzenesulfonylamino, and the like), a sulfamoyl group (preferably, having 0 to 20 carbon atoms, more preferably 0 to 16 carbon atoms, and particularly preferably 0 to 12 carbon atoms, and examples include sulfamoyl, methylsulfamoyl, dimethylsulfamoyl, phenylsulfamoyl, and the like), a carbamoyl group (preferably, having 1 to 20 carbon atoms, more preferably 1 to 16 carbon atoms, and particularly preferably 1 to 12 carbon atoms, and examples include carbamoyl, methylcarbamoyl, diethylcarbamoyl, phenylcarbamoyl, and the like),

an alkylthio group (preferably, having 1 to 20 carbon atoms, more preferably 1 to 16 carbon atoms, and particularly preferably 1 to 12 carbon atoms, and examples include methylthio, ethylthio, and the like), an arylthio group (preferably, having 6 to 20 carbon atoms, more preferably 6 to 16 carbon atoms, and particularly preferably 6 to 12 carbon atoms, and examples include phenylthio, and the like), a sulfonyl group (preferably, having 1 to 20 carbon atoms, more preferably 1 to 16 carbon atoms, and particularly preferably 1 to 12 carbon atoms, and examples include mesyl, tosyl, and the like), a sulfinyl group (preferably, having 1 to 20 carbon atoms, more preferably 1 to 16 carbon atoms, and particularly preferably 1 to 12 carbon atoms, and examples include methanesulfinyl, benzenesulfinyl, and the like), a ureido group (preferably, having 1 to 20 carbon atoms, more preferably 1 to 16 carbon atoms, and particularly preferably 1 to 12 carbon atoms, and examples include ureido, methylureido, phenylureido, and the like), a phosphoric acid amide group (preferably, having 1 to 20 carbon atoms, more preferably 1 to 16 carbon atoms, and particularly preferably 1 to 12 carbon atoms, and examples include diethylphosphoric acid amide, phenylphosphoric acid amide, and the like), a hydroxyl group, a mercapto group, a halogen atom (for example, a fluorine atom, a chlorine atom, a bromine atom, and an iodine atom), a cyano group, a sulfo group, a carboxyl group, a nitro group, a hydroxamic acid group, a sulfino group, a hydrazino group, an imino group, a heterocyclic group (preferably, having 1 to 30 carbon atoms, and more preferably 1 to 12 carbon atoms, and containing, for example, a nitrogen atom, an oxygen atom or a sulfur atom as the heteroatom. Specific examples include imidazolyl, pyridyl, quinolyl, furyl, thienyl, piperidyl, morpholino, benzoxazolyl, benzimidazolyl, benzothiazolyl, carbazolyl, azepinyl, and the like), a silyl group (preferably, having 3 to 40 carbon atoms, more preferably 3 to 30 carbon atoms, and particularly preferably 3 to 24 carbon atoms, and examples include trimethylsilyl, triphenylsilyl, and the like), and the like may be mentioned. These substituents may be further substituted. In the case of having two or more substituents, the substituents may be identical or different. Furthermore, if possible, the substituents may be linked to each other to form a ring. Plural betaine structures may also be included by linking together through R_{S4}, R_{S5}, R_{S6} or L.

It is preferable that the compound represented by the formula (B) that is used in the invention contain a group having 8 or more carbon atoms for any of the groups represented by R_{S4}, R_{S5}, R_{S6} and L. Among them, it is particularly preferable that a long-chain alkyl group having 8 or more carbon atoms is contained in R_{S4}, R_{S5} and R_{S6}. It is more preferable that L is represented by CH(R_{S8}) wherein R_{S8} is represented by a hydrogen atom or an alkyl group having 8 or more carbon atoms, and one of R_{S4}, R_{S5}, R_{S6} and R_{S8} is represented by an alkyl group having 8 or more carbon atoms.

A preferred addition amount of the betaine-based compound represented by the formula (B) falls in a wide range, and is preferably 0.01 to 20% by mass, more preferably 0.01 to 15% by mass, even more preferably 0.01 to 10% by mass, and particularly preferably 0.01 to 5% by mass.
Hereinafter, specific examples of the betaine-based compound that are preferably used in the invention will be shown, but as a matter of course, the invention is not intended to be limited to these.

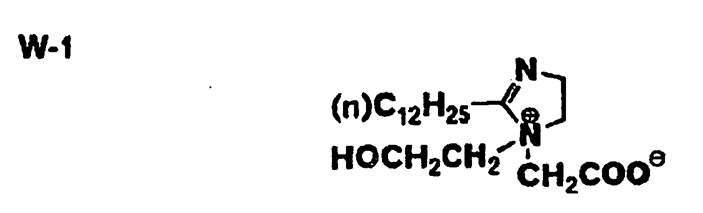

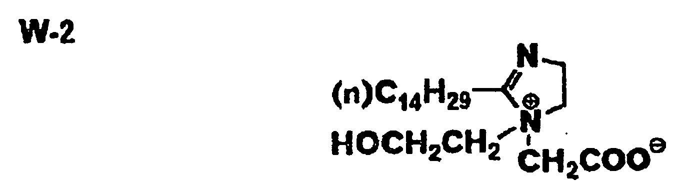

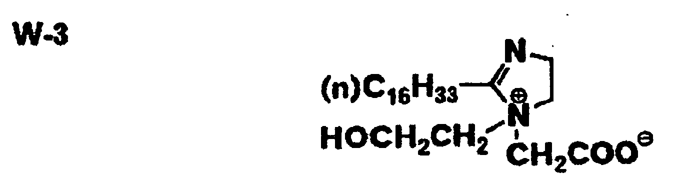

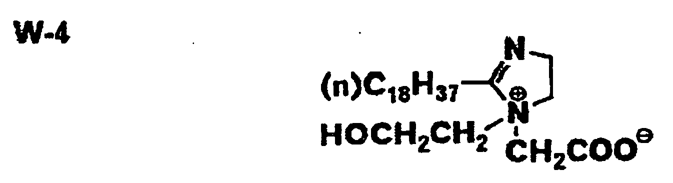

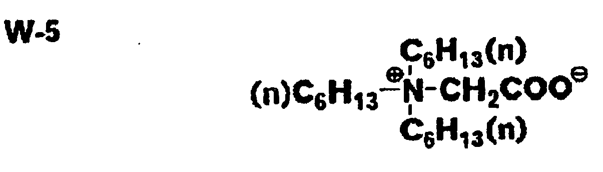

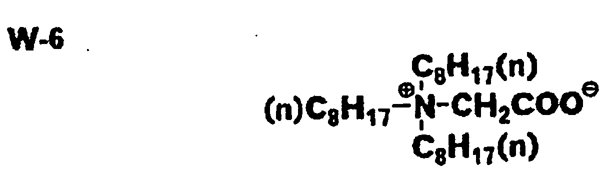

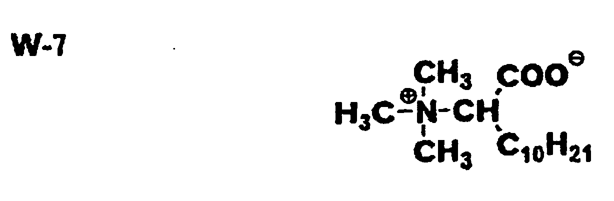

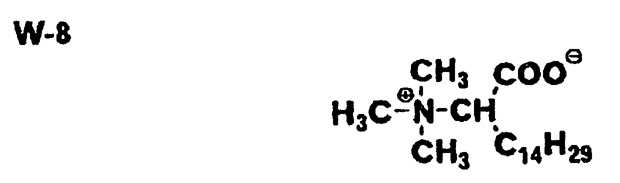

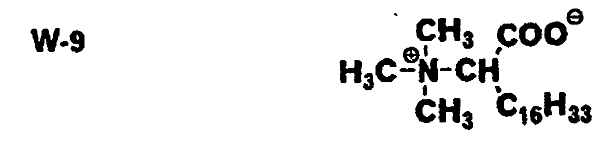

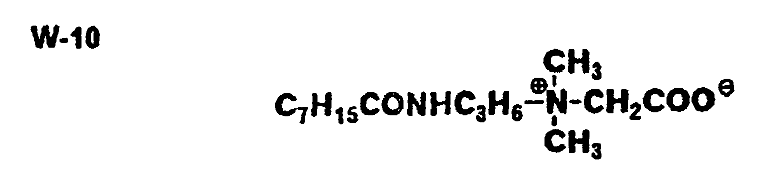

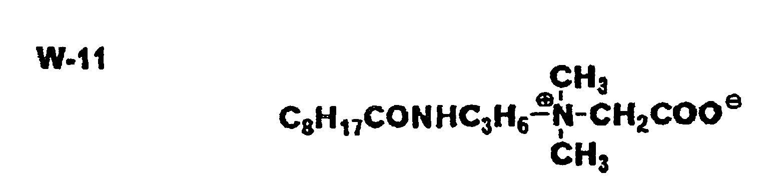

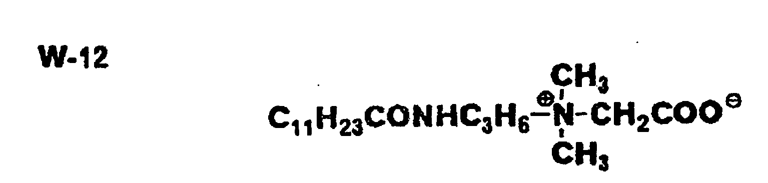

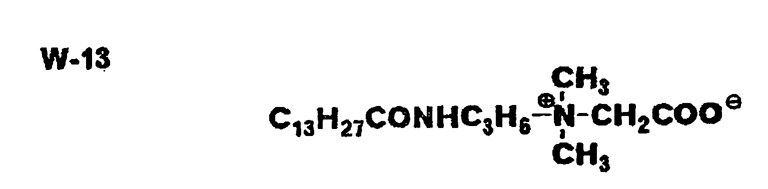

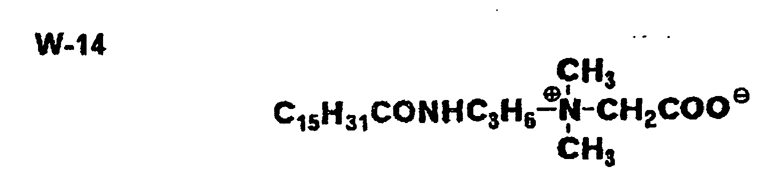

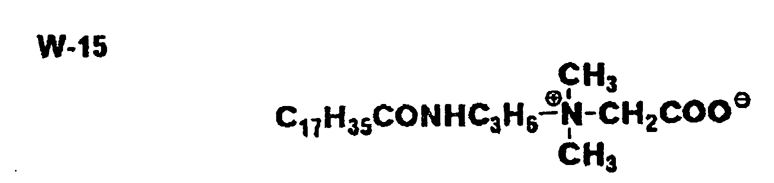

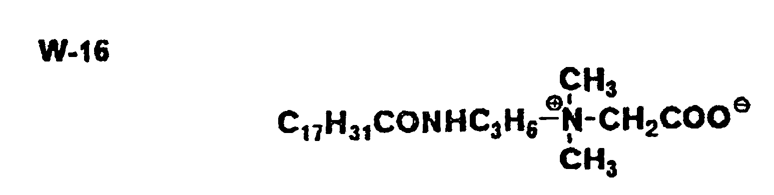

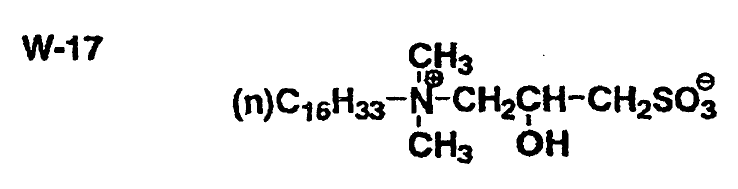

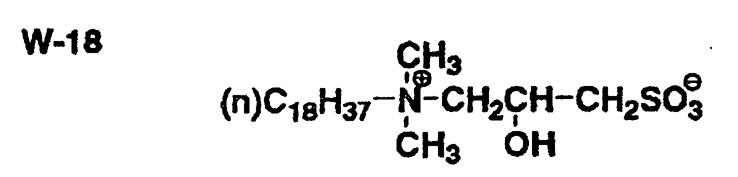

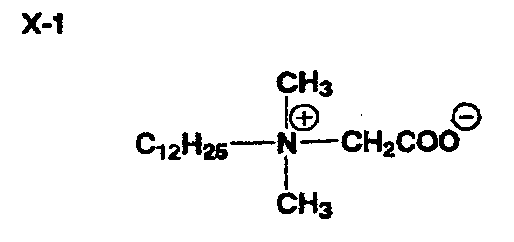

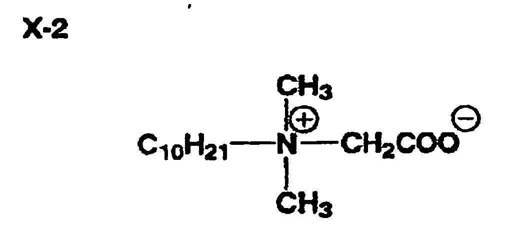

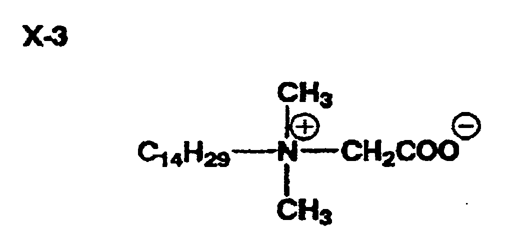

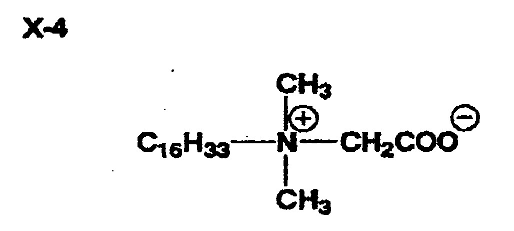

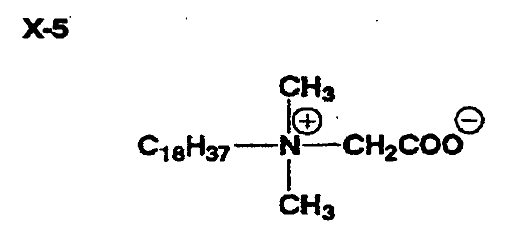

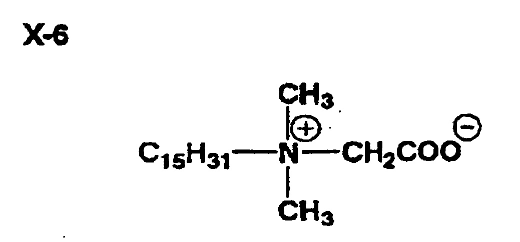

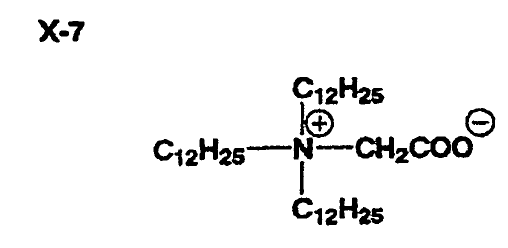

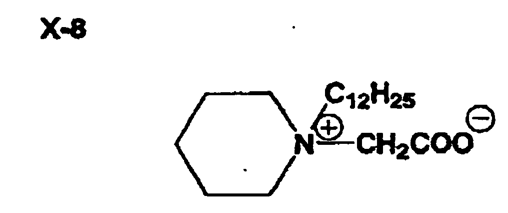

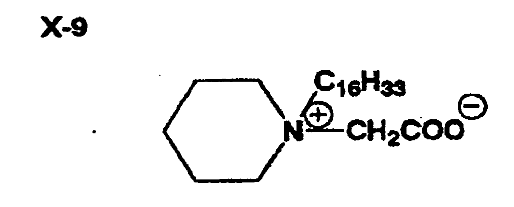

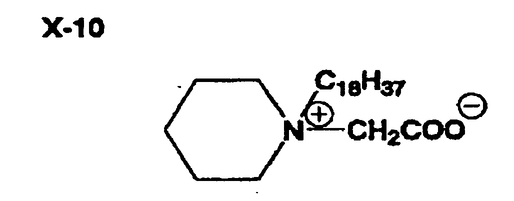

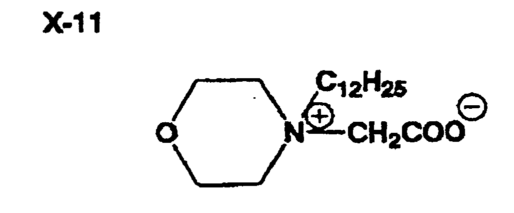

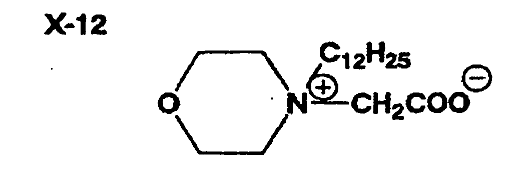

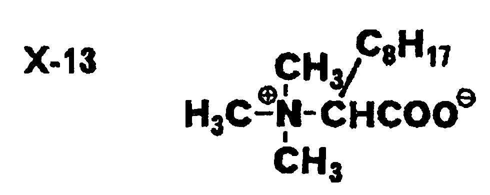

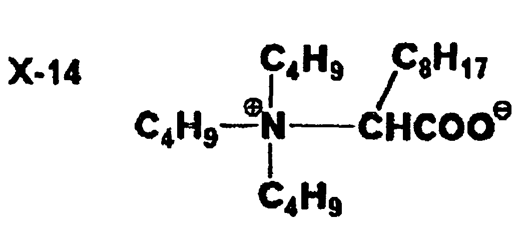

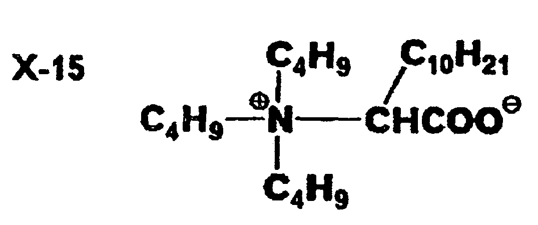

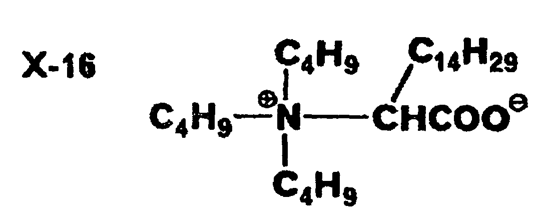

The respective inks used in the ink set of the invention, such as the yellow ink, the magenta ink, the cyan ink and the black ink, may contain a nonionic surfactant for the purpose of controlling the jetability or surface tension of the ink. As for the nonionic surfactant, for example, those described in paragraphs [0128] to [0158] of JP-A No. 2007-204632 may be used.

The content of the surfactant in the respective inks according to the invention is preferably 0.01 to 20% by mass, more preferably 0.01 to 15% by mass, even more preferably 0.01 to 10% by mass, and particularly preferably 0.01 to 5% by mass. If the concentration in the ink is less than 0.01% by mass, the printing quality tends to conspicuously decrease, as resulting in a decrease in the jetting stability, occurrence of bleeding at the time of color mixing, generation of feathering, or the like. Furthermore, if the concentration of the surfactant in the ink is larger than 20% by mass, printing defects may occur due to the adhesion of ink to hard surfaces at the time of jetting.
From this viewpoint, the static surface tension of the ink according to the invention is preferably 20 mN/m or more, and more preferably 25 mN/m or more, at 25°C. The static surface tension is also preferably 60 mN/m or less, more preferably 50 mN/m or less, and particularly preferably 40 mN/m or less, at 25°C. The static surface tension will be described in more detail hereinbelow.

In regard to the respective ink according to the invention, the surfactant may be used individually, or may be used in combination of two or more species, and surfactants other than those described above may also be used in combination.
When surfactants of different species are used in combination, the effects of the invention owing to the surfactant may be reinforced by adjusting the liquid properties of the ink, such as surface tension, enhancing the jetting stability of the ink, enhancing the water resistance of the image, enhancing the properties of preventing the bleeding of the printed ink, and the like.
Examples of the surfactant that may be used in combination with these above-mentioned surfactants include anionic surfactants such as fatty acid salts, alkylsulfuric acid ester salts, alkylbenzenesulfonic acid salts, alkylnaphthalenesulfonic acid salts, dialkylsulfosuccinic acid salts, alkylphosphoric acid ester salts, naphthalenesulfonic acid-formalin condensate, and polyoxyethylene alkylsulfuric acid ester salts; cationic surfactants such as fatty amine salts, quaternary ammonium salts, and alkylpyridinium salts; fluorine compounds and silicon compounds. These surfactants may be used individually or in combination of two or more species.

Specific examples include anionic surfactants such as sodium dodecyl sulfate, sodium dodecyl oxysulfonate, and sodium alkylbenzenesulfonate; cationic surfactants such as cetylpyridinium chloride, trimethylcetylammonium chloride, and tetrabutylamonium chloride; and the like.
These surfactants that may be used in combination may be added within the scope of not impairing the effects of the invention, and may be incorporated in the aforementioned range of the content that may be contained in the respective inks.

According to the invention, the surfactant may also be used in the case where emulsification and dispersion of the below-described colorants is needed, and in the case of using the surfactant as a surface tension adjusting agent, and therefore, further explanations on the surfactant will be added at the respective sections.
Each of the inks of the invention may be produced by dissolving and/or dispersing the dye and an antioxidants, and if necessary, a surfactant in an aqueous medium. The term "aqueous medium" according to the invention means water, or a mixture of water and a small amount of water-soluble organic solvent, to which additives such as a wetting agent, a stabilizer and a preservative have been added if necessary.

Examples of other water-soluble organic solvent that may be used include alcohols (for example, methanol, ethanol, propanol, isopropanol, butanol, isobutanol, sec-butanol, t-butanol, pentanol, hexanol, cyclohexanol, benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol), glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethyelen glycol monomethyl ether acetate, triethylene glycol monomethyl ether, triethylene glycol monoethyl ether, ethylene glycol monophenyl ether), amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, tetramethylpropylenediamine), urea, urea derivatives, and other polar solvents (for example, formamide, N,N-dimethylformamide, N,N-dimethylacetamide, 2-pyrrolidone, N-methyl-2-pyrrolidone, N-vinyl-2-pyrrolidone, 2-oxazolidone, 1,3-dimethyl-2-imidazolidinone, acetonitrile, acetone). The water-soluble organic solvent is a compound which may be liquid or solid at 25°C, and two or more kinds of solvents may be used in combination.
The use amount of the water-soluble organic solvent is preferably 10 to 80% by mass, and more preferably 20 to 60% by mass, of each of the inks according to the invention. The term "water-soluble" as used in the invention means that the solubility in water at 25°C is 1 g/100 g or more.

For the inks obtained by the invention, additives such as a drying preventing agent for preventing clogging due to drying at the ink jetting nozzle, a penetration promoting agent for allowing ink to efficiently penetrate into paper, an ultraviolet absorbent, an antioxidant, a viscosity adjusting agent, a surface tension adjusting agent, a dispersant, a dispersion stabilizer, an antifungal agent, a rust inhibitor, a pH adjusting agent, a defoamer, and a chelating agent, may be appropriately selected and used in appropriate amounts.

As for the drying preventing agent used in the invention, a water-soluble organic solvent having a vapor pressure less than that of water is preferred. Specific examples include polyhydric alcohols represented by ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols, such as ethylene glycol monomethyl (or ethyl) ether, diethylene glycol monomethyl (or ethyl) ether, and triethylene glycol monoethyl (or butyl) ether; heterocyclic rings such as 2-pyrrolidone, N-methyl-2-pyrrolidone, 1,3-dimethyl-2-imidazolidinone and N-ethyhnorpholine; sulfur-containing compounds such as sulfolane, dimethylsulfoxide and 3-sulfolene; polyfunctional compounds such as diacetone alcohol, and diethanolamine; and urea derivatives. Among these, polyhydric alcohols such as glycerin and diethylene glycol are more preferred. The above-described drying preventing agent may be used individually, or may be used in combination of two or more species. These drying preventing agents are preferably incorporated into the ink in an amount of 10 to 50% by mass.
As for the penetration promoting agent used in the invention, alcohols such as ethanol, isopropanol, butanol, di(tri)ethylene glycol monobutyl ether, and 1,2-hexanediol; sodium lauryl sulfate, sodium oleate, nonionic surfactants, or the like may be used. These exhibit sufficient effects when incorporated into the ink in an amount of 10 to 30% by mass, and it is preferable to use the penetration promoting agent in an addition amount in the scope of causing neither the bleeding of printing, nor paper omission (print-through).

As for the ultraviolet absorbent used for enhancing the preservability of image in the invention, the benzotriazole-based compounds described in JP-A Nos. 58-185677, 61-190537, 2-782, 5-197075, 9-34057 and the like; the benzophenone-based compounds described in JP-A Nos. 46-2784 and 5-194483, U.S. Patent No. 3214463, and the like; the cinnamic acid-based compounds described in JP-B Nos. 48-30492 and 56-21141, JP-A No. 10-88106, and the like; the triazine-based compounds described in JP-A Nos. 4-298503, 8-53427, 8-239368 and 10-182621, Japanese Patent Application National Phase Publication No. 8-501291, and the like; the compounds described in Research Disclosure No. 24239; compounds that absorb ultraviolet radiation and emit fluorescence, as represented by stilbene-based compounds and benzoxazole-based compounds, that is, so-called fluorescent whitening agents, may also be used.

According to the invention, as for the antioxidant that is used for enhancing the preservability of image, various organic discoloration preventing agents or metal complex-based discoloration preventing agents may also be used, in addition to the antioxidants described above. Examples of the organic discoloration preventing agents include hydroquinones, alkoxyphenols, dialkoxyphenols, phenols, anilines, amines, indanes, chromans, alkoxyanilines, heterocyclic rings, and the like, and examples of the metal complexes include nickel complexes, zinc complexes, and the like. More specifically, the compounds described in Sections VII-I to J of Research Disclosure (RD) No. 17643; RD No. 15162; page 650, left column of RD No. 18716; page 527 of RD No. 36544; page 872 of RD No. 307105; and RD No. 15162; or the compounds included in the formula and representatively exemplified compounds described in pages 127-137 of JP-A No. 62-215272, may be used.

From the viewpoint of preventing corrosion of the ink according to the invention, it is preferable to further incorporate a preservative into the ink. According to the invention, the preservative means a compound having a function of preventing the generation and growth of microorganisms, particularly bacteria and fungi (also called an antifungal agent).
The following preservatives may be effectively used as the preservatives useful for the invention.

As inorganic preservatives, compounds containing heavy metal ions (silver ion-containing substances or copper complex compounds) or salts thereof may be mentioned with preference. As organic preservatives, various agents such as quaternary ammonium salts (tetrabutylammonium chloride, diisopropylammonium nitrite, cetylpyridinium chloride, dicyclohexylammonium nitrite, benzyltrimethylammonium chloride, and the like), phenol derivatives (phenol, cresol, butylphenol, xylenol, bisphenol, and the like), phenoxy ether derivatives (phenoxyethanol, and the like), heterocyclic compounds (benzotriazole, PROXEL (trade name), 1,2-benzoisothiazolin-3-one, and the like), acid amides, carbamic acid, carbamates, amidine/guanidines, pyridines (sodium pyridinethione-1-oxide, and the like), diazines, triazines, pyrrol/imidazoles, oxazole/oxazines, pentaerythritol tetranitrate, benzotriazoles, thiazole/thiadiazines, thioureas, thiosemicarbazides, dithiocarbamates, sulfides, sulfoxides, sulfones, sulfamides, antibiotic substances (penicillin, tetracycline, and the like), sodium dehydroacetate, sodium benzoate, p-hydroxybenzoic acid ethyl ester, acidic sulfites, sodium thiosulfate, ammonium thioglycolate, 1,2-benzoisothiazolin-3-one and salts thereof, may be used. As for the preservative, the substances described in the Handbook of Antibacterial and Antifungal Agents (Gihodo Shuppan Co., Ltd.: 1986), the Encyclopedia of Antibacterial and Antifungal Agents (edited by the Board of Dictionary Editorial Committee of the Society of Antibacterial and Antifungal Agents, Japan), and the like may also be used.

Regarding these compounds, various compounds such as those having an oil-soluble structure or those having a water-soluble structure may be used, but water-soluble compounds are preferred. Particularly, PROXEL (trade name) or benzotriazole may be preferably used.
Among them, according to the invention, if these preservatives are used in combination of two or more species, jetting stability of the ink over a long time is remarkably enhanced, and the effects of the invention may be more satisfactorily exhibited. When two or more of the preservatives are combined, the preservative species preferably have skeletons of different chemical structures. Furthermore, when two or more preservatives are incorporated, it is preferable that at least one of the preservatives is a heterocyclic compound. For example, a combination of a heterocyclic compound and an antibiotic substance, a combination of a heterocyclic compound and a phenol derivative, and the like may be mentioned with preference. When two species preservatives are combined, the content ratio is not particularly limited, but the ratio is preferably in the range of preservative A/preservative B = 0.01 to 100 (mass ratio).
The amount of addition of the preservative may range widely, but the amount is 0.001 to 10% by mass, preferably 0.02 to 5.00% by mass, and more preferably 0.1 to 5% by mass.

The ink according to the invention may contain a chelating agent for the purpose of trapping and dissolving polyvalent metal ions in the ink. Preferred examples of the chelating agent include the compounds described in paragraphs [0098] to [0099] of JP-A No. 2008-101173. The content of the chelating agent is preferably 0.001 to 1% by mass, more preferably 0.005 to 0.5% by mass and particularly preferably 0.01 to 0.1% by mass, with respect to the ink.

The pH adjusting agent used in the invention may be suitably used in view of controlling pH, imparting dispersion stability and the like, and it is preferable that the pH of the ink at 25°C be adjusted to 4 to 11. If the pH is less than 4, solubility of the dye is decreased, and the nozzle is likely to be clogged. If the pH is higher than 11, water resistance tends to undergo deterioration. As for the pH conditioning agent, there may be mentioned, as basic agents, organic bases, inorganic alkalis and the like, and as acidic agents, organic acids, inorganic acids, and the like.

Examples of the organic bases include triethanolamine, diethanolamine, N-methyldiethanolamine, and dimethylethanolamine. Examples of the inorganic alkalis include hydroxides of alkali metals (for example, sodium hydroxide, lithium hydroxide, potassium hydroxide, and the like), carbonates of alkali metals (for example, sodium carbonate, sodium hydrogen carbonate, and the like), and ammonium. Examples of the organic acids include acetic acid, propionic acid, trifluoroacetic acid, and alkylsulfonic acid. Examples of the inorganic acids include hydrochloric acid, sulfuric acid, and phosphoric acid.

According to the invention, the medium is preferably water, or an aqueous medium which is a mixed solvent of water and a water-soluble organic solvent.
To produce the ink according to the invention, a process for removing solid residues by filtration is important for an enhancement of stability of the ink and an improvement of color hue. This operation uses a filtration filter, and regarding the filtration filter in this case, a filter having an effective diameter of 1 µm or less, preferably 0.05 µm or more and 0.3 µm or less, and even more preferably 0.20 µm or more and 0.3 µm or less is used. As for the material of the filter, various materials may be used, but particularly in the case of an ink of a water-soluble dye, it is preferable to use a filter produced for use with water-based solvents. Among them, it is particularly preferable to use a jacket type filter produced from a polymer material that hardly generates residues. As for the filtering method, the ink may be passed through the jacket by pumping, or alternatively either pressure filtration or vacuum filtration may also be used.
After the filtration, air is often incorporated into the solution. Since foams generated by this air frequently cause disturbances in the images produced upon inkjet recording, a defoaming process may be provided separately in the invention. As for the defoaming method, various methods such as ultrasonic defoaming or reduced pressure defoaming methods may be used.

These operations are preferably carried out by utilizing clean spaces such as clean room or clean bench, so as to prevent incorporation of residues during the operation. According to the invention, this operation is preferably carried out in particular in a space having a degree of cleanness of class 100 or less.
The ink viscosity according to the invention is preferably 3 to 10 mPa·s at 23°C. If the viscosity exceeds 10 mPa·s, the rate of fixation of the recorded image decreases, and the jetting performance also tends to decrease. If the viscosity is less than 3 mPa·s, the definition may decrease because the recorded image bleeds.

Control of the viscosity may be arbitrarily achieved by adjusting the amount of addition of the ink solvent. Examples of the ink solvent include glycerin, diethylene glycol, triethanolamine, 2-pyrrolidone, diethylene glycol monobutyl ether, triethylene glycol monobutyl ether, and the like.

The method for measuring the viscosity is described in detail in JIS Z8803, but the viscosity can be conveniently measured with a commercially available viscometer. For example, there are available rotary type viscometers such as B type viscometer and E type viscometer manufactured by Tokyo Keiki, Inc. In the present invention, the viscosity was measured at 23°C using a vibration type viscometer, VM-100A-L, manufactured by Yamaichi Electronics Co., Ltd. The unit of viscosity is pascal-second (Pa·s), but usually the unit millipascal·second (mPa·s) is used.

The respective inks used in the invention preferably have a static surface tension at 23°C of 25 to 40 mN/m. The static surface tension at 23°C is more preferably from 30 to 40 mN/m. If the static surface tension of the ink exceeds 40 mN/m, there may occur marked decreases in the printing quality, such as a decrease in the jetting stability, occurrence of bleeding at the time of color mixing, and generation of feathering (for example, in the case where black characters are printed on a cyan solid image, or the like, thread-like bleeding from the black characters may occur). Furthermore, if the static surface tension of the ink is less than 25 mN/m, printing defects may occur due to the adhesion of ink to hard surfaces at the time of jetting.

As for the method for measuring the static surface tension, a capillary rise method, a sessile drop method, a ring method and the like are known, but in the invention, a vertical plate method is used as the method for measuring the static surface tension. The principle of the vertical plate method will be described below.
When a thin plate made of glass or platinum is partially submerged in a liquid and is suspended vertically, the surface tension at the part where the liquid surface and the plate contact works downward. This surface tension may be measured by balancing with the upward force that is suspending the plate.
The dynamic surface tension at 23°C of the ink used in the invention is preferably from 25 to 40 mN/m, and more preferably from 30 to 40 mN/m. If the dynamic surface tension exceeds 40 mN/m, there may occur marked decreases in the printing quality, such as a decrease in the jetting stability, occurrence of bleeding at the time of color mixing, and generation of feathering. Furthermore, if the dynamic surface tension is less than 25 mN/m, printing defects may occur due to the adhesion of ink to hard surfaces at the time of jetting.

As for the method for measuring the dynamic surface tension, for example, a vibrating jet method, a falling meniscus method, a maximum bubble pressure method, and the like are known, as described in "New Lectures on Experimental Chemistry (in Japanese), Vol. 18, Interface and Colloids," [Maruzen Corp., p. 69-90 (1977)], and a liquid film destruction method as described in JP-a No. 3-2064 is also known. However, in the invention, a bubble pressure difference method is used as the method for measuring the dynamic surface tension. Hereinafter, the principle and method of measurement will be explained.
A solution containing a surfactant is made uniform by stirring, and when air bubbles are generated in the solution, a new gas-liquid interface is generated, and the surfactant molecules in the solution gather at the water surface at a constant speed. When the bubble rate (rate of air bubble generation) is changed, if the rate of generation is decreased, more surfactant molecules gather at the surfaces of the bubbles. Thus, the maximum bubble pressure immediately before bubbles burst is decreased, and the maximum bubble pressure (surface tension) with respect to the bubble rate may be detected. In the measurement of the dynamic surface tension according to the invention, air bubbles are generated in a solution using two probes, one large and one small, the pressure difference between the two probes in the maximum bubble pressure state is measured, and thus the dynamic surface tension is calculated.

The adjustment of the static surface tension and the dynamic surface tension may be carried out using a surface tension adjusting agent, and the surface tensions may be adjusted to the above-described ranges.
As the surface tension adjusting agent, nonionic, cationic or anionic surfactants may be mentioned. Examples fo the anionic surfactants include fatty acid salts, alkylsulfuric acid ester salts, alkylarylsulfonic acid salts (for example, alkylbenzenesulfonates, petroleum sulfonates, and the like), dialkylsulfosuccinic acid salts, alkylphosphoric acid ester salts, naphthalenesulfonic acid formalin condensate, polyoxyethylene alkylsulfuric acid ester salts, and the like. Examples of the nonionic surfactants include acetylene-based diols (for example, 2,4,7,9-tetramethyl-5-decyne-4,7-diol, and the like), polyoxyethylene alkyl ethers (for example, polyoxyethylene decyl ether, ethylene oxide adducts of acetylene-based diols, and the like), polyoxyethylene fatty acid esters, sorbitan fatty acid esters, polyoxyethylene sorbitan fatty acid esters, polyoxyethylene alkylamine, glycerin fatty acid esters, oxyethylene-oxypropylene block copolymers, and the like.

Furthermore, amine oxide type amphoteric surfactants such as N,N-dimethyl-N-alkylamine oxide are also preferable. The substances described as surfactants in JP-ANo. 59-157636, pp. (37)-(38), and Research Disclosure No. 308119 (1989) may also be used.
Since it is difficult for precipitation or separation from the respective inks to occur, and the foaming property is small, anionic surfactants in which the hydrophobic moiety consists of two chains, or the hydrophobic moiety is branching; anionic or nonionic surfactants having a hydrophilic group in the vicinity of the center of the hydrophobic moiety; or nonionic surfactants in which the hydrophobic moiety consists of two chains, or the hydrophobic moiety is branching, are preferred.
The content of the surfactant for this purpose is 0.001 to 15% by mass, preferably 0.005 to 10% by mass, more preferably 0.01 to 5% by mass, with respect to the ink.

An image formed by using the ink set including the respective inks according to the invention also has the ink bleeding suppressed to a low level. According to a typical aspect of the invention, in an image receiving material which has an ink receiving layer containing inorganic fine particles (for example, white inorganic pigment particles) on a support, bleeding is at a level where visual inspection is impossible at a distance of distinct vision. In an image receiving material having a gelatin-containing curable layer as an image recording layer, bleeding is at a level where visual inspection is impossible at a distance of distinct vision. Particularly, even if the image is stored under the conditions of high humidity and high temperature, the image drawn using the respective inks according to the invention has excellent bleeding resistance.
The causes of bleeding are related to the nature of the dye, as well as to various factors such as the content and type of an auxiliary solvent that is added for controlling the ink properties or preventing dryness, for example, glycerin, diethylene glycol or triethylene glycol monobutyl ether, the amount of residual solvent, the image structure, and the state of overlapping for secondary colors (red and blue). In order to ameliorate the bleeding problem in an ink prescription, it is effective to achieve reduction of the amount of the auxiliary solvent and optimization of the surface tension of the ink (30 to 37 mN/m, and preferably 30 to 35 mN/m), in addition to making a good selection of the dye.

The degree of bleeding may vary with the image receiving paper, but the inks according of the invention are advantageous in that bleeding does not occur even though the type of the image receiving paper is changed. In order to improve bleeding by the ink composition, it is preferable to use a solvent having low solubility with respect to the dye.
In the case of the dyes according to the invention, it is preferable to use, for example, glycerin or PFG (propylene glycol monopropyl ether). Another method for improving bleeding is to strengthen the mordanting force, or in other words, to introduce an anchor compound for mordant. Specifically, it is effective to strengthen the interaction between a mordant and a dye, and this is achieved by using a betaine compound.

Furthermore, in regard to the method for preparing an ink for inkjet recording, the details are described in JP-A Nos. 5-148436, 5-295312, 7-97541, 7-82515 and 7-118584, and these methods may also be used in the preparation of the inks for inkjet recording according to the invention.

The materials for recording an image using the ink set of the invention will be explained. According to the invention, use may be made of known materials for recording, that is, ordinary paper, resin-coated paper, the inkjet-exclusive papers described in, for example, JP-A Nos. 8-169172, 8-27693, 2-276670, 7-276789, 9-323475, 62-238783, 10-153989, 10-217473,10-235995, 10-337947, 10-217597, 10-337947 and the like, films, electrophotographic common-use paper, cloth, glass, metal, porcelain, and the like.

Hereinafter, the recording paper and recording film that are used in inkjet printing using the ink set of the invention will be described. For the support in the recording paper and recording film, use may be made of products that are formed from chemical pulp such as LBKP or NBKP; mechanical pulp such as GP, PGW, RMP, TMP, CTMP, CMP or CGP; recycled pulp such as DIP; or the like, mixed with additives such as conventionally known additives such as a pigment, a binder, a sizing agent, a fixing agent, a cationic agent and a paper force enhancing agent, as necessary, and produced by various apparatuses such as a Fourdrinier paper machine and a cylinder paper machine. The support may also be any of synthetic papers and plastic film sheets in addition to these supports, and it is desirable that the support has a thickness of 10 to 250 µm, and a basis weight of 10 to 250 g/m².

Such a support may be provided with an ink receiving layer and a back coat layer directly on the surface, and used as an image receiving material for the ink according to the invention, or a support may be provided with a size press layer or an anchor coat layer formed from starch, polyvinyl alcohol or the like, and then provided with an ink receiving layer and a back coat layer for use as an image receiving material. The support may be further subjected to a flattening treatment by means of a calendar machine such as a machine calendar, a TG calendar, or a soft calendar.
As for the support according to the invention, a paper and a plastic film laminated with polyolefin (for example, polyethylene, polystyrene, polybutene and copolymers thereof) or polyethylene terephthalate on both sides are more preferably used. It is preferable to add a white pigment (for example, titanium oxide or zinc oxide) or a coloring dye (for example, cobalt blue, indigo or neodymium oxide) into the polyolefin.

The ink receiving layer provided on the support will be described.
The ink receiving layer contains a porous material or an aqueous binder. Furthermore, the ink receiving layer preferably contains a pigment in the form of inorganic fine particles, and the pigment is preferably a white pigment. Examples of the white pigment include inorganic white pigments such as calcium carbonate, kaolin, talc, clay, acid earth, synthetic amorphous silica, aluminum silicate, magnesium silicate, calcium silicate, aluminum hydroxide, alumina, lithopone, zeolite, barium sulfate, calcium sulfate, titanium dioxide, zinc sulfide and zinc carbonate; organic pigments such as styrene-based pigments, acrylic pigments, urea resins and melamine resins, and the like. Particularly, porous white inorganic pigments are preferable, and especially synthetic amorphous silica having a large area of fine pores, and the like are suitable. As for the synthetic amorphous silica, both silicic anhydride that is obtained according to a dry production method (gas phase method), and hydrous silicic acid that is obtained according to a wet production method may be used.

As the recording paper containing the pigments in the ink receiving layer, specifically, those disclosed in JP-A Nos. 10-81064, 10-119423, 10-157277, 10-217601, 11-348409, 2001-138621, 2000-43401, 2000-211235, 2000-309157, 2001-96897, 2001-138.627, 11-91242, 8-2087, 8-2090, 8-2091, 8-2093, 8-174992, 11-192777, 2001-301314 and the like may be used.

Examples of the aqueous binder contained in the ink receiving layer include water-soluble polymers such as polyvinyl alcohol, silanol-modified polyvinyl alcohol, starch, cationized starch, casein, gelatin, carboxymethylcellulose, hydroxyethylcellulose, polyvinylpyrrolidone, polyalkylene oxide and polyalkylene oxide derivatives; water-dispersible polymers such as styrene-butadiene latex, and acrylic emulsions; and the like. These aqueous binders may be used individually or in combination of two or more species. According to the invention, among these aqueous binders, polyvinyl alcohol and silanol-modified polyvinyl alcohol are particularly suitable from the viewpoints of adhesiveness to the pigment and peeling resistance of the ink receiving layer.
The ink receiving layer may contain, in addition to the pigment and the aqueous binder, a mordant, a water resistant additive, a light-fastness improving agent, a gas-fastness improving agent, a surfactant, a film hardening agent, and other additives.
The mordant that is added to the ink receiving layer is preferably immobilized. For that purpose, a polymeric mordant is preferably used in view of preventing bleeding.

The polymeric mordant is described in JP-ANos. 48-28325, 54-74430, 54-124726, 55-22766, 55-142339, 60-23850, 60-23851, 60-23852, 60-23853, 60-57836, 60-60643, 60-118834, 60-122940, 60-122941, 60-122942, 60-235134, and 1-161236, U.S. Patent Nos. 2484430,2548564,3148061,3309690,4115124,4124386,4193800,4273853, 4282305, and 4450224. An image receiving material containing the polymeric mordant described in JP-A No. 1-161236, pages 212-215, is particularly preferred. When the polymeric mordant described in that document is used, a high-quality image free of bleeding is obtained, and further the light fastness of the image is improved.
The water resistant additive is effective for giving water resistant properties to the image and as such water resistant additive, cationic resins are particularly preferred. Examples of these cationic resins include polyamide polyamine epichlorohydrin, polyethyleneimine, polyaminesulfone, dimethyldiallylammonium chloride polymer, cation polyacrylamide, and the like. The content of these cationic resins is preferably 1 to 15% by mass, and particularly preferably 3 to 10% by mass, relative to the total solid content of the ink receiving layer.

As the light fastness improving agent and the gas fastness improving agent, phenol compounds, hindered phenol compounds, thioether compounds, thiourea compounds, thiocyanic acid compounds, amine compounds, hindered amine compounds, TEMPO compounds, hydrazine compounds, hydrazide compounds, amidine compounds, vinyl group-containing compounds, ester compounds, amide compounds, ether compounds, alcohol compounds, sulfinic acid compounds, sugars, water-soluble reducing compounds, organic acids, inorganic acids, hydroxy group-containing organic acids, benzotriazole compounds, benzophenone compounds, triazine compounds, heterocyclic compounds, water-soluble metal salts, organic metal compounds, metal complexes, and the like may be mentioned.
Specific examples of these compounds include those described in JP-A Nos. 10-182621, 2001-260519 and 2000-260519, JP-B Nos. 4-34953, 4-34513 and 4-34512, JP-A Nos. 11-170686, 60-67190, 7-276808 and 2000-94829, Japanese Patent Application National Phase Publication No. 8-512258, JP-A No. 11-321090 and the like.

The surfactant functions as a coating aid, a peelability improving agent, a slipping property improving agent or an antistatic agent. Descriptions on the surfactant are given in JP-A Nos. 62-173463 and 62-183457.
An organic fluoro compound may be used instead of the surfactant. The organic fluoro compound is preferably hydrophobic. Examples of the organic fluoro compound include fluorine-based surfactants, oily fluorine-based compounds (for example, fluorine oil) and solid fluorine compound resins (for example, tetrafluoroethylene resin). The organic fluoro compounds are described in JP-B No. 57-9053 (Columns 8 to 17), JP-A Nos. 61-20994 and 62-135826.
As for the film hardening agent, the materials described in page 222 of JP-A No. 1-161236, JP-A Nos. 9-263036, 10-119423 and 2001-310547, and the like may be used.
The other additives that are added to the ink receiving layer, include a pigment dispersant, a thickener, a defoamer, a dye, a fluorescent whitening agent, a preservative, a pH adjusting agent, a mat agent, a film hardening agent, and the like. Furthermore, the ink receiving layer may be composed of a single layer or two layers.
The recording paper and the recording film may also be provided with a back coat layer, and the components that may be added to this layer include a white pigment, an aqueous binder and other components.

Examples of the white pigment contained in the back coat layer include white inorganic pigments such as light calcium carbonate, heavy calcium carbonate, kaolin, talc, calcium sulfate, barium sulfate, titanium dioxide, zinc oxide, zinc sulfate, zinc carbonate, satin white, aluminum silicate, diatomaceous earth, calcium silicate, magnesium silicate, synthetic amorphous silica, colloidal silica, colloidal alumina, pseudoboehmite, aluminum hydroxide, alumina, lithopone, zeolite, hydrated halloysite, magnesium carbonate and magnesium hydroxide; organic pigments such as styrene-based plastic pigments, acrylic plastic pigments, polyethylene, microcapsules, urea resins and melamine resins; and the like.
Examples of the aqueous binder contained in the back coat layer include water-soluble polymers such as styrene/maleic acid salt copolymers, styrene/acrylic acid salt copolymers, polyvinyl alcohol, silanol-modified polyvinyl alcohol, starch, cationized starch, casein, gelatin, carboxymethylcellulose, hydroxyethylcellulose and polyvinyl pyrrolidine; water-dispersible polymers such as styrene-butadiene latex and acrylic emulsions; and the like. Examples of the other components contained in the back coat layer include a defoamer, an antifoaming agent, a dye, a fluorescent whitening agent, a preservative, a water resistant additive, and the like.

The constituent layers (including the back coat layer) of the inkjet recording paper and the recording film may contain polymer fine particle dispersion added thereto. The polymer fine particle dispersion is used for improvement of film properties such as stabilization of dimension, prevention of curling, prevention of adhesion, and prevention of cracks in the film. The polymer fine particle dispersion is described in JP-A Nos. 62-245258, 62-1316648 and 62-110066. If a polymer fine particle dispersion having a low glass transition temperature (40°C or lower) is added to a layer containing a mordant, cracks or curling of the layer may be prevented. Furthermore, if a polymer fine particle dispersion having a high glass transition temperature is added to the back coat layer, curling may be prevented.
The use of the ink set including the inks of the invention is not restricted by the inkjet recording system, and the ink set is used in any known systems, for example, an electric charge control system, by which ink is jetted using an electrostatic attractive force; a drop-on-demand system (pressure pulse system), by which ink is jetted using the oscillating pressure of a piezoelectric element; an acoustic inkjet system, by which electric signals are converted to an acoustic beam and irradiated to ink, and thereby the ink is jetted using radiation pressure; a thermal inkjet (BUBBLEJET (registered trademark)) system, by which ink is jetted using a pressure generated by heating the ink and thus forming air bubbles; and the like.
The inkjet recording systems include a system of jetting a large number of droplets of small volumes of a low-density ink called photo-ink, a system of improving the image quality by using plural of inks having substantially the same color at different concentrations, or a system of using a colorless transparent ink.

### EXAMPLES

Hereinafter, the invention will be described more specifically by way of Examples. The scope of the invention is not intended to be limited to the specific examples set forth below. Furthermore, unless stated otherwise, the units "part" and "%" are on a mass basis.

### Example 1

### <Production of ink set>

### (Preparation of yellow ink Y-101)

Ion exchanged water was added to the following components in an amount to make the total amount 1000 g and then stirred for one hour while heating at temperature of 30 to 40°C. Subsequently, the resultant mixture was subjected to pressure filtration through a microfilter having an average pore size of 0.2 µm, to prepare a yellow ink (Y-101).

### [Prescription of yellow ink Y-101]

| (Solid components) | |
|---|---|
| Yellow dye (potassium salt of a yellow dye Y-1 represented by the following structural formula) | 60.0 g |
| PROXEL XL-2 (trade name, manufactured by Arch Chemicals Japan, Inc.) | 1.0 g |

| (Liquid components) | |
|---|---|
| Glycerin | 81 g |
| Triethylene glycol | 96 g |
| Triethylene glycol monobutyl ether | 91 g |
| Propylene glycol | 3 g |
| ORFIN E1010 (trade name, manufactured by Nisshin Chemical Co., Ltd.; ethylene oxide (10 moles) adduct of acetylenediol (nonionic surfactant)) | 20 g |

| (Antioxidant) | |
|---|---|
| Methionine sulfoxide | 50 g |
| Ion exchanged water | 598 g (added to adjust the entire system to 1000 g) |

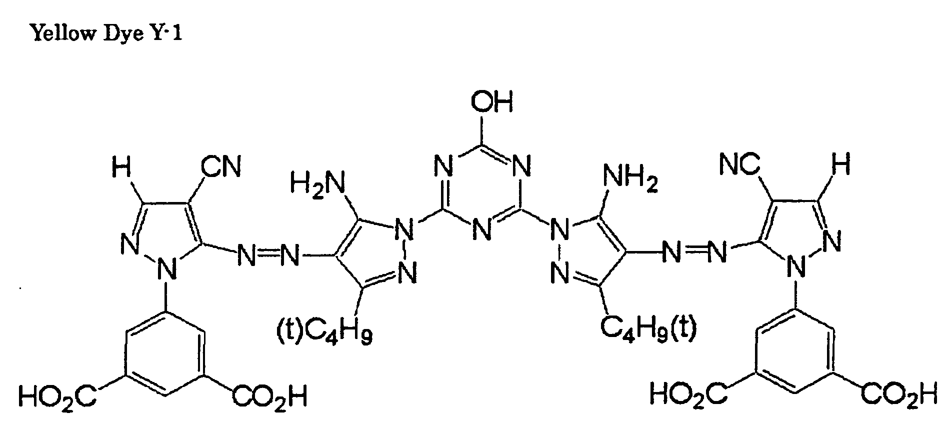

### (Preparation of magenta ink M-101)

Ion exchanged water was added to the following components in an amount to make the total amount 1000 g and then stirred for one hour while heating at temperature of 30 to 40°C. Subsequently, the resultant mixture was subjected to pressure filtration through a microfilter having an average pore size of 0.2 µm, to prepare a magenta ink (M-101).

### [Prescription of magenta ink M-101]

| (Solid components) | |
|---|---|
| Magenta dye (a magenta dye M-1 represented by the following structural formula) | 30.0 g |
| Urea | 48.0 g |
| PROXEL XL-2 (trade name, manufactured by Arch Chemicals Japan, Inc.) | 1.0 g |

| (Liquid components) | |
|---|---|
| Glycerin | 84.0 g |
| Triethylene glycol | 20.0 g |
| Triethylene glycol monobutyl ether | 99.0 g |
| Propylene glycol | 3.0 g |
| Betaine compound W-1 shown below | 17.0 g |

| (Antioxidant) | |
|---|---|
| Methionine sulfoxide | 50 g |
| Ion exchanged water | 648 g (added to adjust the entire system to 1000 g) |

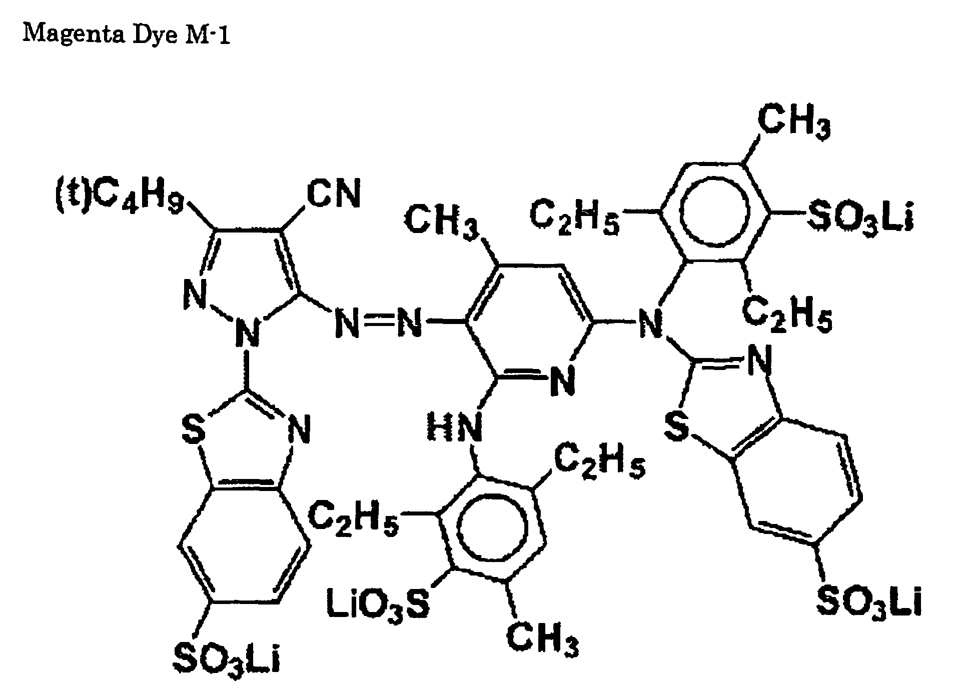

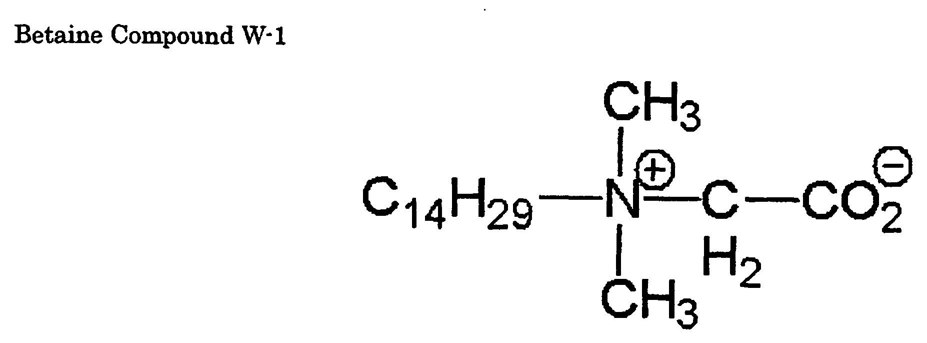

### (Preparation of cyan ink C-101)

Ion exchanged water was added to the following components in an amount to make the total amount 1000 g and then stirred for one hour while heating at temperature of 30 to 40°C. Subsequently, the resultant mixture was subjected to pressure filtration through a microfilter having an average pore size of 0.2 µm, to prepare a cyan ink (C-101).

### [Prescription of cyan ink C-101]

| (Solid components) | |
|---|---|
| Cyan dye (a cyan dye C-1 represented by the following structural formula) | 54.0 g |
| Urea | 41.0 g |
| PROXEL XL-2 (trade name, manufactured by Arch Chemicals Japan, Inc.) | 1.0 g |

| (Liquid components) | |
|---|---|
| Glycerin | 91 g |
| Triethylene glycol | 18 g |
| Triethylene glycol monobutyl ether | 94 g |
| Propylene glycol | 3 g |
| 1, 2-Hexanediol | 12 g |
| 2-Pyrrolidonel | 27 g |
| ORFIN E1010 (trade name, manufactured by Nisshin Chemical Co., Ltd.; ethylene oxide (10 moles) adduct of acetylenediol (nonionic surfactant)) | 10 g |

| (Antioxidant) | |
|---|---|
| Methionine sulfoxide | 50.0 g |
| Ion exchanged water | 599 g (added to adjust the entire system to 1000 g) |

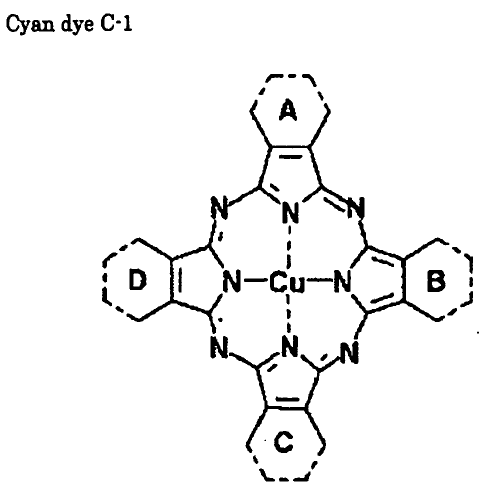

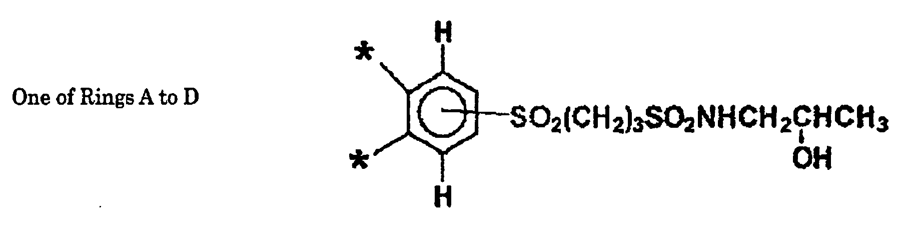

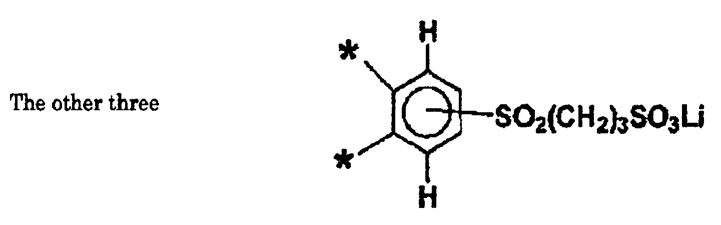

The mark * indicates a bond site of the phthalocyanine ring.

### (Preparation of black ink Bk-101)

Ion exchanged water was added to the following components in an amount to make the total amount 1000 g and then stirred for one hour while heating at temperature of 30 to 40°C. Subsequently, the resultant mixture was subjected to pressure filtration through a microfilter having an average pore size of 0.2 µm, to prepare a black ink (Bk-101).

### [Prescription of black ink Bk-10]

| (Solid components) | |
|---|---|
| Black dye 1 (main dye for black color Bk-1 shown below) | 62.0 g |
| Black dye 2 (complementary dye for black color Bk-2 shown below) | 10.0 g |
| PROXEL XL-2 (trade name, manufactured by Arch Chemicals Japan, Inc.) | 1.0 g |

| (Liquid components) | |
|---|---|
| Glycerin | 83 g |
| Triethylene glycol | 8 g |
| Triethylene glycol monobutyl ether | 84 g |
| Propylene glycol | 3 g |
| 1, 2-Hexanediol | 16 g |
| ORFIN E1010 (trade name, manufactured by Nisshin Chemical Co., Ltd.; ethylene oxide (10 moles) adduct of acetylenediol (nonionic surfactant)) | 10 g |

| (Antioxidant) | |
|---|---|
| Methionine sulfoxide | 50 g |

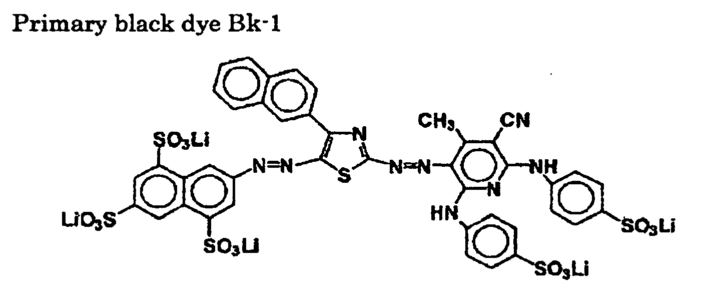

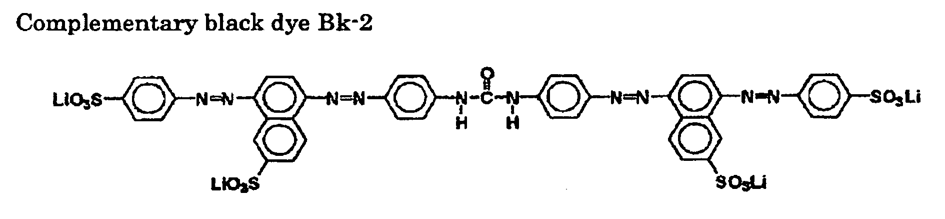

### <Production of ink set 1>

An ink set 1 including the yellow ink Y-101, magenta ink M-101, cyan ink C-101 and black ink Bk-101 obtained as described above, was produced.

### [Comparative Example 1, Example 2]

### (Preparation of yellow ink Y-102, magenta ink M-102, cyan ink C-102 and black ink Bk-102)

A yellow ink Y-102 was prepared in the same manner as in Example 1, except that the methionine sulfoxide used as an antioxidant for the yellow ink Y-101 in the ink set I of Example 1 was excluded.
Similarly, a magenta ink M-102, a cyan ink C-102 and a black ink Bk-102 were prepared in the same manner as in Example 1, except that the methionine sulfoxide used as an antioxidant was excluded from the magenta ink M-101, cyan ink C-101 and black ink Bk-101 of the ink set 1 of Example 1.

### (Preparation of yellow ink Y-103, magenta ink M-103, cyan ink C-103 and black ink Bk-103)

A yellow ink Y-103, a magenta ink M-103, a cyan ink C-103 and a black ink Bk-103 were prepared in the same manner as in Example 1, except that the methionine sulfoxide used as an antioxidant for the yellow ink Y- 101, magenta ink M-101, cyan ink C-101 and black ink Bk-101 of the ink set 1 of Example 1, was changed to a thioether compound (3,6-dithia-1,8-octanediol).

### (Preparation of yellow inks Y-104 to 106, magenta inks M-104 to 106, cyan inks C-104 to 106 and black inks Bk-104 to 106)

Yellow inks Y-1 04 to 106 were prepared in the same manner as in Example 1, except that the amount of addition, 50 g (5% by mass), of the methionine sulfoxide used as an antioxidant for the yellow ink Y-101 in the ink set 1 of Example 1 was changed to 10g (1% by mass), 180 g (18% by mass), and 220 g (22% by mass), respectively.
Similarly, magenta inks M-104 to 106, cyan inks C-104 to 106 and black inks Bk-104 to 106 were prepared.

### <Production of ink sets 2 to 10>

Ink sets 2 to 10 were produced by including a combination of the yellow inks, magenta inks, cyan inks and black inks obtained above, as shown in Table 2.

### <Image recording>

The ink sets 1 to 10 shown in Table 2 were respectively filled in DRY MINILAB 400 (trade name) ink cartridges manufactured by FUJIFILM Corporation, and recording was performed using an inkjet image receiving paper, "KASSAI" roll paper, manufactured by FUJIFILM Corporation, under the environment of 23°C and 50% RH.
Samples having a single color of magenta and having different print densities, and samples having composite gray formed by the four colors of yellow, magenta, cyan and black, and having different print densities, were produced using the ink sets 1 to 10, and the following image evaluation was performed.

### 1. Evaluation of ozone resistance (single color of magenta)

The image density Ci of an area where the reflected density (M) immediately after printing was about 0.8, was measured using an X-RITE 310 (trade name), and then the sample was left to stand for 5 days in a box set at an ozone gas concentration of 5 ppm. The image density (Cf) after standing in the ozone gas was measured using a reflection densitometer (trade name: X-RITE 310TR), and the ratio of residual dye, Cf/Ci x 100, was obtained and evaluated according to the following evaluation criteria.

### (Evaluation criteria)

Evaluation 1: The ratio of residual dye is 90% or more.
Evaluation 2: The ratio of residual dye is 80% or more and less than 90%.
Evaluation 3: The ratio of residual dye is 70% or more and less than 80%.
Evaluation 4: The ratio of residual dye is less than 70%.

### 2. Evaluation of ozone resistance (composite gray)

The image density Ci of an area in a composite gray image, where the reflected density (M) immediately after printing was about 0.8, was measured using an X-RITE 310 (trade name), and then the sample was left to stand for 5 days in a box set at an ozone gas concentration of 5 ppm. The image density (Cf) after standing in the ozone gas was measured using a reflection densitometer (trade name: X-RITE 310TR), and the ratio of residual dyes, Cf/Ci x 100, was obtained and evaluated according to the following evaluation criteria.

### (Evaluation criteria)

Evaluation 1: The ratio of residual dyes is 90% or more.
Evaluation 2: The ratio of residual dyes is 80% or more and less than 90%.
Evaluation 3: The ratio of residual dyes is 70% or more and less than 80%.
Evaluation 4: The ratio of residual dyes is less than 70%.

### 3. Ink jetability test

The jetability of the respective inks was evaluated by the following method.
Upon exchanging the ink set, head cleaning was performed three times, in order to replace the inks remaining inside the inkjet head, for which testing had been completed, with newly set inks. Subsequently, a nozzle check pattern was printed, and if ink was not jetted from all of the nozzles of all colors, head cleaning was performed again, and then a nozzle check pattern was printed. This operation was repeated, and the number of head cleanings required to make inks come out from all of the nozzles of yellow, magenta, cyan and black colors, was counted and evaluated according to the following evaluation criteria.

### (Evaluation criteria)

Evaluation 1: Zero times of head cleaning (jetting from all of the nozzles after the standard three times of cleaning)
Evaluation 2: 1 to 2 times of head cleaning
Evaluation 3: 3 to 4 times of head cleaning
Evaluation 4: 4 or more times of head cleaning
The evaluation results will be presented in the following.

**Table 1**

| Ink | Antioxidant (% by mass) | |
|---|---|---|
| | Methionine sulfoxide | Thioether compound |
| Y-101 | 5 | - |
| Y-102 | 0 | - |
| Y-103 | - | 5 |
| Y-104 | 1 | - |
| Y-105 | 18 | - |
| Y-106 | 22 | - |
| M-101 | 5 | - |
| M-102 | 0 | - |
| M-103 | - | 5 |
| M-104 | 1 | - |
| M-105 | 18 | - |
| M-106 | 22 | - |
| C-101 | 5 | - |
| C-102 | 0 | - |
| C-103 | - | 5 |
| C-104 | 1 | - |
| C-105 | 18 | - |
| C-106 | 22 | - |
| BK-101 | 5 | - |
| BK-102 | 0 | - |
| BK-103 | - | 5 |
| BK-104 | 1 | - |
| BK-105 | 18 | - |
| BK-106 | 22 | - |

**Table 2**

| Ink set | Ink | | | | Evaluation | | | Remaks |
|---|---|---|---|---|---|---|---|---|
| | Y | M | C | Bk | Ozone | resistance | | |
| | | | | | Single color of magenta | Magenta in gray | Jetability | |
| 1 | Y-101 | M-101 | C-101 | Bk-101 | 1 | 1 | 1 | Invention |
| 2 | Y-102 | M-102 | C-102 | Bk-102 | 2 | 3 | 3 | * |
| 3 | Y-102 | M-101 | C-102 | Bk-102 | 1 | 3 | 3 | * |
| 4 | Y-101 | M-101 | C-102 | Bk-102 | 1 | 1 | 2 | Invention |
| 5 | Y-102 | M-101 | C-101 | Bk-102 | 1 | 1 | 2 | Invention |
| 6 | Y-103 | M-103 | C-103 | Bk-103 | 1 | 1 | 1 | Invention |
| 7 | Y-101 | M-101 | C-101 | Bk-102 | 1 | 1 | 1 | Invention |
| 8 | Y-104 | M-104 | C-104 | Bk-104 | 2 | 2 | 1 | Invention |
| 9 | Y-105 | M-105 | C-105 | Bk-105 | 1 | 1 | 1 | Invention |
| 10 | Y-106 | M-106 | C-106 | Bk-106 | 1 | 1 | 1 | Invention |

| | | | | | | | | |
|---|---|---|---|---|---|---|---|---|
| * means Comparative Example | | | | | | | | |

From the results in Table 1 and Table 2, it is understood that when image recording is performed using the ink set of the invention, high-quality images having excellent ozone resistance of not only the single color of magenta but also the magenta color in gray are obtained, and jetability is also conspicuously improved.

## Claims

1. An ink set comprising a yellow ink, a magenta ink and a cyan ink, wherein the magenta ink and at least one of the yellow ink or the cyan ink each contain an antioxidant having a sulfur atom in the molecule thereof, and the magenta ink contains a dye represented by the following formula (M-1): 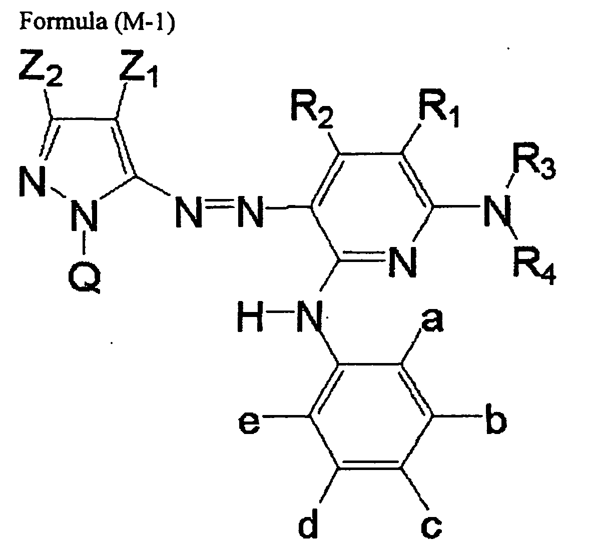 wherein, in formula (M-1), R₁ and R₂ each independently represent a hydrogen atom, a halogen atom, an aliphatic group, an aryl group, a heterocyclic group, a cyano group, a carboxyl group, a carbamoyl group, an alkoxycarbonyl group, an aryloxycarbonyl group, an acyl group, a hydroxy group, an alkoxy group, an aryloxy group, a silyloxy group, an acyloxy group, a carbamoyloxy group, a heterocyclic oxy group, an alkoxycarbonyloxy group, an aryloxycarbonyloxy group, an alkylamino group, an arylamino group, a heterocyclic amino group, an acylamino group, a ureido group, a sulfamoylamino group, an alkoxycarbonylamino group, an aryloxycarbonylamino group, an alkyl- or arylsulfonylamino group, an aryloxycarbonylamino group, a nitro group, an alkyl- or arylthio group, an alkyl- or arylsulfonyl group, an alkyl- or arylsulfinyl group, a sulfamoyl group, a sulfo group, or a heterocyclic thio group; R₃ and R₄ each independently represent a hydrogen atom, an aliphatic group, an aryl group, a heterocyclic group, an acyl group, an alkoxycarbonyl group, an aryloxycarbonyl group, a carbamoyl group, an alkylsulfonyl group, an arylsulfonyl group, or a sulfamoyl group, and R₁ and R₂, or R₃ and R₄ may be linked to form a 5- or 6-membered ring; a and e each independently represent an alkyl group, an alkoxy group or a halogen atom, but if a and e are both alkyl groups, the total number of carbon atoms constituting the alkyl groups is 3 or more, and these alkyl groups may be further substituted; b, c and d each independently have the same meanings as those defined for R₁ and R₂, and a and b, or e and d may form a condensed ring with each other; Z₁ represents an electron withdrawing group having a Hammett substituent constant σp value of 0.20 or more; Z₂ represents a hydrogen atom, an aliphatic group, an aryl group or a heterocyclic group; and Q represents a hydrogen atom, an aliphatic group, an aryl group, or a heterocyclic group, provided that the formula (M-1) has at least one ionic hydrophilic group.

2. The ink set according to claim 1, wherein both the yellow ink and the cyan ink contain an antioxidant having a sulfur atom in the molecule thereof.

3. The ink set according to claim 1or 2, further comprising a black ink.

4. The ink set according to any one of claims 1 to 3, wherein the antioxidant is a compound having a thioether structure or a sulfoxide structure.

5. The ink set according to any one of claims 1 to 4, wherein the antioxidant is a compound represented by the following formula (1a):
R₁-(S-R₃)ₘ-S-R₂ Formula (1a)
wherein, in formula (1a), R₁ and R₂ each independently represent a hydrogen atom, a substituted or unsubstituted alkyl group, a substituted or unsubstituted aryl group, or a group containing a substituted or unsubstituted alkyl or aryl group, and R₁ and R₂ may be identical or different, and may be linked to form a ring, provided that at least one of R₁ or R₂ is an alkyl group substituted with a hydrophilic group or a basic nitrogen atom-containing group, or a group containing such an alkyl group; R₃ is an alkylene group which may be substituted, and optionally represents an alkylene group having an oxygen atom; m represents an integer from 0 to 10, and when m is 1 or more, the at least one sulfur atom linked to R₃ may be a sulfoxide group or a sulfonyl group; and R₁ and R₂ may each be a residue of a polymer.

6. The ink set according to any one of claims 1 to 4, wherein the antioxidant is a compound having a sulfoxide structure represented by the following formula (Ib):

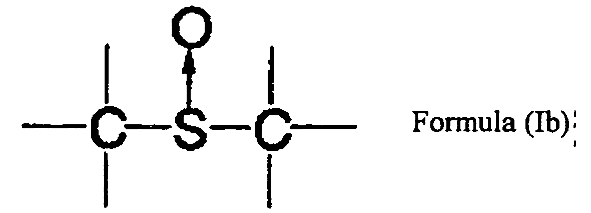

7. The ink according to any one of claims 1 to 6, wherein the antioxidant is a compound represented by formula (2): 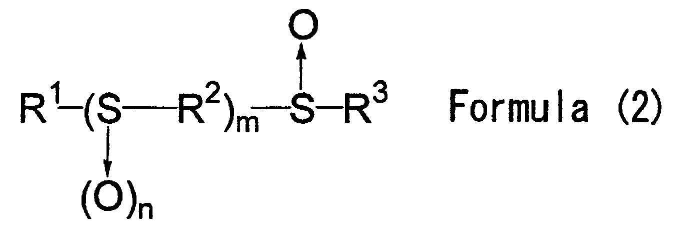 wherein, in formula (2), R¹ and R³ each independently represent a substituted or unsubstituted alkyl group, a substituted or unsubstituted aryl group, a substituted or unsubstituted heterocyclic group, or a polymer residue comprising at least one of these groups; R¹ and R³ may be the same as or different from each other; R¹ and R³ may combine with each other to form a ring; R² represents a substituted or unsubstituted bi- to hexa-valent linking group; R¹ and R², or R² and R³ may combine with each other to form a ring; m is 0 or an integer of 1 or greater; n is 0 or 1; at least one of R¹, R², or R³ represents an alkyl group, an aryl group, a heterocyclic group, or a polymer residue each of which is substituted by a hydrophilic group selected from the group consisting of a substituted or unsubstituted amino group, a substituted or unsubstituted carbamoyl group, a substituted or unsubstituted sulfamoyl group, a substituted or unsubstituted ammonium, a hydroxyl group, a sulfonic acid, a carboxylic acid, a phosphoric acid, an ethyleneoxy group, and a substituted or unsubstituted nitrogen-containing heterocycle.

8. The ink set according to any one of claims 1 to 7, wherein the magenta ink contains a betaine-based compound represented by the following formula (B): 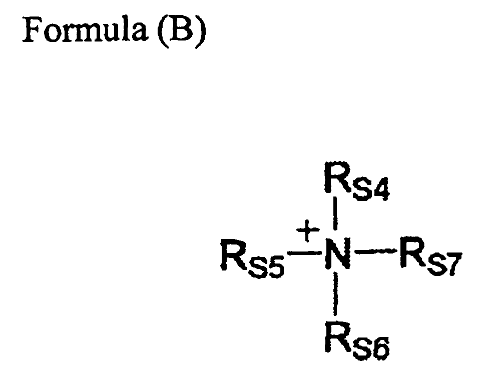 wherein, in formula (B), R_{S4}, R_{S5} and R_{S6} each independently represent an alkyl group, an aryl group or a heterocyclic group, and may be linked to each other to form a cyclic structure; and R_{S7} represents an alkyl group containing a carboxyl group, or an alkyl group containing a sulfo group.

9. A method for forming an inkjet image, comprising forming an image using the ink set according to any one of claims 1 to 8 on an inkjet recording medium having a support and, provided on or above the support, an ink receiving layer containing inorganic fine particles.

## Patentansprüche

1. Tintensatz, der eine gelbe Tinte, eine Magenta-Tinte und eine Cyan-Tinte umfasst, wobei die Magenta-Tinte und mindestens eine der gelben Tinte oder der Cyan-Tinte jeweils ein Antioxidans enthalten, das ein Schwefelatom im Molekül hat, und die Magenta-Tinte einen Farbstoff der folgenden Formel (M-1) enthält: 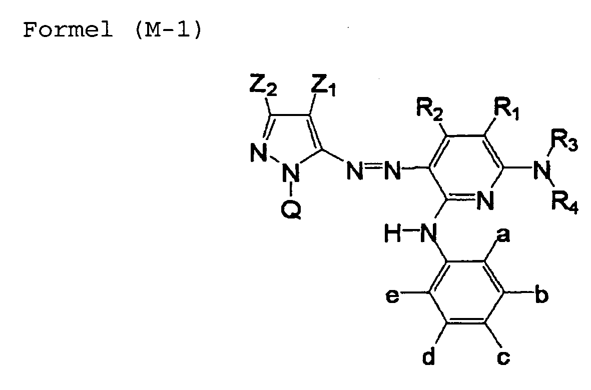 worin in der Formel (M-1), R₁ und R₂ jeweils unabhängig voneinander ein Wasserstoffatom, ein Halogenatom, eine aliphatische Gruppe, eine Arylgruppe, eine heterocyclische Gruppe, eine Cyanogruppe, eine Carboxylgruppe, eine Carbamoylgruppe, eine Alkoxycarbonylgruppe, eine Aryloxycarbonylgruppe, eine Acylgruppe, eine Hydroxygruppe, eine Alkoxygruppe, eine Aryloxygruppe, eine Silyloxygruppe, eine Acyloxygruppe, eine Carbamoyloxygruppe, eine heterocyclische Oxygruppe, eine Alkoxycarbonyloxygruppe, eine Aryloxycarbonyloxygruppe, eine Alkylaminogruppe, eine Arylaminogruppe, eine heterocyclische Aminogruppe, eine Acylaminogruppe, eine Ureidogruppe, eine
Sulfamoylaminogruppe, eine Alkoxycarbonylaminogruppe, eine Aryloxycarbonylaminogruppe, eine Alkyl- oder Arylsulfonylaminogruppe, eine Aryloxycarbonylaminogruppe, eine Nitrogruppe, eine Alkyl- oder Arylthiogruppe, eine Alkyl- oder Arylsulfonylgruppe, eine Alkyl- oder Arylsulfinylgruppe, eine Sulfamoylgruppe, eine Sulfogruppe oder eine heterocyclische Thiogruppe darstellen; R₃ und R₄ jeweils unabhängig voneinander ein Wasserstoffatom, eine aliphatische Gruppe, eine Arylgruppe, eine heterocyclische Gruppe, eine Acylgruppe, eine Alkoxycarbonylgruppe, eine Aryloxycarbonylgruppe, eine Carbamoylgruppe, eine Alkylsulfonylgruppe, eine Arylsulfonylgruppe oder eine Sulfamoylgruppe darstellen, oder R₁ und R₂ oder R₃ und R₄ miteinander verknüpft sein können, um einen 5- oder 6-gliedrigen Ring zu bilden; a und e jeweils unabhängig voneinander eine Alkylgruppe, eine Alkoxygruppe oder ein Halogenatom darstellen, aber wenn a und e beide Alkylgruppen sind, die Gesamtzahl der Kohlenstoffatome, die die Alkylgruppen aufbauen, 3 oder mehr ist, wobei diese Alkylgruppen weiter substituiert sein können; b, c und d jeweils unabhängig voneinander die gleichen Bedeutungen haben wie die für R₁ und R₂ definierten, und a und b oder e und d miteinander einen kondensierten Ring bilden können; Z₁ eine Elektronenziehende Gruppe darstellt, die eine Hammett-Substituentenkonstante σp mit einem Wert von 0,20 oder mehr hat; Z₂ ein Wasserstoffatom, eine aliphatische Gruppe, eine Arylgruppe oder eine heterocyclische Gruppe darstellt; und Q ein Wasserstoffatom, eine aliphatische Gruppe, eine Arylgruppe oder eine heterocyclische Gruppe darstellt, vorausgesetzt, dass die Formel (M-1) mindestens eine ionische hydrophile Gruppe aufweist.

2. Tintensatz gemäß Anspruch 1, worin sowohl die gelbe Tinte als auch die Cyan-Tinte ein Antioxidans, das ein Schwefelatom im Molekül hat, enthalten.

3. Tintensatz gemäß Anspruch 1 oder 2, der weiterhin eine schwarze Tinte umfasst.

4. Tintensatz gemäß irgendeinem der Ansprüche 1 bis 3, worin das Antioxidans eine Verbindung ist, die eine Thioetherstruktur oder eine Sulfoxidstruktur hat.

5. Tintensatz gemäß irgendeinem der Ansprüche 1 bis 4, worin das Antioxidans eine Verbindung der folgenden Formel (1a) ist:
R₁-(S-R₃)ₘ-S-R₂ Formel (1a)
worin in der Formel (1a) R₁ und R₂ jeweils unabhängig voneinander ein Wasserstoffatom, eine substituierte oder unsubstituierte Alkylgruppe, eine substituierte oder unsubstituierte Arylgruppe oder eine Gruppe, die eine substituierte oder unsubstituierte Alkyl- oder Arylgruppe enthält, darstellen, und R₁ und R₂ identisch oder unterschiedlich sein können und verknüpft sein können, um einen Ring zu bilden, vorausgesetzt, dass mindestens eines aus R₁ oder R₂ eine Alkylgruppe ist, die mit einer hydrophilen Gruppe oder einer Gruppe, die ein basisches Stickstoffatom enthält, substituiert ist, oder eine Gruppe, die eine solche Alkylgruppe enthält; R₃ eine Alkylengruppe ist, die substituiert sein kann und optional eine Alkylengruppe darstellt, die ein Sauerstoffatom hat; m eine ganze Zahl von 0 bis 10 darstellt, und wenn m 1 oder mehr ist, mindestens ein Schwefelatom, das an R₃ gebunden ist, eine Sulfoxidgruppe oder eine Sulfonylgruppe sein kann und R₁ und R₂ jeweils ein Rest eines Polymers sein können.

6. Tintensatz gemäß irgendeinem der Ansprüche 1 bis 4, worin das Antioxidans eine Verbindung ist, die eine Sulfoxidstruktur der folgenden Formel (Ib) aufweist:

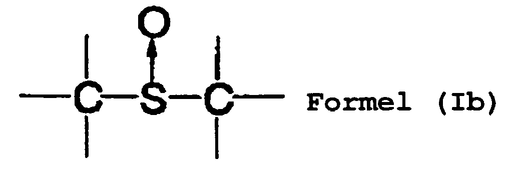

7. Tintensatz gemäß irgendeinem der Ansprüche 1 bis 6, worin das Antioxidans eine Verbindung der Formel (2) ist: 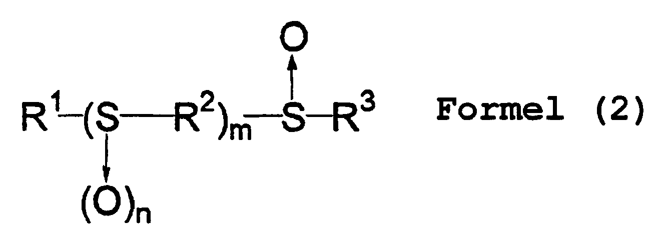 worin in der Formel (2) R¹ und R³ jeweils unabhängig voneinander eine substituierte oder unsubstituierte Alkylgruppe, eine substituierte oder unsubstituierte Arylgruppe, eine substituierte oder unsubstituierte heterocyclische Gruppe oder einen Polymerrest darstellen, der mindestens eine dieser Gruppen umfasst; R¹ und R³ gleich oder unterschiedlich voneinander sein können; R¹ und R³ miteinander kombiniert sein können, um einen Ring zu bilden; R² eine substituierte oder unsubstituierte bi- bis hexa-valente Verknüpfungsgruppe darstellt; R¹ und R² oder R² und R³ miteinander kombiniert sein können, um einen Ring zu bilden; m 0 oder eine ganze Zahl von 1 oder mehr ist; n 0 oder 1 ist; mindestens eines aus R¹, R² oder R³ eine Alkylgruppe, eine Arylgruppe, eine heterocyclische Gruppe oder einen Polymerrest darstellt, die jeweils mit einer hydrophilen Gruppe, ausgewählt aus der Gruppe bestehend aus einer substituierten oder unsubstituierten Aminogruppe, einer substituierten oder unsubstituierten Carbamoylgruppe, einer substituierten oder unsubstituierten Sulfamoylgruppe, substituiertem oder unsubstituiertem Ammonium, einer Hydroxylgruppe, einer Sulfonsäure, einer Carbonsäure, einer Phosphorsäure, einer Ethylenoxygruppe, und einem substituierten oder unsubstituierten Stickstoff-enthaltenden Heterozyklus substituiert sind.

8. Tintensatz gemäß irgendeinem der Ansprüche 1 bis 7, worin die Magenta-Tinte eine Verbindung auf Betainbasis, dargestellt durch die folgenden Formel (B), enthält 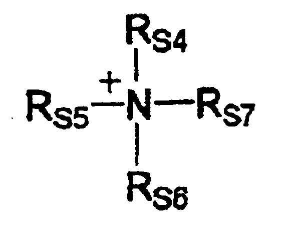 worin in der Formel (B) R_{S4}, R_{S5} und R_{S6} jeweils unabhängig voneinander eine Alkylgruppe, eine Arylgruppe oder eine heterocyclische Gruppe darstellen, und aneinander gebunden sein können, um eine cyclische Struktur zu bilden; und R_{S7} eine Alkylgruppe darstellt, die eine Carboxylgruppe enthält, oder eine Alkylgruppe darstellt, die eine Sulfogruppe enthält.

9. Verfahren zum Bilden eines Tintenstrahlbildes, das das Bilden eines Bildes unter Verwendung des Tintensatzes gemäß irgendeinem der Ansprüche 1 bis 8 auf ein Tintenstrahlaufzeichnungsmedium umfasst, das einen Träger aufweist, und auf oder über dem Träger, eine tintenaufnehmende Schicht, die anorganische Feinpartikel enthält.

## Revendications

1. Jeu d'encre comprenant une encre jaune, une encre magenta et une encre cyan, dans lequel l'encre magenta et au moins une de l'encre jaune ou de l'encre cyan contient chacune un antioxydant présentant un atome de soufre dans sa molécule, et l'encre magenta contient un colorant représenté par la formule (M-1) suivante : 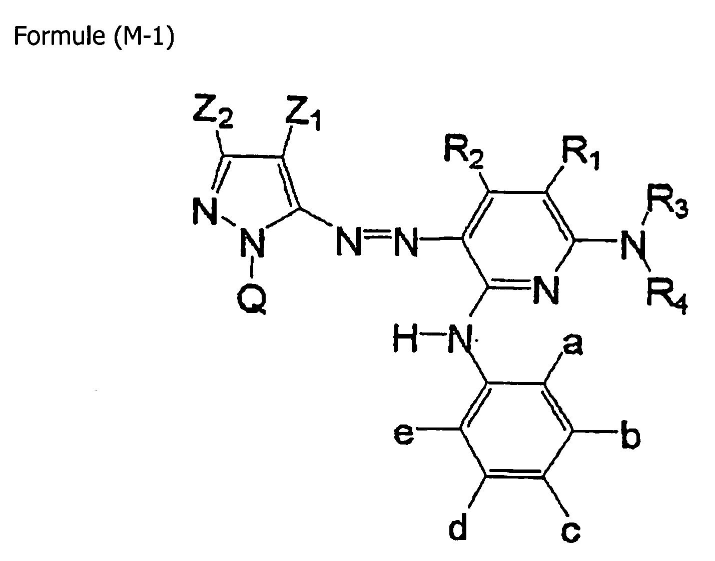 où, dans la formule (M-1), R₁ et R₂ représentent chacun indépendamment un atome d'hydrogène, un atome d'halogène, un groupe aliphatique, un groupe aryle, un groupe hétérocyclique, un groupe cyano, un groupe carboxyle, un groupe carbamoyle, un groupe alcoxycarbonyle, un groupe aryloxycarbonyle, un groupe acyle, un groupe hydroxy, un groupe alcoxy, un groupe acyloxy, un groupe silyloxy, un groupe acyloxy, un groupe carbamoyloxy, un groupe oxy hétérocyclique, un groupe alcoxycarbonyloxy, un groupe aryloxycarbonyloxy, un groupe alkylamino, un groupe arylamino, un groupe amino hétérocyclique, un groupe acylamino, un groupe uréido, un groupe sulfamoylamino, un groupe alcoxycarbonylamino, un groupe aryloxycarbonylamino, un groupe alkyl- ou arylsulfonylamino, un groupe aryloxycarbonylamino, un groupe nitro, un groupe alkyl ou arylthio, un groupe alkyl- ou arylsulfonyle, un groupe alkyl- ou arylsulfinyle, un groupe sulfamoyle, un groupe sulfo, ou un groupe thio hétérocyclique ; R₃ et R₄ représentent chacun indépendamment un atome d'hydrogène, un groupe aliphatique, un groupe aryle, un groupe hétérocyclique, un groupe acyle, un groupe alcoxycarbonyle, un groupe aryloxycarbonyle, un groupe carbamoyle, un groupe alkylsulfonyle, un groupe arylsulfonyle, ou un groupe sulfamoyle, et R₁ et R₂, ou R₃ et R₄ peuvent être liés pour former un cycle à 5 ou 6 éléments ; a et e représentent chacun indépendamment un groupe alkyle, un groupe alcoxy ou un atome d'halogène, mais si a et e sont tous deux des groupes alkyle, le nombre total d'atomes de carbone constituant les groupes alkyle est de 3 ou supérieur, et ces groupes alkyles peuvent être encore substitués ; b, c et d ont chacun indépendamment les mêmes significations que celles définies pour R₁ et R₂, et a et b, ou e et d peuvent former un cycle condensé l'un avec l'autre ; Z₁ représente un groupe soutirant des électrons présentant une valeur σp de constante de substituant de Hammet de 0,20 ou supérieure ; Z₂ représente un atome d'hydrogène, un groupe aliphatique, un groupe aryle ou un groupe hétérocyclique ; et Q représente un atome d'hydrogène, un groupe aliphatique, un groupe aryle, ou un groupe hétérocyclique, à condition que la formule (M-1) présente au moins un groupe hydrophile ionique.

2. Jeu d'encre selon la revendication 1, dans lequel à la fois l'encre jaune et l'encre cyan contiennent un antioxydant présentant un atome de soufre dans sa molécule.

3. Jeu d'encre selon la revendication 1 ou 2, comprenant de plus une encre noire.

4. Jeu d'encre selon l'une quelconque des revendications 1 à 3, dans lequel l'antioxydant est un composé présentant une structure thioéther ou une structure sulfoxyde.

5. Jeu d'encre selon l'une quelconque des revendications 1 à 4, dans lequel l'antioxydant est un composé représenté par la formule (Ia) suivante :
R₁-(S-R₃)ₘ-S-R₂ Formule (Ia)
dans laquelle, dans la formule (Ia), R₁ et R₂ représentent chacun indépendamment un atome d'hydrogène, un groupe alkyle substitué ou non substitué, un groupe aryle substitué ou non substitué, ou un groupe contenant un groupe alkyle ou aryle substitué ou non substitué, et R₁ et R₂ peuvent être identiques ou différents, et peuvent être liés pour former un cycle, à condition qu'au moins un de R₁ ou R₂ est un groupe alkyle substitué avec un groupe hydrophile ou un groupe basique contenant un atome d'azote, ou un groupe contenant un tel groupe alkyle; R₃ est un groupe alkylène qui peut être substitué, et représente éventuellement un groupe alkylène présentant un atome d'oxygène ; m représente un nombre entier de 0 à 10, et lorsque m est égal à 1 ou supérieur, le au moins un atome de soufre lié à R₃ peut être un groupe sulfoxyde ou un groupe sulfonyle ; et R₁ et R₂ peuvent chacun être un résidu d'un polymère.

6. Jeu d'encre selon l'une quelconque des revendications 1 à 4, dans lequel l'antioxydant est un composé présentant une structure sulfoxyde représentée par la formule (Ib) suivante :

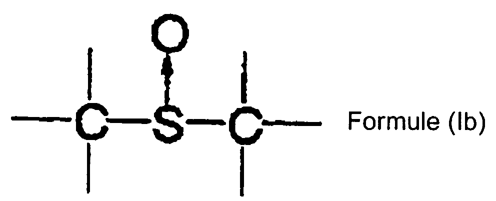

7. Encre selon l'une quelconque des revendications 1 à 6, dans laquelle l'antioxydant est un composé représenté par la formule (2) : 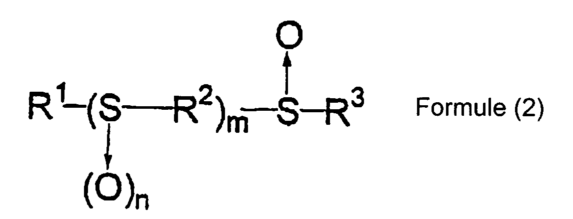 dans laquelle, dans la formule (2), R¹ et R³représentent chacun indépendamment un groupe alkyle substitué ou non substitué, un groupe aryle substitué ou non substitué, un groupe hétérocyclique substitué ou non substitué, ou un résidu polymère comprenant au moins un de ces groupes ; R¹ et R³ peuvent être identiques ou différents l'un de l'autre ; R¹et R³peuvent être combinés l'un à l'autre pour former un cycle ; R² représente un groupe de liaison bi- à hexa-valent substitué ou non substitué ; R¹ et R², ou R² et R³ peuvent être combinés l'un à l'autre pour former un cycle ; m est égal à 0 ou à un nombre entier de 1 ou supérieur ; n est égal à 0 ou à 1 ; au moins un de R¹, R², ou R³ représente un groupe alkyle, un groupe aryle, un groupe hétérocyclique, ou un résidu polymère dont chacun est substitué par un groupe hydrophile choisi dans le groupe constitué d'un groupe amino substitué ou non substitué, un groupe carbamoyle substitué ou non substitué, un groupe sulfamoyle substitué ou non substitué, un ammonium substitué ou non substitué, un groupe hydroxyle, un acide sulfonique, un acide carboxylique, un acide phosphorique, un groupe éthylèneoxy, et un hétérocycle contenant de l'azote substitué ou non substitué.

8. Jeu d'encre selon l'une quelconque des revendications 1 à 7, dans lequel l'encre magenta contient un composé à base de bétaïne représenté par la formule (B) suivante : 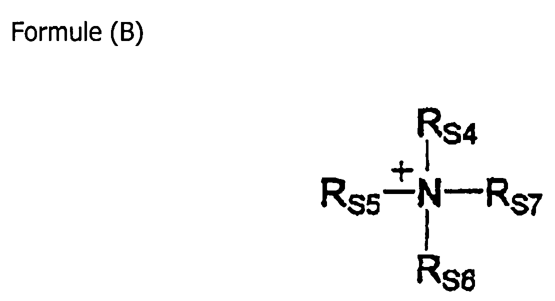 dans laquelle, dans la formule (B), R_{S4}, R_{S5} et R_{S6} représentent chacun indépendamment un groupe alkyle, un groupe aryle ou un groupe hétérocyclique, et peuvent être liés l'un à l'autre pour former une structure cyclique ; et R_{S7} représente un groupe alkyle contenant un groupe carboxyle, ou un groupe alkyle contenant un groupe sulfo.

9. Procédé de formation d'une image par jet d'encre, comprenant la formation d'une image utilisant le jeu d'encre selon l'une quelconque des revendications 1 à 8 sur un support d'enregistrement à jet d'encre présentant un support et, fournie sur ou au-dessus du support, une couche de réception d'encre contenant de fines particules inorganiques.
